# EUROPÄISCHE PATENTSCHRIFT

(11) **EP 3 756 961 B1**
(45) Veröffentlichungstag und Bekanntmachung des Hinweises auf die Patenterteilung: **06.12.2023**
(21) Anmeldenummer: 20177708.3
(22) Anmeldetag: 01.06.2020
(51) Int. Cl.: F16L 37/14, F16L 37/56, B60T 17/04, F16L 37/40, F16L 37/407

(54) **HYDRAULIKLEITUNGSKUPPLUNG, INSBESONDERE FÜR EINE HYDRAULISCHE BREMSE ODER KUPPLUNG LENKERGEFÜHRTER FAHRZEUGE**
HYDRAULIC LINE CLUTCH, IN PARTICULAR FOR A HYDRAULIC BRAKE OR CLUTCH OF HANDLE BARS-GUIDED VEHICLES
ACCOUPLEMENT DE CONDUITE HYDRAULIQUE, EN PARTICULIER POUR UN FREIN OU EMBRAYAGE HYDRAULIQUE D'UN VÉHICULE DIRIGÉ PAR GUIDON

(30) Priorität: 03.06.2019 DE 102019208066
(43) Veröffentlichungstag der Anmeldung: 30.12.2020
(73) Patentinhaber: Gustav Magenwirth GmbH & Co. KG, 72574 Bad Urach (DE)
(72) Erfinder: Ruopp, Michael, 89180 Berghülen (DE); Braunger, Kevin, 88471 Laupheim (DE); Wechsler, Axel, 71067 Sindelfingen (DE); Neutsch, Christian, 72764 Reutlingen (DE)
(74) Vertreter: Friese Goeden Patentanwälte PartGmbB

(56) Entgegenhaltungen:
- EP-A1- 1 514 758
- EP-B1- 2 431 647
- DE-A1- 2 617 620

## Beschreibung

Die Erfindung betrifft eine Hydraulikleitungskupplung für eine hydraulische Bremse oder Kupplung eines lenkergeführten Fahrzeugs gemäß dem Oberbegriff von Anspruch 1.

Aus der DE 10 2015 106 236 A1 ist eine Hydraulikleitungskupplung bekannt, die einen Innengewindeteil und einen Außengewindeteil aufweist, wobei der Innengewindeteil eine innere Buchse und der Außengewindeteil einen Steckeinsatz umfasst, der in die innere Buchse für die Herstellung einer Verbindung zwischen Innengewindeteil und Außengewindeteil gesteckt werden kann. Bei der Ausbildung der Verbindung des Außengewindeteils und des Innengewindeteils werden das Außengewindeteil und das Innengewindeteil direkt miteinander verbunden. Der in dem Innengewindeteil ausgebildete Hydraulikleitungsabschnitt schließt sich damit unmittelbar an den in dem Außengewindeteil ausgebildeten Hydraulikleitungsabschnitt an. An der Innenwand der inneren Buchse ist ein Dichtring vorgesehen, um den Steckeinsatz abzudichten, damit bei der Verbindung des Außengewindeteils und des Innengewindeteils ein Ölaustritt vermieden wird. Der Dichtring dichtet in radialer Richtung ab. In dem Innengewindeteil ist ein Ventil vorgesehen, das bei der Verbindung des Außengewindeteils und des Innengewindeteils geöffnet wird. Das Ventil weist eine Dichtung auf, die in radialer Richtung abdichtet.

Aus der CN 201 330 906 Y ist eine Hydraulikleitungskupplung bekannt, bei der zwei Hydraulikleitungsabschnitte miteinander durch Einschieben eines Hydraulikleitungsteils in ein anderes Hydraulikleitungsteil direkt miteinander verbunden werden. Der in dem einen Hydraulikleitungsteil ausgebildete Hydraulikleitungsabschnitt schließt sich damit unmittelbar an den in dem anderen Hydraulikleitungsteil ausgebildeten Hydraulikleitungsabschnitt an. Bei der Verbindung bildet der eine Hydraulikleitungsteil mit einer ersten Dichtung eine Abdichtung gegenüber dem anderen Hydraulikleitungsteil aus. Außerdem wird bei der Verbindung ein in einen der beiden Hydraulikleitungsteile angeordnetes Ventil geöffnet, das eine andere Dichtung aufweist, als die Dichtung, mit der die Abdichtung zwischen den Hydraulikleitungsteile ausgebildet wird.

Aus der DE 2617620 A1 bzw. der EP 2 43 1 647 B1 ist eine Hydraulikleitungskupplung gemäß dem Oberbegriff von Anspruch 1 bekannt.

Die bekannten Hydraulikleitungskupplungen haben den Nachteil, dass beim Kuppeln Luft eindringen bzw. Hydraulikflüssigkeit austreten kann.

Der Erfindung liegt daher die Aufgabe zugrunde, eine Hydraulikleitungskupplung anzugeben, die einen einfachen Aufbau aufweist, leicht montiert werden kann und den Verlust von Hydraulikfluid beim Kuppeln bzw. das Einbringen von Luft minimiert.

Die Aufgabe wird erfindungsgemäß durch eine Hydraulikleitungskupplung gemäß den Merkmalen von Anspruch 1 gelöst. Vorteilhafte Weiterbildungen der Erfindung finden sich in den Unteransprüchen.

Gemäß verschiedener Weiterbildungen der Erfindung wird eine Hydraulikleitungskupplung angegeben, insbesondere für eine hydraulische Bremse oder Kupplung lenkergeführter Fahrzeuge, die einen Leitungsstutzen mit einem Fortsatz zum Anschluss einer Hydraulikleitung und ein Gehäuse mit einer Kupplungsöffnung aufweist, in die der Leitungsstutzen zum Kuppeln der Hydaulikleitung an das Gehäuse anordbar ist, wobei der Leitungsstutzen einen mit der Hydraulikleitung verbundenen Durchgang umfasst, wobei in dem Gehäuse eine Ventileinrichtung angeordnet ist, die derart ausgebildet und angeordnet ist, dass die Ventileinrichtung den Anschluss für den Leitungsstutzen verschließt, wenn der Leitungsstutzen nicht in der Kupplungsöffnung angeordnet ist, wobei die Hydraulikleitungskupplung eine Dichtung aufweist, mit welcher Dichtung die Ventileinrichtung den Anschluss für den Leitungsstutzen verschließt, wenn der Leitungsstutzen nicht in der Kupplungsöffnung angeordnet ist, und mit welcher Dichtung der Leitungsstutzen den Durchgang gegenüber der Umgebung abdichtet, wenn der Leitungsstutzen in der Kupplungsöffnung angeordnet ist.

Diese Weiterbildungen haben den Vorteil, dass der mögliche Lufteintrag beim Verbinden der Hydraulikleitungskupplung äußerst gering ist, weil die Dichtung eine Doppelfunktion hat, d.h. dass die Dichtung sowohl als Ventildichtung als auch als Dichtung zwischen den verkuppelten Teilen der Hydraulikleitungskupplung wirkt. Erfindungsgemäß kann die Dichtung derart ausgebildet sein, dass die Dichtung in einer der beiden Funktionen vornehmlich bzw. im Wesentlichen in einer ersten Richtung abdichtet und in der anderen der beiden Funktionen vornehmlich bzw. im Wesentlichen in Richtungen abdichtet, die vornehmlich bzw. im Wesentlichen senkrecht zu der ersten Richtung verlaufen.

Erfindungsgemäß kann die Dichtung derart ausgebildet sein, dass die Dichtung in einer der beiden Funktionen vornehmlich bzw. im Wesentlichen in axialer Richtung abdichtet und in der anderen der beiden Funktionen vornehmlich bzw. im Wesentlichen in radialer Richtung abdichtet. Die axiale Richtung kann dabei die Richtung sein, in der die Hydraulikleitungskupplung zusammengefügt wird. Bei einer O-Ring-Dichtung ist die axiale Richtung die Richtung, die senkrecht zu der Ringebene des O-Rings ausgerichtet ist. Bei einer O-Ring-Dichtung ist die radiale Richtung eine Richtung entlang eines Radius der O-Ring-Dichtung.

Diese Weiterbildungen der Erfindung haben den Vorteil, dass durch die unterschiedlichen Richtungen bei der Abdichtung in Kombination mit der Verwendung derselben Dichtung für die beiden Funktionen ein sehr schneller Wechsel der Dichtungsfunktionen erreicht werden kann, derart dass der für den Wechsel der Dichtungsfunktionen zu überbrückende Weg sehr kurz gestaltet werden kann, so dass der mögliche Lufteintrag sehr gering ist. Das hat den Vorteil, dass die Notwendigkeit für eine Entlüftung nach dem Verbinden der Hydraulikleitungskupplung gegebenenfalls vermieden werden kann.

Diese Weiterbildungen der Erfindung haben den weiteren Vorteil, dass die Hydraulikleitungskupplung sehr kurzbauend ausgebildet werden kann.

Die Hydraulikleitungskupplung der Erfindung weist einen Leitungsstutzen mit einem Fortsatz zum Anschluss einer Hydraulikleitung und ein Gehäuse auf, in dem der Leitungsstutzen anordbar ist, der einen mit der Hydraulikleitung verbundenen Durchgang umfasst, wobei in dem Gehäuse ein Druckraumgehäuse angeordnet ist, dessen Druckraum mit dem Durchgang des ersten Leitungsstutzens verbunden ist.

Die Erfindung hat den Vorteil, dass das Druckraumgehäuse der Hydraulikleitungskupplung infolge seiner Anordnung in dem Gehäuse der Hydraulikleitungskupplung auch aus Materialien ausgebildet werden kann, die weniger Druck aushalten können, weil ein in dem Druckraumgehäuse herrschender Druck durch das Gehäuse aufgenommen werden kann, in dem das Druckraumgehäuse angeordnet ist. Beispielsweise ist es bei diesen Ausführungen der Erfindung möglich, das Druckraumgehäuse aus Kunststoff auszubilden. Beispielsweise kann das Druckraumgehäuse als Spritzgussteil ausgebildet sein. Diese Ausführungen der Erfindung haben den Vorteil, dass für die Gestaltung des Druckraumgehäuses weniger konstruktive Beschränkungen bestehen.

Alternativ oder zusätzlich wird eine Hydraulikleitungskupplung angegeben, die insbesondere derart bzw. gemäß einer der vorherigen oder anderen Ausführungen der Erfindung ausgebildet sein kann, insbesondere für eine hydraulische Bremse oder Kupplung lenkergeführter Fahrzeuge, die ein Gehäuse mit einer Aufnahme aufweist, in der ein Leitungsstutzen für einen Anschluss einer Hydraulikleitung und der Leitungsstutzen anordbar ist, wobei in dem Gehäuse ein Ventilgehäuse mit einer darin angeordneten ein Ventilschließglied umfassende Ventileinrichtung angeordnet ist, wobei das Ventilschließglied derart angeordnet und ausgebildet ist, dass das Ventilschließglied das Gehäuse mit dem Durchgang des ersten Leitungsstutzens verbindet.

Alternativ oder zusätzlich wird eine Hydraulikleitungskupplung angegeben, die insbesondere derart bzw. gemäß einer der vorherigen oder anderen Ausführungen der Erfindung ausgebildet sein kann, insbesondere für eine hydraulische Bremse oder Kupplung lenkergeführter Fahrzeuge, die ein Gehäuse mit einer Aufnahme aufweist, in der ein Leitungsstutzen für einen Anschluss einer Hydraulikleitung und der Leitungsstutzen anordbar ist, wobei der Leitungsstutzen in dem Gehäuse mit einer Arretiereinrichtung gesichert wird, die eine Presshülse aufweist. Erfindungsgemäß kann die Presshülse einen Eingriffabschnitt aufweisen, der in eine Aufnahme eingreift, die in dem Leitungsstutzen vorgesehen ist. Dabei kann durch den Eingriff ein Formschluss zwischen dem Eingriffabschnitt und der Aufnahme bzw. zwischen der Presshülse und dem Leitungsstutzen ausgebildet werden.

Erfindungsgemäß kann die Presshülse einen Einrastabschnitt aufweisen, der in eine Aufnahme einrasten kann, die in dem Gehäuse vorgesehen ist. Dabei kann durch das Einrasten ein Formschluss zwischen dem Einrastabschnitt und der Aufnahme bzw. zwischen der Presshülse und dem Gehäuse ausgebildet werden.

Alternativ oder zusätzlich wird eine Hydraulikleitungskupplung angegeben, die insbesondere derart bzw. gemäß einer der vorherigen oder anderen Ausführungen der Erfindung ausgebildet sein kann, insbesondere für eine hydraulische Bremse oder Kupplung lenkergeführter Fahrzeuge, die ein Gehäuse mit einer Aufnahme aufweist, in der ein Leitungsstutzen für einen Anschluss einer Hydraulikleitung und der Leitungsstutzen anordbar ist, wobei der Leitungsstutzen in dem Gehäuse mit einer Arretiereinrichtung gesichert wird, die eine Drehkappe aufweist.

Erfindungsgemäß kann die Drehkappe derart angeordnet und ausgebildet sein, dass durch Drehen der Drehkappe Verriegelungsglieder von einer entriegelten Stellung in eine verriegelte Stellung und von einer verriegelten Stellung in eine entriegelte Stellung bewegbar sind. Dabei können die Verriegelungsglieder Kugeln sein, die entlang von Konturen bzw. Bahnen in die entriegelte bzw. verrieglte Stellungen geführt werden.

Erfindungsgemäß kann die Hydraulikleitungskupplung eine Arretiereinrichtung aufweisen, die den Leitungsstutzen in dem Gehäuse sichert.

Erfindungsgemäß kann die Arretiereinrichtung eine Sicherungseinrichtung aufweisen, die derart ausgebildet und angeordnet ist, dass die Arretiereinrichtung gegen ein unbeabsichtiges Lösen bzw. Entfernen gesichert ist.

Erfindungsgemäß kann die Arretiereinrichtung mit einem Formschluss gegenüber der Leitungsstutzen und mit einem Formschluss gegenüber dem Gehäuse gesichert sein, derart, dass über die Arretiereinrichtung ein mittelbarer Formschluss zwischen dem Leitungsstutzen und dem Gehäuse geschaffen wird.

Erfindungsgemäß kann die Ventileinrichtung in dem Druckraumgehäuse angeordnet sein.

Erfindungsgemäß kann die Ventileinrichtung in dem Ventilraumgehäuse angeordnet sein.

Erfindungsgemäß kann das Druckraumgehäuse als Ventilraumgehäuse ausgebildet sein.

Erfindungsgemäß kann das Ventilraumgehäuse als Druckraumgehäuse ausgebildet sein.

Erfindungsgemäß kann die Dichtung derart angeordnet und ausgebildet sein, dass die Dichtung in radialer Richtung zwischen dem Druckraumgehäuse und dem in die Anschlussöffnung eingesetzten Leitungsstutzen abdichtet.

Erfindungsgemäß kann die Dichtung derart angeordnet und ausgebildet sein, dass die Dichtung in axialer Richtung durch eine Stirnseite des Druckraumgehäuses bzw. des Ventilraumgehäuses mit Kraft beaufschlagt wird.

Erfindungsgemäß kann die Hydraulikleitungskupplung einen weiteren Leitungsstutzen für den Anschluss einer weiteren Hydraulikleitung aufweisen.

Erfindungsgemäß kann das Gehäuse einen Anschlussbereich zum Anschluss an eine Hydraulikkomponente aufweisen.

Erfindungsgemäß kann die Dichtung ein O-Ring sein.

Erfindungsgemäß kann die Arretiereinrichtung ein gebogenes Bein und ein gerades Bein umfassen.

Erfindungsgemäß kann die Arretiereinrichtung zwei Beine umfassen. Dabei kann ein Bein oder können beide Beine einen Aufnahmeabschnitt für eine Aufnahme des Leitungsstutzens umfassen. Zusätzlich oder alternativ kann ein

Bein oder können beide Beine einen Sicherungsabschnitt zur Sicherung der Arretiereinrichtung an dem Leitungsstutzens umfassen.

Erfindungsgemäß kann das Druckraumgehäuse einen Überströmkanal oder mehrere Überströmkanäle umfassen. Der bzw. die Überströmkanäle können dabei auf der Innenseite des Druckraumgehäuses ausgebildet sein.

Erfindungsgemäß kann das Druckraumgehäuse einen Kanal oder mehrere Kanäle aufweisen, der bzw. die auf der Aussenseite des Druckraumgehäuses ausgebildet ist bzw. sind. Der bzw. die Kanäle können umlaufend und/oder in axialer Richtung des Druckraumgehäuses ausgebildet sein.

Erfindungsgemäß kann das Ventilraumgehäuse einen Steg oder mehrere Stege aufweisen, die auf seiner Aussenseite ausgebildet sind.

Erfindungsgemäß kann der weitere Leitungsstutzen mit einer Verriegelungseinrichtung im Gehäuse geichert sein. Dabei kann die Verriegelungseinrichtung auf zwei bezogen auf die Hydraulikleitung gegenüberliegenden Seiten angeordnet und ausgebildet sein. Alternativ kann die Verriegelungseinrichtung nur auf einer Seite ausgebildet sein, inbesondere wenn das Material des Gehäuses höhere Kräfte aufnehmen kann.

Erfindungsgemäß kann das Gehäuse aus Kunststoff ausgebildet sein.

Erfindungsgemäß kann das Gehäuse aus einem faserverstärkten Kunststoff ausgebildet sein.

Erfindungsgemäß kann das Gehäuse aus einem Verbundmaterial ausgebildet sein.

Erfindungsgemäß kann das Gehäuse aus Metall ausgebildet sein.

Erfindungsgemäß kann die Hydraulikkomponente eine Gebervorrichtung sein. Dabei kann die Gebervorrichtung mit einem Hebel betätigbar sein und einen Geberzylinder mit umfassen. Dabei kann die Gebervorrichgung einen Ausgleichsbehälter umfassen. Alternativ kann die Gebervorrichtung eine Gebervorrichtung eines geschlossenen Systems ohne Ausgleichsbehälter sein. Die Gebervorrichtung kann Teil einer hydraulischen Bremse oder Kupplung sein, insbeosndere einer Scheibenbremse oder Felgenbremse.

Erfindungsgemäß kann der Anschlussbereich eine Verschraubung bzw. ein Aussengewinde zur Verbindung mit der Gebervorrichtung umfassen.

Erfindungsgemäß kann die Hydraulikomponente eine Nehmervorrichtung sein. Dabei kann die Nehmervorrichtung eine Bremszange und/oder ein Nehmerzylinderpaar umfassen.

Erfindungsgemäß kann der Anschlussbereich eine Ringkopfverbindung umfassen, der beispielsweise mit einer Hohlschraube und/oder einer mit einer Aussenverzahnung versehenen Schraube mit der Hydraulikkomponente verbindbar ist. Die Leitung in der Hohlschraube bzw. die Aussenverzahnung kann dabei als Hydraulikleitungsverbindung ausgebildet sein.

Erfindungsgemäß kann die Hydraulikleitungskupplung derart ausgebildet sein, dass sie zwei Hydraulikleitungspaare verkuppeln kann, beispielsweise ein Hydraulikleitungspaar für eine Vorderradbremse und ein Hydraulikleitungspaar für eine Hinterradbremse.

Erfindungsgemäß kann die Hydraulikleitungskupplung derart ausgebildet sein, dass sie in einem Lenkerrohr angeordnet und/oder montiert werden kann.

Erfindungsgemäß kann die Hydraulikleitungskupplung derart ausgebildet sein, dass sie in einem Lenkrad angeordnet und/oder montiert werden kann. Dabei können die Hydraulikleitungen in dem Lenkrad verlegt und über beispielsweise Speichen zur Mitte des Lenkrads und von dort durch die Welle aus dem Lenkrad herausgeführt werden, um die das Lenkrad drehbar gelagert ist.

Erfindungsgemäß kann die Hydraulikleitungskupplung derart ausgebildet sein, dass sie in einem Lenkervorbau angeordnet und/oder montiert werden kann.

Erfindungsgemäß kann die Hydraulikleitungskupplung derart ausgebildet sein, dass sie in einem Lenkerschaft angeordnet und/oder montiert werden kann.

Erfindungsgemäß kann die Hydraulikleitungskupplung derart ausgebildet sein, dass sie in einer Gabelbrücke angeordnet und/oder montiert werden kann.

Erfindungsgemäß kann die Hydraulikleitungskupplung derart ausgebildet sein, dass sie in einem Rahmenteil angeordnet und/oder montiert werden kann.

Erfindungsgemäß wird auch eine hydraulische Bremse bzw. hydraulische Kupplung bzw. hydraulische Fahrradbremse angegeben, wobei die hydraulische Bremse bzw. hydraulische Kupplung bzw. hydraulische Fahrradbremse eine erfindungsgemäße Hydraulikleitungskupplung aufweist.

Erfindungsgemäß kann die hydraulische Fahrradbremse eine Scheibenbremse bzw. eine Felgenbremse sein.

Die Erfindung wird im Folgenden anhand der in den Figuren gezeigten Ausführungsbeispiele beschrieben. Dabei werden folgende Bezugszeichen verwendet:
- 1: Hydraulikleitungskupplung
- 2: Gebervorrichtung
- 3: Lenkervorbau
- 4: Lenkerschaftrohr
- 5: Lenkerrohr
- 6: Durchgang (z.B. für Kabel)
- 7: Gabelbrücke
- 8: Gabelbein
- 9: Schaft
- 10: Hydraulikleitung
- 11: Hülse
- 12: Schutzkappe (z.B. Tülle)
- 20: Leitungsstutzen
- 21: Durchgang
- 22: Fortsatz
- 23: Befestigungsabschnitt
- 24: Aufnahme
- 25: Übergangsbereich
- 26: Dichtungsbereich
- 30: Gehäuse
- 31: Gehäuseabschnitt
- 32: Gehäuseabschnitt
- 33: Aussparung
- 34: Kontrollöffnung
- 35: Dichtungsbereich
- 36: Aussengewinde
- 37: Durchgang
- 38: Durchgang
- 39: Aufnahme
- 40: Druckraumgehäuse
- 41: Dichtung
- 42: Dichtung
- 43: Dichtungsbereich
- 44: Druckraum
- 45: Überströmkanal
- 46: Kanal (umlaufend)
- 47: Kanal (axial)
- 50: Leitungsstutzen
- 51: Durchgang
- 52: Fortsatz
- 53: Befestigungsabschnitt
- 54: Aufnahme
- 56: Dichtungsbereich
- 57: Federaufnahme
- 60: Ventileinrichtung
- 61: Schließglied
- 62: Schließfeder
- 65: Überströmkanal
- 70: Arretiereinrichtung
- 71: Bein
- 72: Bein
- 73: Aufnahmeabschnitt
- 74: Aufnahmeabschnitt
- 75: Sicherungsabschnitt
- 76: Sicherungsabschnitt
- 77: Erweiterungsabschnitt
- 78: Erweiterungsabschnitt
- 79: Verbindungsabschnitt
- 80: Verriegelungseinrichtung
- 91: Sicherungseinrichtung
- 92: Sicherungseinrichtung
- 111: Presshülse
- 120: Anschlusseinrichtung
- 121: Durchgang
- 122: Ringkopf
- 124: Aufnahme
- 125: Übergangsbereich
- 126: Dichtungsbereich
- 127: Steg
- 130: Gehäuse
- 131: Durchgang
- 132: Ringkopf
- 140: Ventilraumgehäuse
- 141: Dichtung
- 142: Dichtung
- 143: Anlagebereich
- 144: Ventilraum
- 147: Steg
- 148: Durchgang
- 149: Durchgang
- 150: Winkelleitungsverbinder
- 151: Winkelabschnitt
- 152: Leitungsstutzenaufnahme
- 170: Arretiereinrichtung
- 171: Bein
- 172: Bein
- 175: Sicherungsabschnitt
- 176: Sicherungsabschnitt
- 179: Verbindungsabschnitt
- 180: Einsatz
- 190: Verschlusseinrichtung
- 191: Sperreinrichtung
- 192: Aufnahme
- 193: Durchgang
- 194: Eingriffabschnitt
- 195: Verschlusseinrichtung
- 196: Wulst
- 198: Flansch
- 199: Aufnahme
- 211: Schraubhülse
- 213: Befestigungsabschnitt
- 220: Leitungsstutzen
- 221: Durchgang
- 222: Fortsatz
- 223: Befestigungsabschnitt
- 224: Aufnahme
- 225: Übergangsbereich
- 226: Dichtungsbereich
- 230: Gehäuse
- 231: Klemmeinrichtung
- 240: Ventilraumgehäuse
- 241: Dichtung
- 242: Dichtung
- 243: Anlagebereich
- 244: Ventilraum
- 245: Überströmkanal
- 246: Abflachung bzw. Phase
- 247: Steg
- 248: Durchgang
- 270: Arretiereinrichtung
- 271: Bein
- 272: Bein
- 273: Aufnahmeabschnitt
- 274: Aufnahmeabschnitt
- 275: Sicherungsabschnitt
- 276: Sicherungsabschnitt
- 279: Verbindungsabschnitt
- 280: Klemmeinrichtung
- 281: Sicherungseinrichtung
- 282: Spanneinrichtung
- 283: Gewindebohrung
- 284: Einstelleinrichtung
- 285: Spannschraube (für das Lagerspiel)
- 286: Gewindeeinrichtung
- 287: Gewindeeinrichtung
- 290: Verschlusseinrichtung
- 291: Fortsatz
- 292: Flansch
- 293: Durchgang
- 294: Anschlag
- 304: Aufnahme
- 320: Leitungsstutzen
- 321: Durchgang
- 322: Fortsatz
- 323: Befestigungsabschnitt
- 324: Aufnahme
- 325: Übergangsbereich
- 326: Dichtungsbereich
- 327: Aussparung
- 330: Gehäuse
- 331: Verschlussabschnitt
- 332: Verschlussabschnitt
- 340: Ventilraumgehäuse
- 341: Dichtung
- 342: Dichtung
- 343: Anlagebereich
- 344: Ventilraum
- 346: Abflachung bzw. Phase
- 347: Steg
- 348: Durchgang
- 370: Arretiereinrichtung
- 371: Drehkappe
- 372: Verrieglungsglied (z.B. Kugel)
- 380: Klemmeinrichtung
- 381: Durchgang
- 382: Klemmschrauben
- 383: Federeinrichtung
- 411: Pressabschnitt
- 440: Druckraumgehäuse
- 441: Dichtung
- 442: Dichtung
- 443: Dichtungsbereich
- 444: Druckraum
- 470: Arretiereinrichtung
- 471: Stift
- 472: Aufnahme
- 480: Flansch
- 485: Spannschraube
- 540: Druckraumgehäuse
- 541: Dichtung
- 542: Dichtung
- 544: Druckraum
- 570: Arretierinrichtung
- 571: Presshülse
- 572: Eingreifeinrichtung
- 573: Einrasteinrichtung
- 611: Durchgang (z.B. in dem Ventilschließglied)
- 640: Druckraumgehäuse
- 641: Dichtung
- 642: Dichtung
- 644: Druckraum
- 740: Druckraumgehäuse
- 741: Dichtung
- 742: Dichtung
- 744: Druckraum
- 820: Leitungsstutzen
- 821: Durchgang
- 822: Fortsatz
- 823: Befestigungsabschnitt
- 826: Dichtungsbereich

Sofern nicht anders beschrieben, sollen in der vorliegenden Erfindung sich um den Wert 100 bzw. eines Vielfachen von 100 unterscheidende Bezugszeichen die gleichen bzw. entsprechenden Merkmale bzw. Komponenten beschreiben, so dass auf die jeweils entsprechenden Beschreibungen verwiesen werden kann. Beispielsweise werden auf diese Weise mit den Bezugszeichen 20, 120, 220, 320 etc. Leitungsstutzen bezeichnet und beschrieben und dargestellt.

### Kurzbeschreibung der Figuren:

- Fig. 1: zeigt eine Schnittansicht durch eine Hydraulikleitungskupplung gemäß einer Ausführung der
- Fig. 2: Erfindung entlang der Linien I-I von Fig. 2. zeigt eine Aufsicht der Hydraulikleitungskupplung von Fig. 1.
- Fig. 3: zeigt eine der Fig. 2 entsprechende Aufsicht der Hydraulikleitungskupplung von Fig. 1 mit Sicherungseinrichtungen.
- Fig. 4: zeigt eine der Perspektive von Fig. 2 entsprechende Aufsicht der Arretiereinrichtung der Hydraulikleitungskupplung von Fig. 1.
- Fig. 5: zeigt eine Ansicht der Arretiereinrichtung von Fig. 4, gesehen von der bezogen auf Fig. 4 linken Seite.
- Fig. 6: zeigt eine Ansicht der Arretiereinrichtung von Fig. 4, gesehen von der bezogen auf Fig. 5 linken Seite.
- Fig. 7: zeigt eine Ansicht der Arretiereinrichtung von Fig. 4, gesehen von der bezogen auf Fig. 6 linken Seite.
- Fig. 8: zeigt eine Ansicht der Arretiereinrichtung von Fig. 4, gesehen von der bezogen auf Fig. 4 unteren Seite.
- Fig. 9: zeigt eine der Fig. 1 entsprechende Schnittansicht durch eine nicht erfindungsgemäße Hydraulikleitungskupplung entlang der Linien X-X von Fig. 10.
- Fig. 10: zeigt eine Aufsicht der Hydraulikleitungskupplung von Fig. 9.
- Fig. 11: zeigt eine der Fig. 10 entsprechende Aufsicht der Hydraulikleitungskupplung von Fig. 9 mit Sicherungseinrichtungen.
- Fig. 12: zeigt eine Schnittansicht der Hydraulikleitungskupplung von Fig. 9 entlang der Linien XII-XII von Fig. 10.
- Fig. 13: zeigt eine der Perspektive von Fig. 12 entsprechende Ansicht der Arretiereinrichtung der Hydraulikleitungskupplung von Fig. 9.
- Fig. 14: zeigt eine Ansicht der Hydraulikleitungskupplung von Fig. 9 von der in Fig. 9 linken Seite.
- Fig. 15: zeigt eine den Figuren 1 und 9 entsprechende Schnittansicht durch eine Hydraulikleitungskupplung gemäß einer Ausführung der Erfindung entlang der Linien XV-XV von Fig. 16.
- Fig. 16: zeigt eine Aufsicht der Hydraulikleitungskupplung von Fig. 15.
- Fig. 17: zeigt eine der Fig. 16 entsprechende Aufsicht der Hydraulikleitungskupplung von Fig. 11 mit einer Sicherungseinrichtung.
- Fig. 18: zeigt eine den Figuren 1, 9 und 15 entsprechende Schnittansicht durch eine Hydraulikleitungskupplung gemäß einer Ausführung der Erfindung entlang der Linien XVIII-XVIII von Fig. 20.
- Fig. 19: zeigt eine Aufsicht der Hydraulikleitungskupplung von Fig. 18.
- Fig. 20: zeigt eine Ansicht der Hydraulikleitungskupplung von Fig. 18 von der in Fig. 18 rechten Seite.
- Fig. 21: zeigt eine der Perspektive von Fig. 20 entsprechende Ansicht der Arretiereinrichtung der Hydraulikleitungskupplung von Fig. 18.
- Fig. 22: zeigt eine Ansicht der Arretiereinrichtung von Fig. 21, gesehen von der bezogen auf Fig. 21 linken Seite.
- Fig. 23: zeigt eine den Figuren 1, 9, 15 und 18 entsprechende Schnittansicht durch eine Hydraulikleitungskupplung gemäß einer Ausführung der Erfindung.
- Fig. 24: zeigt eine der Fig. 20 entsprechende Aufsicht der Hydraulikleitungskupplung von Fig. 23.
- Fig. 25: zeigt eine den Figuren 1, 9, 15, 18 und 23 entsprechende Schnittansicht durch eine Hydraulikleitungskupplung gemäß einer Ausführung der Erfindung.
- Fig. 26: zeigt eine der Fig. 24 entsprechende Aufsicht der Hydraulikleitungskupplung von Fig. 25.
- Fig. 27: zeigt eine der Fig. 25 entsprechende Ansicht vor dem Einsetzen des Leitungsstutzens, der eine Verschlusseinrichtung aufweist.
- Fig. 28: zeigt eine der Fig. 26 entsprechende Aufsicht der Hydraulikleitungskupplung von Fig. 25 in dem Zustand von Fig. 27.
- Fig. 29: zeigt eine den Figuren 1, 9, 15, 18, 23 und 25 entsprechende Schnittansicht durch eine Hydraulikleitungskupplung gemäß einer Ausführung der Erfindung.
- Fig. 30: zeigt eine der Fig. 26 entsprechende Aufsicht der Hydraulikleitungskupplung von Fig. 29.
- Fig. 31: zeigt eine Ansicht der Hydraulikleitungskupplung von Fig. 29 von der in Fig. 29 rechten Seite.
- Fig. 32: zeigt eine den Figuren 1, 9, 15, 18, 23, 25 und 29 entsprechende Schnittansicht durch eine Hydraulikleitungskupplung gemäß einer Ausführung der Erfindung.
- Fig. 33: zeigt eine Ansicht des Leitungsstutzens der Ausführung von Fig. 32.
- Fig. 34: zeigt eine Ansicht der Hydraulikleitungskupplung von Fig. 32 von der in Fig. 32 rechten Seite.
- Fig. 35: zeigt eine Ansicht der Arretiereinrichtung der Hydraulikleitungskupplung von Fig. 32.
- Fig. 36: zeigt eine Schnittansicht einer Hydraulikgebervorrichtung mit einer Hydraulikleitungskupplung gemäß einer Ausführung der Erfindung.
- Fig. 37: zeigt eine Seitenansicht der Hydraulikgebervorrichtung von Fig. 36.
- Fig. 38: zeigt eine Schnittansicht einer Hydraulikleitungskupplung gemäß einer Ausführung der Erfindung entlang der Linien XXXVIII-XXXVIII von Fig. 40.
- Fig. 39: zeigt eine Aufsicht der Hydraulikleitungskupplung von Fig. 38.
- Fig. 40: zeigt eine Schnittansicht der Hydraulikleitungskupplung von Fig. 38 entlang der Linien XL-XL von Fig. 39.
- Fig. 41: zeigt eine Seitenansicht einer Hydraulikleitungskupplung gemäß einer Ausführung der Erfindung.
- Fig. 42: zeigt eine Seitenansicht einer Hydraulikleitungskupplung gemäß einer Ausführung der Erfindung.
- Fig. 43: zeigt eine Aufsicht der Hydraulikleitungskupplung von Fig. 42.
- Fig. 44: zeigt eine Ansicht der Hydraulikleitungskupplung von Fig. 42 von unten.
- Fig. 45: zeigt eine Ansicht der Hydraulikleitungskupplung von Fig. 42 von der in Fig. 42 linken Seite.
- Fig. 46: zeigt eine Schnittansicht einer Hydraulikleitungskupplung gemäß einer Ausführung der Erfindung entlang der Linien XLVI- XLVI von Fig. 47.
- Fig. 47: zeigt eine Seitenansicht der Hydraulikleitungskupplung von Fig. 46.
- Fig. 48: zeigt eine Aufsicht der Hydraulikleitungskupplung von Fig. 46.
- Fig. 49: zeigt eine Ansicht der Hydraulikleitungskupplung von Fig. 46 von der in Fig. 46 rechten Seite.
- Fig. 50: zeigt eine Ansicht der Hydraulikleitungskupplung von Fig. 46 von der in Fig. 46 linken Seite.
- Fig. 51: zeigt eine Schnittansicht durch einen Lenkervorbau mit einer Hydraulikleitungskupplung gemäß einer Ausführung der Erfindung entlang der Linien LI- LI von Fig. 52.
- Fig. 52: zeigt eine Schnittansicht des Lenkervorbaus mit der Hydraulikleitungskupplung von Fig. 51 entlang der Linien LII-LII von Fig. 51.
- Fig. 53: zeigt eine Schnittansicht einer Hydraulikleitungskupplung gemäß einer Ausführung der Erfindung.
- Fig. 54: zeigt eine Ansicht der Hydraulikleitungskupplung von Fig. 53 von der in Fig. 53 unteren Seite.
- Fig. 55: zeigt eine Schnittansicht des Lenkervorbaus mit der Hydraulikleitungskupplung von Fig. 53 entlang der Linien LV-LV von Fig. 53.
- Fig. 56: zeigt eine Ansicht der Hydraulikleitungskupplung von Fig. 53 von der in Fig. 55 linken Seite.
- Fig. 57: zeigt eine Schnittansicht einer Hydraulikleitungskupplung gemäß einer Ausführung der Erfindung entlang der Linien LVII-LVII von Fig. 58.
- Fig. 58: zeigt eine Seitenansicht der Hydraulikleitungskupplung von Fig. 57.
- Fig. 59: zeigt eine Ansicht der Hydraulikleitungskupplung von Fig. 57 von der in Fig. 58 oberen Seite.
- Fig. 60: zeigt eine Schnittansicht der Hydraulikleitungskupplung von Fig. 57 entlang der Linien LX-LX von Fig. 57.
- Fig. 61: zeigt eine Ansicht der Hydraulikleitungskupplung von Fig. 57 von der in Fig. 58 rechten Seite.
- Fig. 62: zeigt eine Schnittansicht einer Hydraulikleitungskupplung gemäß einer Ausführung der Erfindung entlang der Linien LXII-LXII von Fig. 63.
- Fig. 63: zeigt eine Seitenansicht der Hydraulikleitungskupplung von Fig. 62.
- Fig. 64: zeigt eine Aufsicht einer Gabelbrücke mit einer Hydraulikleitungskupplung von Fig. 62.
- Fig. 65: zeigt eine Schnittansicht der Gabelbrücke mit der Hydraulikleitungskupplung von Fig. 62 entlang der Linien LXV-LXV von Fig. 64.
- Fig. 66: zeigt eine Schnittansicht eines Lenkerabschnitts mit einer Hydraulikleitungskupplung gemäß einer Ausführung der Erfindung entlang der Linien LXVI-LXVI von Fig. 68.
- Fig. 67: zeigt eine Seitenansicht des Lenkerabschnitts mit der Hydraulikleitungskupplung von Fig. 66.
- Fig. 68: zeigt eine Ansicht des Lenkerabschnitts mit der Hydraulikleitungskupplung von Fig. 66 von der in Fig. 66 unteren Seite.
- Fig. 69: zeigt eine Schnittansicht eines Lenkerabschnitts mit einer Hydraulikleitungskupplung gemäß einer Ausführung der Erfindung entlang der Linien LXIX-LXIX von Fig. 72.
- Fig. 70: zeigt eine Seitenansicht des Lenkerabschnitts mit der Hydraulikleitungskupplung von Fig. 69.
- Fig. 71: zeigt eine Ansicht des Lenkerabschnitts mit der Hydraulikleitungskupplung von Fig. 69 von der in Fig. 69 linken Seite.
- Fig. 72: zeigt eine Ansicht des Lenkerabschnitts mit der Hydraulikleitungskupplung von Fig. 69 von der in Fig. 69 unteren Seite.
- Fig. 73: zeigt eine Schnittansicht eines Lenkerabschnitts mit einer Hydraulikleitungskupplung gemäß einer Ausführung der Erfindung entlang der Linien LXXIII-LXXIII von Fig. 76.
- Fig. 74: zeigt eine Seitenansicht des Lenkerabschnitts mit der Hydraulikleitungskupplung von Fig. 73.
- Fig. 75: zeigt eine Ansicht des Lenkerabschnitts mit der Hydraulikleitungskupplung von Fig. 73 von der in Fig. 73 linken Seite.
- Fig. 76: zeigt eine Ansicht des Lenkerabschnitts mit der Hydraulikleitungskupplung von Fig. 73 von der in Fig. 73 unteren Seite.
- Fig. 77: zeigt eine Schnittansicht eines Lenkervorbauabschnitts mit einer Hydraulikleitungskupplung gemäß einer Ausführung der Erfindung entlang der Linien LXXVII-LXXVII von Fig. 78.
- Fig. 78: zeigt eine Ansicht des Lenkervorbauabschnitts mit der Hydraulikleitungskupplung von Fig. 77 von der in Fig. 77 linken Seite.
- Fig. 79: zeigt eine Schnittansicht eines Lenkerabschnitts mit einer Hydraulikleitungskupplung gemäß einer Ausführung der Erfindung entlang der Linien LXXIX-LXXIX von Fig. 81.
- Fig. 80: zeigt eine Seitenansicht des Lenkerabschnitts mit der Hydraulikleitungskupplung von Fig. 79.
- Fig. 81: zeigt eine Ansicht des Lenkerabschnitts mit der Hydraulikleitungskupplung von Fig. 79 von der in Fig. 79 unteren Seite.
- Fig. 82: zeigt eine Schnittansicht eines Lenkerabschnitts mit einer Hydraulikleitungskupplung gemäß einer Ausführung der Erfindung entlang der Linien LXXXII-LXXXII von Fig. 84.
- Fig. 83: zeigt eine Seitenansicht des Lenkerabschnitts mit der Hydraulikleitungskupplung von Fig. 82.
- Fig. 84: zeigt eine Ansicht des Lenkerabschnitts mit der Hydraulikleitungskupplung von Fig. 82 von der in Fig. 82 unteren Seite.
- Fig. 85: zeigt eine Schnittansicht eines Lenkerabschnitts mit einer Hydraulikleitungskupplung gemäß einer Ausführung der Erfindung entlang der Linien LXXXV-LXXXV von Fig. 87.
- Fig. 86: zeigt eine Schnittansicht des Lenkerabschnitts mit der Hydraulikleitungskupplung von Fig. 85 entlang der Linien LXXXVI-LXXXVI von Fig. 85.
- Fig. 87: zeigt eine Ansicht des Lenkerabschnitts mit der Hydraulikleitungskupplung von Fig. 85 von der in Fig. 85 unteren Seite.
- Fig. 88: zeigt eine Schnittansicht einer Hydraulikgebervorrichtung mit einer Hydraulikleitungskupplung gemäß einer Ausführung der Erfindung entlang der Linien LXXXVIII-LXXXVIII von Fig. 89, wobei die Hydraulikleitung von der Hydraulikgebervorrichtung getrennt ist.
- Fig. 89: zeigt eine perspektivische Ansicht der Hydraulikgebervorrichtung von Fig. 88 von schräg unten.
- Fig. 90: zeigt eine Seitenansicht der Verschlusseinrichtung von Fig. 88.
- Fig. 91: zeigt eine um 90 Grad gedrehte Seitenansicht der Verschlusseinrichtung von Fig. 90.
- Fig. 92: zeigt eine Ansicht der Verschlusseinrichtung von Fig. 90 von oben.
- Fig. 93: zeigt eine Schnittansicht der Hydraulikgebervorrichtung von Fig. 88 entlang der Linien XCIII-XCIII von Fig. 88.
- Fig. 94: zeigt eine perspektivische Ansicht der Hydraulikgebervorrichtung von Fig. 88 von schräg unten.
- Fig. 95: zeigt eine perspektivische Ansicht der Hydraulikgebervorrichtung von Fig. 88 von schräg oben.
- Fig. 96: zeigt eine Seitenansicht einer Hydraulikleitungskupplung gemäß einer Ausführung der Erfindung.
- Fig. 97: zeigt eine Schnittansicht der Hydraulikleitungskupplung von Fig. 96 entlang der Linien XCVII-XCVII von Fig. 96.
- Fig. 98: zeigt eine Schnittansicht der Hydraulikleitungskupplung von Fig. 96 entlang der Linien XCVIII-XCVIII von Fig. 97.
- Fig. 99: zeigt eine Schnittansicht der Hydraulikleitungskupplung von Fig. 96 entlang der Linien XCIX-XCIX von Fig. 97.
- Fig. 100: zeigt eine der Fig. 97 entsprechende Schnittansicht einer Hydraulikleitungskupplung gemäß einer Ausführung der Erfindung.
- Fig. 101: zeigt eine Ansicht der Hydraulikleitungskupplung von Fig. 100.
- Fig. 102: zeigt eine Schnittansicht der Hydraulikleitungskupplung von Fig. 100 entlang der Linien CII-CII von Fig. 100.
- Fig. 103: zeigt eine Schnittansicht der Hydraulikleitungskupplung von Fig. 100 entlang der Linien CIII-CIII von Fig. 100.
- Fig. 104: zeigt eine Schnittansicht der Hydraulikleitungskupplung von Fig. 100 entlang der Linien CII-CII von Fig. 100.
- Fig. 105: zeigt eine Seitenansicht einer Hydraulikleitungskupplung gemäß einer Ausführung der Erfindung entlang der Linien CV-CV von Fig. 106.
- Fig. 106: zeigt eine Schnittansicht der Hydraulikleitungskupplung von Fig. 105 entlang der Linien CVI-CVI von Fig. 105.
- Fig. 107: zeigt eine perspektivische Ansicht der Hydraulikleitungskupplung von Fig. 105 von schräg oben.
- Fig. 108: zeigt eine Seitenansicht einer Hydraulikleitungskupplung gemäß einer Ausführung der Erfindung entlang der Linien CVIII-CVIIIvon Fig. 109.
- Fig. 109: zeigt eine Ansicht der Hydraulikleitungskupplung von Fig. 108 von unten.
- Fig. 110: zeigt eine Schnittansicht der Hydraulikleitungskupplung von Fig. 108 entlang der Linien CX-CX von Fig. 108.
- Fig. 111: zeigt eine Schnittansicht der Hydraulikleitungskupplung von Fig. 108 entlang der Linien CXI-CXI von Fig. 108.
- Fig. 112: zeigt eine Schnittansicht einer Hydraulikgebervorrichtung mit einer Hydraulikleitungskupplung gemäß einer Ausführung der Erfindung entlang der Linien CXII-CXII von Fig. 114.
- Fig. 113: zeigt eine Ansicht der von der Hydraulikgebervorrichtung von Fig. 112 getrennten Hydraulikleitung.
- Fig. 114: zeigt eine Ansicht der Hydraulikgebervorrichtung von Fig. 112 von bezogen auf Fig. 112 oben.
- Fig. 115: zeigt eine Ansicht der Hydraulikgebervorrichtung von Fig. 112 von bezogen auf Fig. 112 links.
- Fig. 116: zeigt eine Schnittansicht der Hydraulikgebervorrichtung von Fig. 112 entlang der Linien CXVI-CXVI von Fig. 112.
- Fig. 117: zeigt eine Schnittansicht einer Hydraulikgebervorrichtung mit einer Hydraulikleitungskupplung gemäß einer Ausführung der Erfindung entlang der Linien CXVII-CXVII von Fig. 118.
- Fig. 118: zeigt eine Ansicht der Hydraulikgebervorrichtung von Fig. 117 von bezogen auf Fig. 117 rechts.
- Fig. 119: zeigt eine Ansicht der Hydraulikgebervorrichtung von Fig. 117 von bezogen auf Fig. 117 vorne.
- Fig. 120: zeigt eine Schnittansicht eines Leitungsstutzens für eine Hydraulikleitungskupplung gemäß einer Ausführung der Erfindung entlang der Linien CXX-CXX von Fig. 121.
- Fig. 121: zeigt eine Ansicht der Leitungsstutzens von Fig. 120 von bezogen auf Fig. 120 unten.
- Fig. 122: zeigt eine Ansicht der Leitungsstutzens von Fig. 120 von bezogen auf Fig. 120 rechts.
- Fig. 123: zeigt eine Schnittansicht eines Druckraumgehäuses bzw. einer Ventilhülse für eine Hydraulikleitungskupplung gemäß einer Ausführung der Erfindung entlang der Linien CXXIII-CXXIII von Fig. 124.
- Fig. 124: zeigt eine Ansicht des Druckraumgehäuses bzw. der Ventilhülse von Fig. 123 von bezogen auf Fig. 123 unten.
- Fig. 125: zeigt eine Ansicht des Druckraumgehäuses bzw. der Ventilhülse von Fig. 123 von bezogen auf Fig. 123 rechts.
- Fig. 126: zeigt eine perspektivische Ansicht des Druckraumgehäuses bzw. der Ventilhülse von Fig. 123 von schräg oben vorne.
- Fig. 127: zeigt eine perspektivische Ansicht eines Druckraumgehäuses bzw. einer Ventilhülse für eine Hydraulikleitungskupplung gemäß einer Ausführung der Erfindung von schräg oben vorne.
- Fig. 128: zeigt eine Schnittansicht des Druckraumgehäuses bzw. der Ventilhülse von Fig. 127 entlang der Linien CXXVIII-CXXVIII von Fig. 129.
- Fig. 129: zeigt eine Ansicht des Druckraumgehäuses bzw. der Ventilhülse von Fig. 127 von bezogen auf Fig. 128 unten.
- Fig. 130: zeigt eine Ansicht des Druckraumgehäuses bzw. der Ventilhülse von Fig. 127 von bezogen auf Fig. 128 rechts.
- Fig. 131: zeigt eine Schnittansicht eines Druckraumgehäuses bzw. einer Ventilhülse für eine Hydraulikleitungskupplung gemäß einer Ausführung der Erfindung entlang der Linien CXXXI-CXXXI von Fig. 132.
- Fig. 132: zeigt eine Ansicht des Druckraumgehäuses bzw. der Ventilhülse von Fig. 131 von bezogen auf Fig. 131 unten.
- Fig. 133: zeigt eine Ansicht des Druckraumgehäuses bzw. der Ventilhülse von Fig. 131 von bezogen auf Fig. 131 rechts.
- Fig. 134: zeigt eine Schnittansicht einer Hydraulikleitungskupplung gemäß einer Ausführung der Erfindung vor der Montage der Hydraulikleitung.
- Fig. 135: zeigt eine der Fig. 134 entsprechende Schnittansicht der Hydraulikleitungskupplung von Fig. 134, wobei die Hydraulikleitung mit dem Leitungsstützen in das Gehäuse eingesteckt und die Ventileinrichtung noch nicht betätigt ist.
- Fig. 136: zeigt eine der Fig. 134 entsprechende Schnittansicht der Hydraulikleitungskupplung von Fig. 134, wobei die Hydraulikleitung mit dem Leitungsstützen in das Gehäuse eingesteckt und die Ventileinrichtung betätigt ist.
- Fig. 137: zeigt eine der Fig. 134 entsprechende Schnittansicht der Hydraulikleitungskupplung von Fig. 134, wobei die Hydraulikleitung mit dem Leitungsstützen vollständig in das Gehäuse eingesteckt und die Ventileinrichtung betätigt ist.
- Fig. 138: zeigt eine der Fig. 134 entsprechende Schnittansicht der Hydraulikleitungskupplung von Fig. 134, wobei die Hydraulikleitung mit dem Leitungsstützen vollständig in das Gehäuse eingesteckt, die Ventileinrichtung betätigt und die Abdeckeinrichtung bzw. Schutzkappe auf dem Gehäuse angeordnet ist.

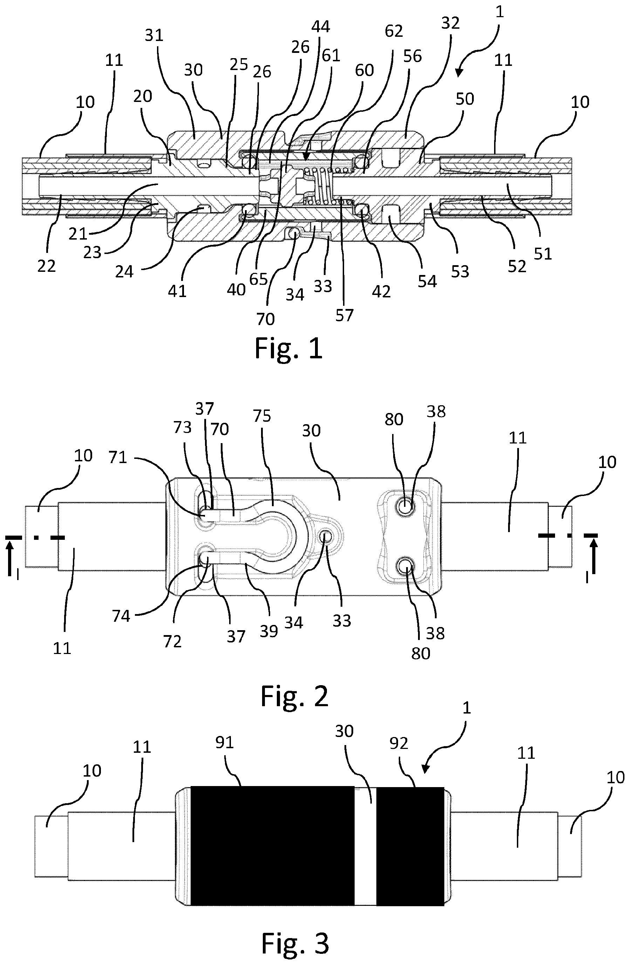

Die Figuren 1 bis 8 zeigen eine erste Ausführung einer Hydraulikleitungskupplung 1 gemäß einer Ausführung der Erfindung.

Die Hydraulikleitungskupplung 1 umfasst ein Gehäuse 30, in das auf der linken Seite ein Leitungsstutzen 20 und auf der rechten Seite ein Leitungsstutzen 50 angeordnet sind. Die beiden Leitungsstutzen sind innerhalb des Gehäuses 30 mit einem einen Druckraum 44 definierenden Druckraumgehäuse 40 druckdicht über den Druckraum 44 miteinander verbunden. Das hat den Vorteil, dass das Gehäuse 30 nicht druckdicht ausgebildet werden muss. Daher kann es einfacher und kostengünstiger hergestellt werden. Beispielsweise kann es eine geringere Festigkeit aufweisen. Weiterhin können auch Materialien für das Gehäuse 30 verwendet werden, die nicht unbedingt korrosionsbeständig gegenüber der Hydraulikflüssigkeit sind.

Der Leitungsstutzen 20 weist einen Fortsatz 22 auf, an dem eine Hydraulikleitung 10 angebracht werden kann. Der Leitungsstutzen 50 weist einen Fortsatz 52 auf, an dem eine Hydraulikleitung 10 angebracht werden kann.

Die Hydraulikleitungskupplung 1 verbindet die beiden an den Fortsätzen 22 bzw. 52 angebrachten Hydraulikleitungen 10.

Der Leitungsstutzen 20 weist einen Befestigungsabschnitt 23 und der Leitungsstutzen 50 weist einen Befestigungsabschnitt 53 auf, an dem jeweils eine Hülse 11 zur Sicherung der entsprechenden Hydraulikleitung befestigt werden kann. Die Hülse 11 kann bzw. die Hülsen 11 können beispielsweise ein Innengewinde aufweisen, das auf ein auf dem Befestigungsabschnitt 23 bzw. 53 vorgesehenes Außengewinde geschraubt wird. Andere Befestigungsmöglichkeiten sind denkbar, wie beispielsweise eine Verpressung, wobei die Hülse bzw. die Hülsen 11 einen Hinterschnitt aufweisen bzw. durch das Verpressen bekommen kann bzw. können, der/die in eine Nut an dem Befestigungsabschnitt 23 bzw. 53 eingreift/eingreifen.

Der Leitungsstutzen 20 weist einen Durchgang 21 auf, der sich durch den Leitungsstutzen 20 von dem Fortsatz 22 bis zu dem an dem gegenüberliegenden Ende vorgesehenen Dichtungsbereich 26 erstreckt. Der Fortsatz 22 ist in der Hydraulikleitung 10 angeordnet und bildet dort eine druckdichte Verbindung mit der Hydraulikleitung 10. An der anderen Seite bildet der Leitungsstutzen 20 am Dichtungsbereich 26 mit der Dichtung 41 eine druckdichte Verbindung mit dem Druckraum 44, der durch das Druckraumgehäuse 40 umschlossen ist.

An seiner Außenseite weist der Leitungsstutzen 20 eine Aufnahme 24 zur Aufnahme der Arretiereinrichtung 70 auf.

Der Leitungsstutzen 50 weist einen Durchgang 51 auf, der sich durch den Leitungsstutzen 50 von dem Fortsatz 52 bis zu dem an dem gegenüberliegenden Ende vorgesehenen Dichtungsbereich 56 erstreckt. Der Fortsatz 52 ist in der Hydraulikleitung 10 angeordnet und bildet dort eine druckdichte Verbindung mit der Hydraulikleitung 10. An der anderen Seite bildet der Leitungsstutzen 50 am Dichtungsbereich 56 mit der Dichtung 42 eine druckdichte Verbindung mit dem Druckraum 44. Durch diese Konstruktion wird eine Druckleitung aus der Hydraulikleitung 10, dem Leitungsstutzen 20, dem Druckraum 44, dem Leitungsstutzen 50 und der Hydraulikleitung 10 geschaffen, die innerhalb des Gehäuses 30 verläuft, das selber nicht druckdicht ausgebildet sein muss, weil ein Druckraumgehäuse 40 innerhalb des Gehäuses vorgesehen ist. Das Gehäuse 30 dient der Sicherung der Leitungsstutzen 20, 50 in Richtung des Leitungsverlaufs, d.h. die Leitungsstutzen 20, 50 sind in dem Gehäuse 30 gegen Herausziehen gesichert.

Der Leitungsstutzen 50 weist Aufnahmen 54 auf, in die eine Verriegelungseinrichtungen 80 eingepresst sind, um den Leitungsstutzen 50 in dem Gehäuse 30 gegen ein Herausziehen zu sichern. Das Gehäuse 30 weist entsprechende Durchgänge 38 auf, in die die Verriegelungseinrichtungen 80 eingepresst werden. Alternative Befestigungsmöglichkeiten zu der Presspassung sind denkbar.

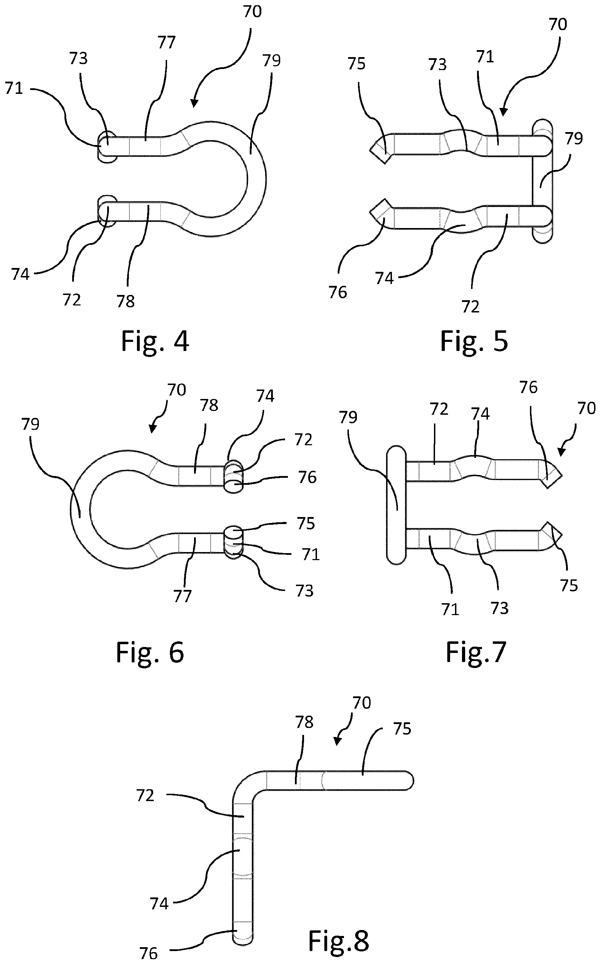

In den Figuren 4 bis 8 wird eine Arretiereinrichtung 70 dargestellt. An seiner Außenseite weist der Leitungsstutzen 20 eine Aufnahme 24 zur Aufnahme der Arretiereinrichtung 70 auf. Das Gehäuse 30 weist entsprechende Durchgänge 37 und eine Aufnahme 39 für die Arretiereinrichtung 70 auf.

Mit der Arretiereinrichtung 70 kann der Leitungsstutzen 20 nach dem Einsetzen in das Gehäuse 30 gesichert bzw. arretiert werden. Die Arretiereinrichtung 70 weist zwei Beine 71, 72 auf, die durch in dem Gehäuse 30 vorgesehene Durchgänge 37 gesteckt und in die entsprechenden an dem Leitungsstutzen 20 vorgesehenen Aufnahmen 24 angeordnet werden können. An dem Bein 71 ist ein bogenförmiger Aufnahmeabschnitt 73 und an dem Bein 72 ist ein bogenförmiger Aufnahmeabschnitt 74 zur Aufnahme des Leitungsstutzens 20 im Bereich der Aufnahme 24 vorsehen, derart, dass nach dem Einsetzen der Beine 71,72 der Arretiereinrichtung 70 in dem Durchgang 37 des Gehäuses 30 und in der Aufnahme 24 des Leitungsstutzens 20 eine formschlüssige Verbindung (in Leitungsrichtung) zwischen dem Leitungsstutzen 20 und der Arretiereinrichtung 70 (Aufnahme 24Beine 71, 72) und formschlüssige Verbindung (in Leitungsrichtung) zwischen dem Gehäuse 30 und der Arretiereinrichtung 70 (Durchgang 37Beine 71, 72) gebildet wird, der ein Herausrutschen bzw. Herauszeihen des Leitungsstutzens 20 aus dem Gehäuse verhindert. An den Enden der Beine 71, 72 sind jeweils ein Sicherungsabschnitt 75, 76 vorgesehen, der nach dem Einsetzen hinter den Leitungsstutzen 20 eingreift, derart, dass die Arretiereinrichtung 70 gegen ein Herausziehen aus der Aufnahme 24 und den Durchgängen gesichert ist.

Der Leitungsstutzen 20 weist einen Übergangsbereich 25 auf, in dem sich der Außendurchmesser des Leitungsstutzens 20 von dem Rand der Aufnahme 24 zum Dichtungsbereich 26 hin verringert. Wenn der Leitungsstutzen 20 in das Gehäuse 30 eingebracht wird, wobei vorher die Beine 71, 72 der Arretiereinrichtung 70 durch Durchgänge 37 gesteckt wurden, wird der Leitungsstutzen 20 mit dem Dichtbereich 26 zwischen die Beine 71, 72 im Bereich der Aufnahmen 74, 75 angeordnet. Wenn man den Leitungsstutzen 20 weiter in das Gehäuse schiebt, wird der Übergangsbereich die Beine 71, 72 auseinanderspreizen, ähnlich wie eine Rampe. Sobald die Beine 71, 72 in den Bereich der Aufnahme 24 des Leitungsstutzens 20 geraten, wenn dieser weiter in das Gehäuse geschoben wird, werden die Beine 71, 72 infolge der Elastizität der Arretiereinrichtung 70 in die Aufnahme 24 springen, weil diese durch das Einschieben des sich erweiternden Übergangsbereichs 25 gespreizt wurden, derart, dass der Leitungsstutzen 20 in dem Gehäuse 30 gesichert ist.

Die Arretiereinrichtung 70 weist einen sich von dem Bein 71 in etwa rechtwinklig entlang der Oberfläche des Gehäuses 30 erstreckenden Erweiterungsabschnitt 77 und einen sich von dem Bein 71 in etwa rechtwinklig entlang der Oberfläche des Gehäuses 30 erstreckenden Erweiterungsabschnitt 78 auf, die über einen Verbindungsabschnitt 79 miteinander verbunden sind. Diese Ausführung hat den Vorteil, dass die Spannkraft der Arretiereinrichtung 70 trotz der relativ kurzen Beine 71, 72 durch eine quasi Verlängerung erhöht werden kann, so dass eine bessere und zuverlässigere Sicherung der Arretiereinrichtung 70 erreicht werden kann.

Die Aufnahme 39 ist derart ausgebildet und angeordnet, dass die Erweiterungsabschnitte 77, 78 und der Verbindungsabschnitt 79 in der Aufnahme angeordnet werden können.

Fig. 3 zeigt eine Variante der Hydraulikleitungskupplung 1 von Fig. 1, bei der an die Arretiereinrichtung 70 mit einer optionalen Sicherungseinrichtung 91 überdeckt sind, die beispielsweise durch ein Siegel und/oder eine Schutzfolie und/oder eine Umspritzung ausgebildet sein kann, um eine Manipulation der Arretiereinrichtung 70 nachweisen bzw. anzuzeigen, falls die Sicherungseinrichtung 91 beschädigt wurde. Eine entsprechende optionale Sicherungseinrichtung 92 kann für die beiden Verriegelungseinrichtungen 80 vorgesehen sein.

Das Gehäuse 30 kann, wie in Fig. 1 gezeigt, einteilig ausgebildet sein. Dabei kann es einen ersten Gehäuseabschnitt 31 aufweisen, in dem der Leitungsstutzen 20 angeordnet ist, und einen zweiten Gehäuseabschnitt 32 aufweisen, in dem der Leitungsstutzen 50 angeordnet ist. Da innerhalb des Gehäuses 30 das separate Druckraumgehäuse 40 vorgesehen ist, müssen der erste Gehäuseabschnitt 31 und der zweite Gehäuseabschnitt 32 nicht druckfest bzw. fluiddicht miteinander verbunden sein, sondern können beispielsweise auch mit einer Schraubverbindung miteinander verbunden sein. Dazu kann in dem Bereich, in dem die in Fig. 1 gezeigte Ausführung eine Aussparung 33 aufweist, in der die Kontrollöffnung 34 vorgesehen ist, eine Hülse vorgesehen sein, die ein erstes erstes den Gehäuseabschnitt 31 umfassendes Gehäuseteil mit einem zweiten den Gehäuseabschnitt 31 umfassendes Gehäuseteil verbindet. Dabei kann die Hülse in einer Nut angeordnet sein und auf ein Außengewinde an dem zweiten Gehäuseteil aufgeschraubt sein. Die Hülse kann mit einer Sicherung gegen Verdrehen und somit Lösen gesichert sein und nach der Verbindung der Teile beispielsweise umspritzt werden, damit eine glatte Oberfläche, wie in Fig. 2 gezeigt entsteht.

Die Hydraulikleitungskupplung 1 kann eine Kontrollöffnung 34 aufweisen, mit der die Dichtigkeit der Hydraulikleitungskupplung 1 geprüft werden kann. Ein Ölaustritt aus der Kontrollöffnung 34 weist auf eine Undichtigkeit, beispielsweise der Dichtung 41 oder 42 hin. Außerdem kann ein Presslufttest durchgeführt werden, indem Pressluft an die Kontrollöffnung 34 angelegt wird. Ein Druckabfall würde auf eine Undichtigkeit einer der beiden Dichtungen 41, 42, die beispielweise durch einen Defekt bzw. eine inkorrekte Lage bedingt sein kann.

In dem Druckraumgehäuse 40 ist eine Ventileinrichtung 60 vorgesehen, die das Druckraumgehäuse 40 bzw. den Druckraum 44 zu der linken Seite verschließt, wenn der Leitungsstutzen 20 noch nicht eingesetzt ist. Die Ventileinrichtung 60 weist ein Schließglied 61 und eine Schließfeder 62 auf. Der Leitungsstutzen weist eine Federaufnahme 57 auf, in der die Schließfeder 62 aufgenommen ist. Die Schließfeder 62 spannt das Schließglied 61 gegen die in dem Druckraumgehäuse 40 angeordnete Dichtung 41 vor, so dass der Druckraum 44 nach außen druckdicht verschlossen ist, wenn der Leitungsstutzen 20 noch nicht in das Gehäuse 30 eingesetzt ist. Beim Einsetzen des Leitungsstutzens 20 in das Gehäuse 30 wird der Dichtungsbereich 26 in die Dichtung 41 eingeführt und schiebt das Ventilschließglied 61 in Richtung des Leitungsstutzens 50, so dass sich die Ventileinrichtung 60 öffnet. Dabei dichtet die Dichtung 41 den Durchgang 21 des Leitungsstutzens 20 derart ab, dass eine druckfeste Verbindung zum Druckraum 44 des Druckraumgehäuses 40 geschaffen wird. In dem Ventilschließglied 61 können Überströmkanäle 65 vorgesehen sein, damit das Hydraulikfluid an dem Ventilschließglied 61 vorbeiströmen kann. Zum Entfernen des Leitungsstutzen 20 aus dem Gehäuse 30 kann in der Aufnahme 39 ein Eingriff vorgesehen sein, derart, dass der Bediener mit einem Werkzeug bzw. dem Findernagel unter den Verbindungsabschnitt 79 bzw. eine Erweiterung 77 oder 78 eingreifen kann, um die Arretierungseinrichtung 70 nach oben und aus den Aufnahmen 24 zu ziehen. Um ein ungewünschtes Lösen zu verhindern kann die Arretiereinrichtung 70 mit der Sicherungseinrichtung 91 versiegelt werden.

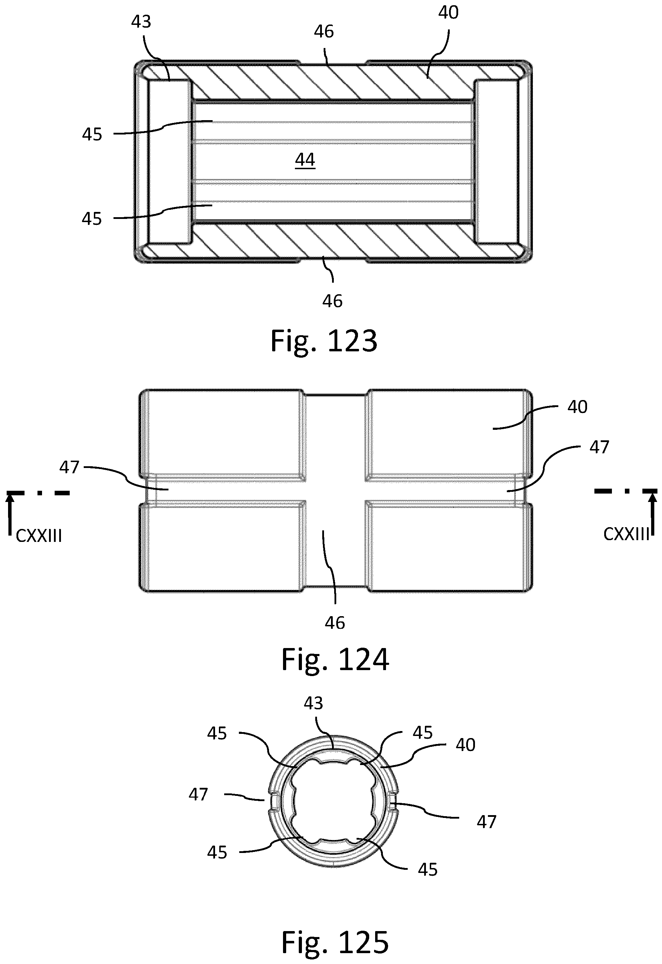

Das Druckraumgehäuse 40 kann beispielsweise wie in den Figuren 123 bis 126 gezeigt ausgebildet sein. Auf die Beschreibung der Figuren 123 bis 126 wird verwiesen.

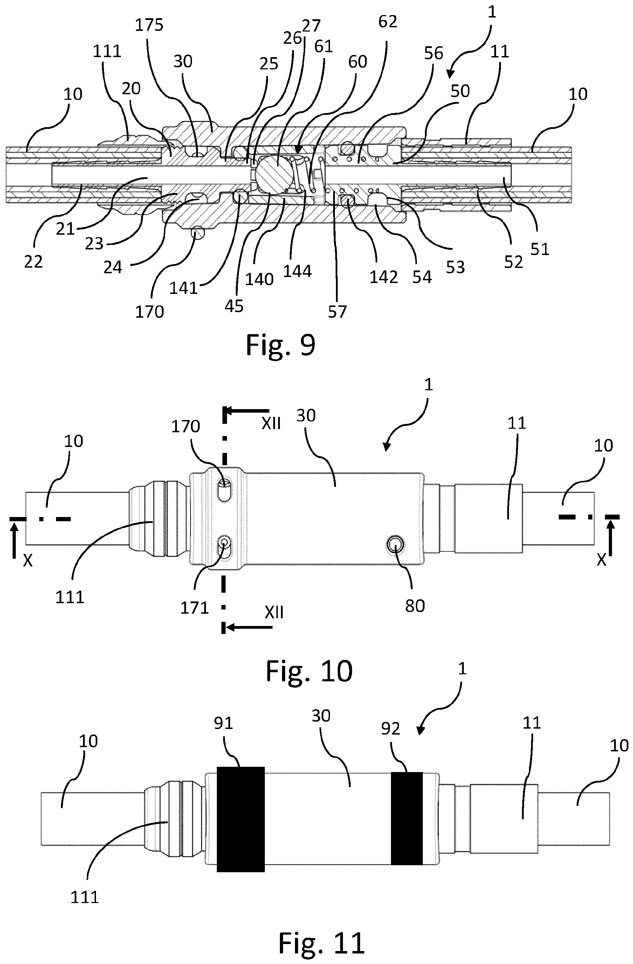

Die Figuren 9 bis 14 zeigen eine nicht erfindungsgemäße Ausführungsform, die im Wesentlichen der in den Figuren 1 bis 8 gezeigten Ausführungsform der Erfindung entspricht. Gleiche Bezugszeichen bezeichnen gleiche oder sich entsprechende Bauteile bzw. Merkmale. Auf die Beschreibung der anderen Ausführungsbeispiele der Erfindung wird verwiesen. Im Folgenden wird der Schwerpunkt auf die Unterschiede zu den anderen Ausführungsbeispielen der Erfindung gelegt.

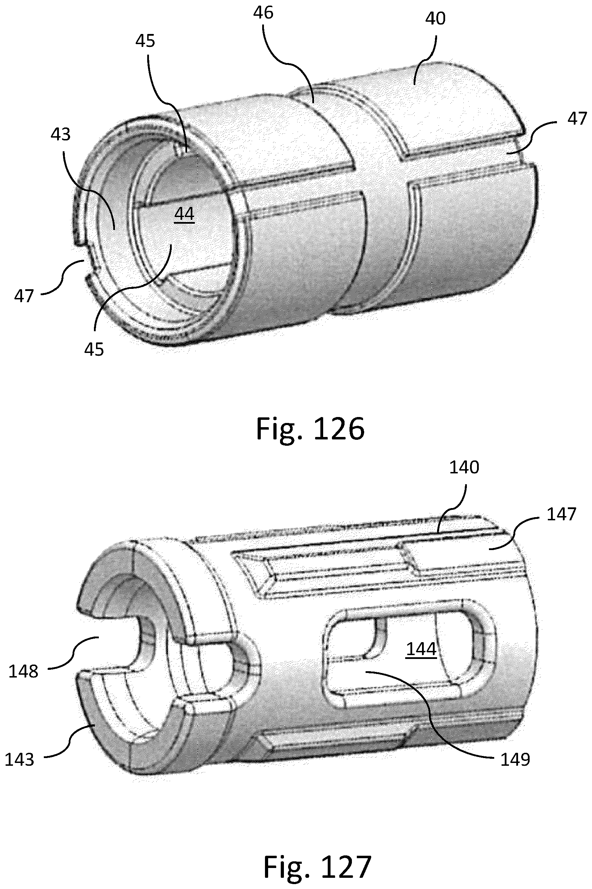

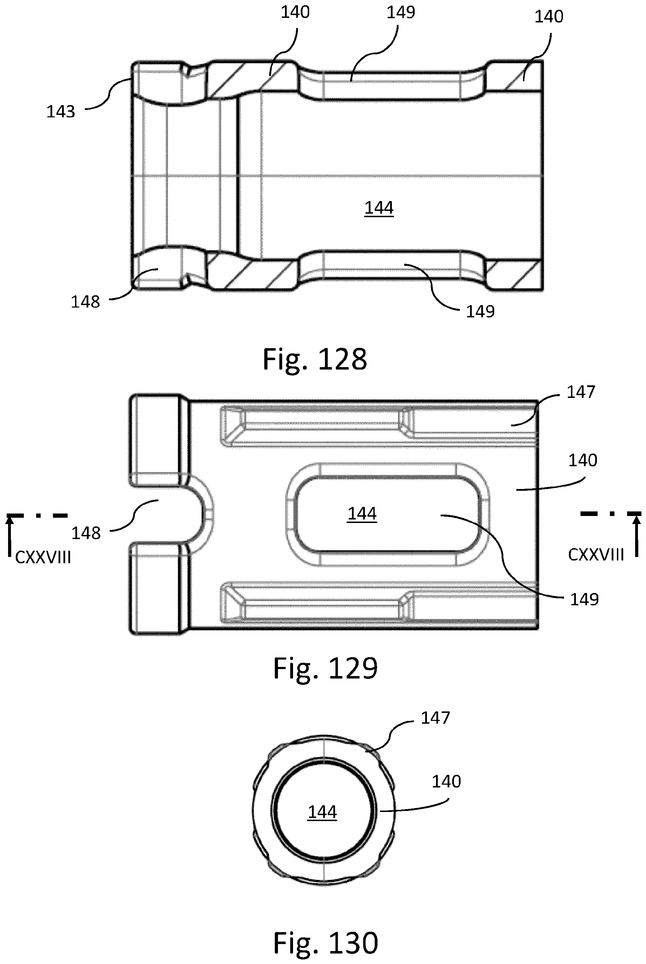

Die Ausführung weist ein Ventilraumgehäuse 140, in dem die Ventileinrichtung 60 angeordnet ist. Das Ventilraumgehäuse 140 ist bei dieser Ausführung nicht als Druckraumgehäuse wie bei den Figuren 1 bis 8 und 123 bis 126 ausgeführt, d.h. dass das Hydraulikfluid auch an der Außenseite des Ventilraumgehäuses 140 vorbeiströmen kann, wenn die Ventileinrichtung 60 geöffnet ist. Das Ventilraumgehäuse 140 weist an seiner der Dichtung 141 zugewandten Seite einen Anlagebereich auf, mit dem die Dichtung 141 zusammengepresst werden kann, derart, dass die Dichtung 141 gegen die Innenwandung des Gehäuses 30 gepresst wird und dort abdichtet. Wenn der Leitungsstutzen 20 eingesetzt ist, wird die Dichtung 141 ferner nach radial innen auf den Dichtungsbereich 26 gedrückt, so dass die Dichtung 141 gleichzeitig nach außen und innen abdichtet. Das Ventilraumgehäuse 140 kann beispielsweise wie in den Figuren 127 bis 130 gezeigt ausgebildet sein. Auf die Beschreibung der Figuren 127 bis 130 wird verwiesen.

Alternativ kann das Ventilraumgehäuse zusätzlich als Druckraumgehäuse ausgebildet sein.

Der Leitungsstutzen 20 ist mit einer Presshülse 111 an der Hydraulikleitung 10 befestigt. Alternativ kann der Leitungsstutzen 20 auch wie bei der Ausführung von Fig. 1 an der Hydraulikleitung befestigt werden.

Der Leitungsstutzen 50 der Ausführung von Fig. 1 oder Fig. 9 kann gemäß einer nicht dargestellten Ausführung auch entsprechend dem Leitungsstutzen 20 mit einer Presshülse 111 an der Hydraulikleitung 10, wie in Fig. 9 gezeigt, befestigt werden.

Die Ventileinrichtung 60 umfasst ein Schließglied 61, das kugelförmig ausgebildet ist. Um eine Verbindung um das Schließglied 61 zu schaffen, wenn der Leitungsstutzen 20 in das Gehäuse 30 eingesetzt ist und das Schließglied 61 von der Dichtung 141 weg drückt, sind Überstromkanäle 145 an der Innenwandung des Ventilraumgehäuses 140 vorgesehen.

Da die Arretiereinrichtung 170 keine Erweiterungen aufweist und somit axial, d.h. in Leitungsrichtung, kürzer ausgebildet ist, kann die optionale Sicherungseinrichtung 91 kleiner ausgebildet werden.

Der Leitungsstutzen ist mit nur einer Verriegelungseinrichtung 80 in dem Gehäuse axial gesichert. Alternativ können auch zwei Verriegelungseinrichtungen 80 bzw. eine Arretierungseinrichtung zur Befestigung bzw. axialen Sicherung des Leitungsstutzens 50 vorgesehen werden, die der Arretierungsvorrichtung 70 von Fig. 1 bzw. der Arretierungsvorrichtung 170 von Fig. 9 entspricht.

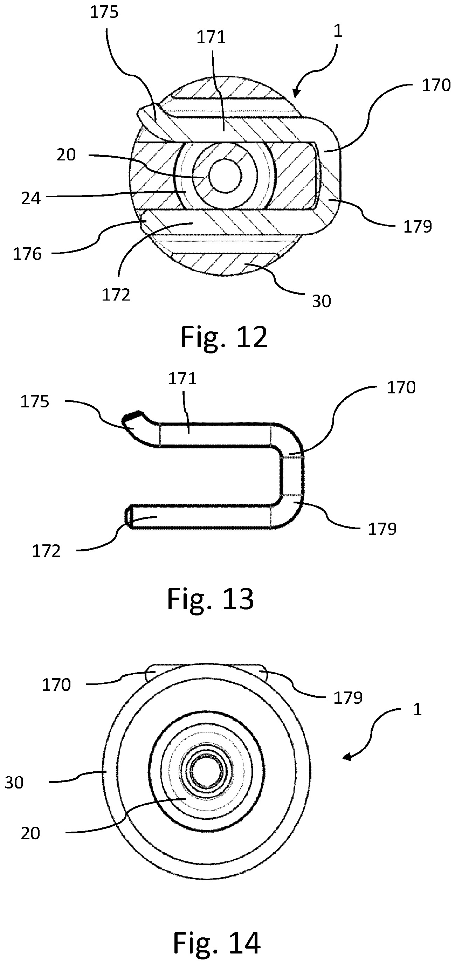

Die Figuren 12 bis 14 zeigen die Arretierungsvorrichtung 170 der Hydraulikleitungskupplung von Fig. 9. Die Arretiereinrichtung 170 umfasst ein Bein 171, das an seinem Ende einen Sicherungsabschnitt 175 umfasst, der die Arretiereinrichtung 170 gegen unbeabsichtigtes Herausziehen sichert. Das andere Bein 172 der Arretiereinrichtung 170 ist gerade ausgebildet. Die beiden Beine 171 und 172 sind mit einem Verbindungsabschnitt 179 verbunden.

Alternativ kann das Bein 172 der Arretiereinrichtung 170 auch entsprechend dem Bein 171 ausgebildet sein und eine dem nach außen gebogenen Sicherungsabschnitt 175 entsprechenden Sicherungsabschnitt umfassen. Der bzw. die Sicherungsabschnitte 175 können auch entsprechend der Arretierungseinrichtung 70 nach innen gebogen ausgebildet sein. An einem Bein oder beiden Beinen kann bzw. können entsprechend der Arretiereinrichtung 70 ausgebildete Aufnahmen 73, 74 vorgesehen sein.

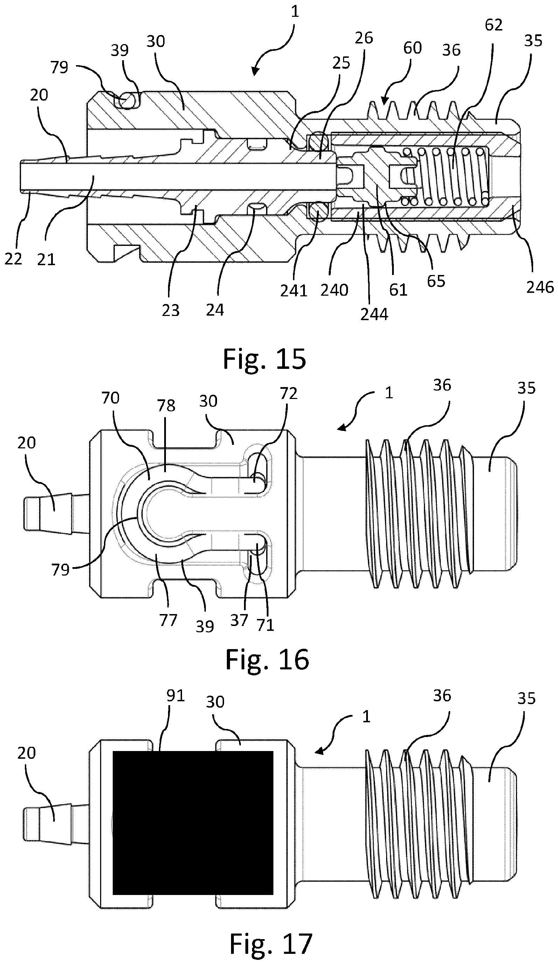

Die Figuren 15 bis 17 zeigen eine weitere Ausführungsform der Erfindung, die im Wesentlichen der in den Figuren 1 bis 8 bzw. 9 bis 14 gezeigten Ausführungsformen der Erfindung entspricht. Gleiche Bezugszeichen bezeichnen gleiche oder sich entsprechende Bauteile bzw. Merkmale. Auf die Beschreibung der anderen Ausführungsbeispiele der Erfindung wird verwiesen. Im Folgenden wird der Schwerpunkt auf die Unterschiede zu den anderen Ausführungsbeispielen der Erfindung gelegt.

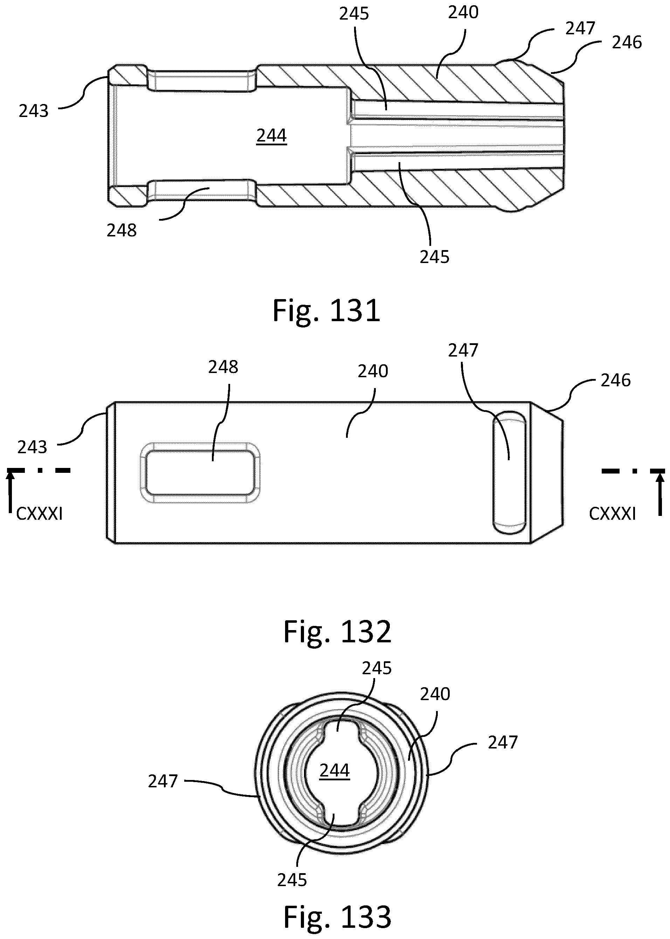

Diese Ausführung weist ein Ventilraumgehäuse 240 auf, das auf seiner der Ventileinrichtung 60 gegenüberliegenden Seite eine Phase bzw. Abflachung 246 aufweist. Vor der Abflachung 246 kann ein in Umfangsrichtung unterbrochener Steg 247 vorgesehen sein, der einen freien Querschnitt für an der Außenseite des Ventilraumgehäuses strömendes Hydraulikfluid gewährleistet. Auf der Innenseite sind Überströmkanäle 245 vorgesehen. Durchgänge 248 schaffen eine Verbindung zwischen der Außenseite und der Innenseite des Ventilraumgehäuses 240. Das Ventilraumgehäuse 240 kann beispielsweise wie in den Figuren 131 bis 133 gezeigt ausgebildet sein. Auf die Beschreibung der Figuren 131 bis 133 wird verwiesen.

Alternativ kann das Ventilraumgehäuse zusätzlich als Druckraumgehäuse ausgebildet sein.

Das Gehäuse 30 ist einteilig aufgebaut und umfasst einen Befestigungsabschnitt 35, an dem ein Außengewinde 36 zur Befestigung der Hydraulikleitungskupplung 1 an dem Gehäuse einer Hydraulikkomponente vorgesehen ist, wie beispielsweise dem Geber einer Hydraulikkupplung oder einer hydraulischen Bremse. Das in dem Gehäuse 30 angeordnete Druckraumgehäuse 40 hat einen Dichtungsabschnitt 43, mit dem das Druckraumgehäuse 40 gegen eine Dichtung in dem Gehäuse der Hydraulikkomponente angeordnet werden kann. Wie bei den anderen Ausführungen der Erfindung muss das Gehäuse 30 nicht druckfest ausgeführt werden, weil der Druck des Systems durch den Druckraum 44 des Druckraumgehäuses 40 direkt in den Leitungsstutzen 20 geleitet wird.

Die Arretiereinrichtung 70 ist gegenüber der Ausführung der Fig. 1 um 180 Grad gedreht ausgebildet, derart, dass der Verbindungsabschnitt 79 von dem Druckraumgehäuse bzw. dem Geber weg angeordnet ist. Entsprechend ist die Aufnahme 39 links von den Durchgängen 37 angeordnet.

Die Schließglied 61 der Ventileinrichtung 60 ist ähnlich wie das Schließglied 61 der Ausführung von Fig. 1 ausgebildet. Alternativ kann das Schließglied 61 entsprechend der Ausführung der Fig. 9 ausgebildet sein, wobei das Druckraumgehäuse 40 dann entsprechende Überströmkanäle 45 aufweisen sollte.

Alternativ könnte die Arretiereinrichtung 70 entsprechend der in den Figuren 9 bis 14 gezeigten Arretiereinrichtung 170 ausgebildet sein.

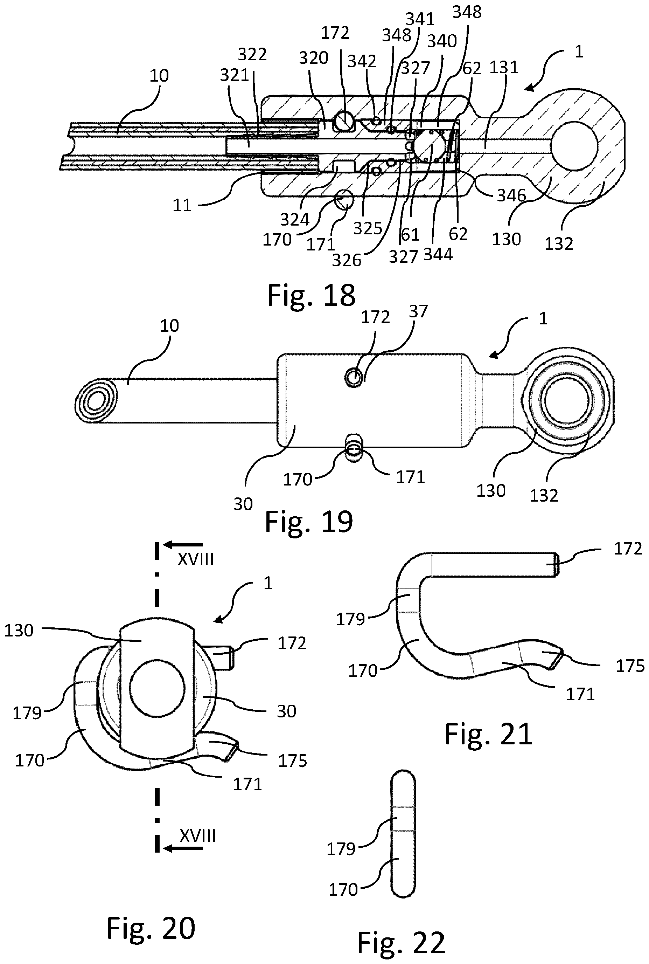

Die Figuren 18 bis 22 zeigen eine weitere Ausführungsform der Erfindung, die im Wesentlichen der in den Figuren 1 bis 8 bzw. 9 bis 14 gezeigten Ausführungsformen bzw. insbesondere der in den Figuren 15 bis 17 gezeigten Ausführungsform der Erfindung entspricht. Gleiche Bezugszeichen bezeichnen gleiche oder sich entsprechende Bauteile bzw. Merkmale. Auf die Beschreibung der anderen Ausführungsbeispiele der Erfindung wird verwiesen. Im Folgenden wird der Schwerpunkt auf die Unterschiede zu den anderen Ausführungsbeispielen der Erfindung gelegt.

Das Gehäuse 130 ist einteilig ausgebildet und weist an der dem Leitungsstutzen 320 gegenüberliegenden Seite eine Anschlusseinrichtung 132 auf, die einen Durchgang 131 und einen Ringkopf 132 umfasst, der beispielsweise auf dem Fachmann bekannte Weise an einen Nehmer einer hydraulischen Fahrradscheibenbremse mit einer Hohlschraube bzw. einer außenliegende Hydraulikkanäle aufweisenden Befestigungsschraube befestigt werden kann. Die andere Seite der Anschlusseinrichtung 132 weist eine Aufnahme zur Aufnahme der Ventileinrichtung 60 auf, die ein Ventilschließglied 61 und eine Ventilschließfeder 62 umfasst. Der Leitungsstutzen 320 entspricht im Wesentlichen dem Leitungsstutzen 20 der Fig. 1 und weist eine Aufnahme 324 für die Arretiereinrichtung 170, einen Übergangsbereich 325 zum Aufspreizen der Arretiereinrichtung 170 beim Einsetzen in das Gehäuse 30 und einen Dichtungsbereich 326 für die Dichtung 341 zur Abdichtung mit dem Druckraumgehäuse 340 auf.

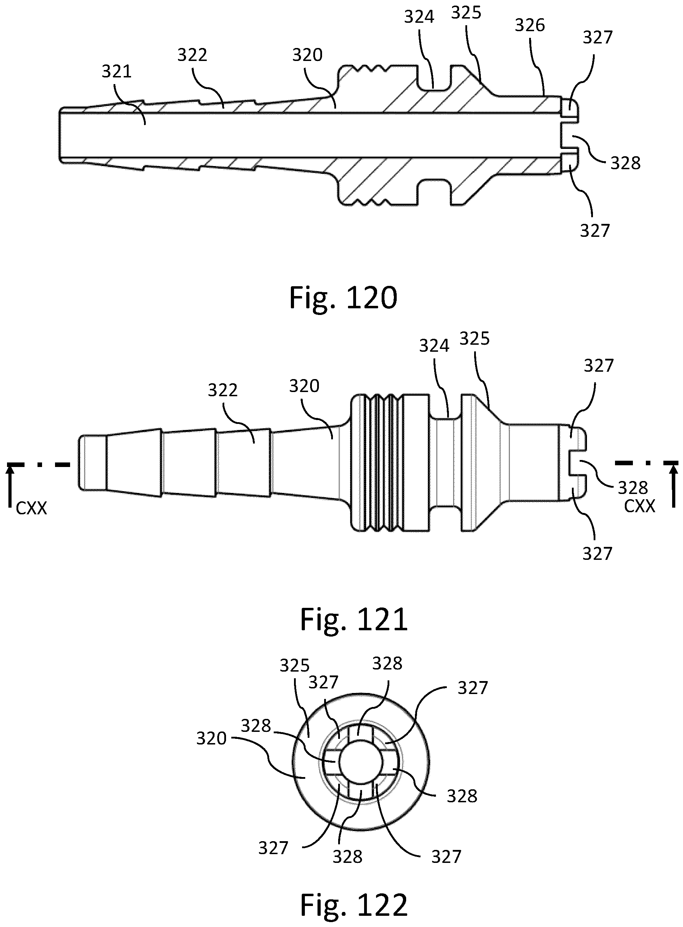

Der Leitungsstutzen 320 ist vorzugsweise entsprechend dem in den Figuren 120 bis 122 gezeigten und beschriebenen Leitungsstutzen 320 ausgebildet und weist an seiner dem Ventilschließglied 61 zugewandten Seite Aussparungen 328 und dazwischenliegende Stege 327 auf, mit denen der Leitungsstutzen 320 beim Einsetzen das Ventilschließglied 61 aus seiner Schließstellung in Anlage mit der Dichtung 341 in Richtung der Anschlusseinrichtung 132 verschiebt. Dabei kommt der Dichtungsbereich 326 in Anlage mit der Dichtung 61, so dass sehr schnell nach dem Öffnen der Dichtungseinrichtung 60 das Hydrauliksystem bzw. die Hydraulikleitungskupplung 1 wieder verschlossen ist, so dass möglichst wenig Luft eingebracht bzw. Hydraulikfluid entweichen kann. Da die Betätigung beim Einsetzen bzw. Entfernen parallel zur Schließrichtung ist, kann eine sehr schnelle Betätigung und somit eine sehr kurze Zeit erreicht werden, in der das Hydrauliksystem offen ist.

Zwischen dem Ventilraum 344 und dem Leitungsstutzen 320 ist ein Dichtungsabschnitt 348 angeordnet, der die Lage der Dichtung 341 definiert, derart, dass die Dichtung 341 zwischen dem Dichtungsbereich 326 des Leitungsstutzens 320 und dem Ventilraumgehäuse 340 abdichtet. Alternativ können das Ventilraumgehäuse 340 und der Dichtungsabschnitt 348 zweiteilig ausgebildet sein, wobei vorzugsweise bei allen Ausführungen eine Nut zur Aufnahme der Dichtung 341 vorgesehen ist.

Das Ventilraumgehäuse 340 kann auch ähnlich wie das Druckraumgehäuse 40 von Fig. 1 derart ausgebildet sein, dass Überströmkanäle an der Innenwandung ausgebildet sind und Kanäle für eine Dichtigkeitsprüfung an der Außenseite angeordnet sind. An seinem der Anschlusseinrichtung 132 zugewandten Ende kann das Ventilraumgehäuse eine Phase 346 entsprechend dem in den Figuren 131 bis 133 gezeigten Ventilraumgehäuse 240 aufweisen.

Die Arretiereinrichtung 170 ist entsprechend der in den Figuren 9 bis 14 gezeigten Arretiereinrichtung 170 ausgebildet. Alternativ könnte die Arretiereinrichtung 170 entsprechend der in den Figuren 1 bis 8 gezeigten Arretiereinrichtung 70 ausgebildet sein.

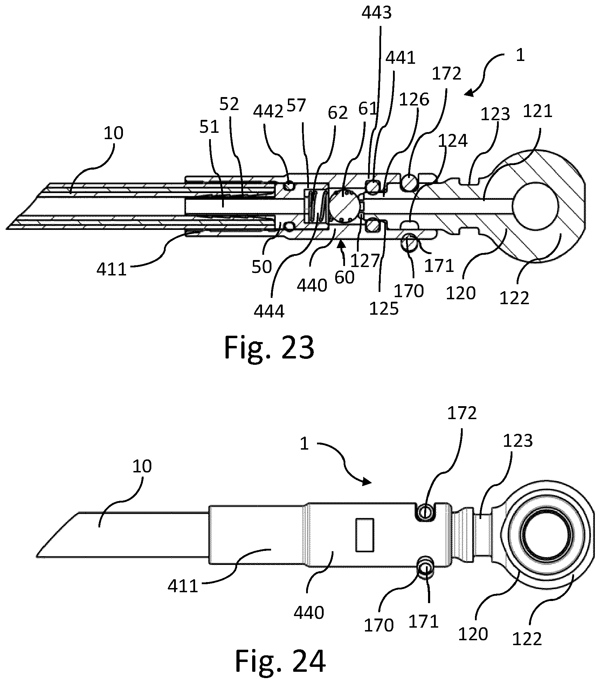

Die Figuren 23 bis 24 zeigen eine weitere Ausführungsform der Erfindung, die im Wesentlichen den anderen Ausführungsformen der Erfindung entspricht. Gleiche Bezugszeichen bezeichnen gleiche oder sich entsprechende Bauteile bzw. Merkmale. Auf die Beschreibung der anderen Ausführungsbeispiele der Erfindung wird verwiesen. Im Folgenden wird der Schwerpunkt auf die Unterschiede zu den anderen Ausführungsbeispielen der Erfindung gelegt.

Die Ausführung der Figuren 23 und 24 ist ohne Gehäuse dargestellt. Erfindungsgemäß kann es wie bei den anderen Ausführungen ausgebildet sein, wobei es an dem Befestigungsabschnitt 123 des Leitungsstutzens 120 befestigt werden kann. Alternativ kann das Gehäuse auch entfallen, denn das Druckraumgehäuse 440 ist derart ausgebildet, dass die Dichtung 441 die Hydraulikleitung 10 durch Anlage des Ventilschließglieds 61 verschließt, wenn der Leitungsstutzen 120 nicht montiert bzw. eingesetzt ist, und die Dichtung 441 verschließt auch die Hydraulikleitungskupplung 1 nach außen, wenn der Leitungsstutzen 120 eingesetzt und die Ventileinrichtung 60 geöffnet ist.

Der Leitungsstutzen 120 umfasst einen Durchgang 121 und einen Ringkopf 122, der beispielsweise auf dem Fachmann bekannte Weise an einen Nehmer einer hydraulischen Fahrradscheibenbremse mit einer Hohlschraube bzw. einer außenliegende Hydraulikkanäle aufweisenden Befestigungsschraube befestigt werden kann. Die andere Seite der Anschlusseinrichtung 122 ist entsprechend dem Leitungsstutzen 20 der Fig. 1 ausgebildet und weist eine Aufnahme 124 für die Arretiereinrichtung 170, einen Übergangsbereich 125 zum Aufspreizen der Arretiereinrichtung 170 beim Einsetzen in das Druckraumgehäuse 440 und einen Dichtungsbereich 126 für die Dichtung 441 zur Abdichtung mit dem Druckraumgehäuse 440 auf.

Das Druckraumgehäuse 440 weist einen Fortsatz mit einem Pressabschnitt 411 auf, an dem die Hydraulikleitung 10 befestigt ist.

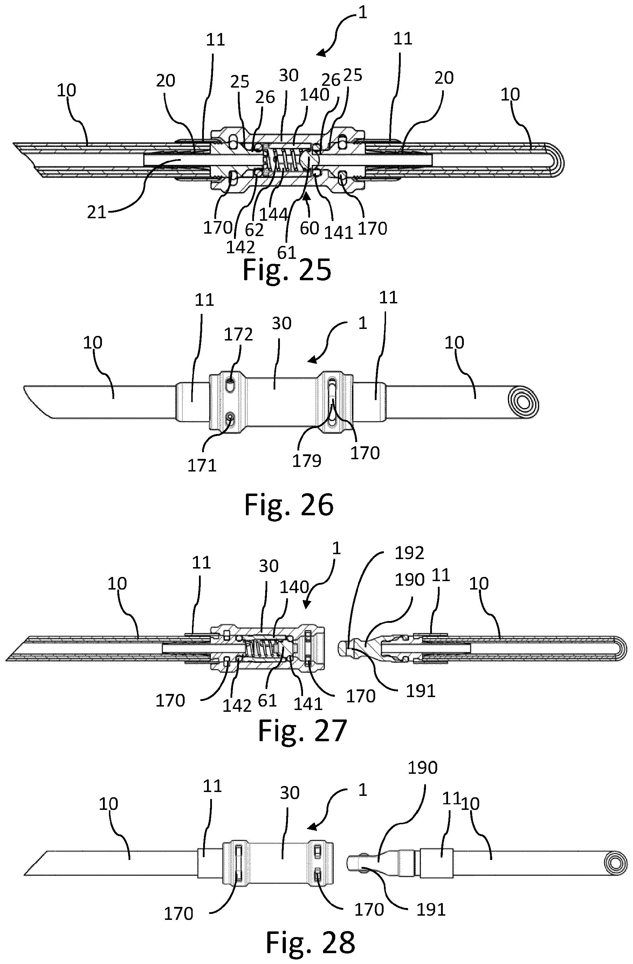

Die Figuren 25 bis 28 zeigen weitere Ausführungsformen der Erfindung, die im Wesentlichen den anderen Ausführungsformen der Erfindung entspricht. Gleiche Bezugszeichen bezeichnen gleiche oder sich entsprechende Bauteile bzw. Merkmale. Auf die Beschreibung der anderen Ausführungsbeispiele der Erfindung wird verwiesen. Im Folgenden wird der Schwerpunkt auf die Unterschiede zu den anderen Ausführungsbeispielen der Erfindung gelegt.

Bei den in den Figuren 25 bis 28 gezeigten Ausführungen sind beide Leitungsstutzen 20 entsprechend dem in Fig. 1 gezeigten linken Leitungsstutzen 20 ausgebildet und weisen einen Überganzbereich 25 auf, mit dem das Arretiereinrichtung 170 beim Einsetzen des Leitungsstutzens 20aufgespreizt werden kann.

Beide Arretiereinrichtungen 170 sind entsprechend der Arretiereinrichtung 170 der Ausführung von Fig. 9 ausgebildet. Beide Arretiereinrichtungen 170 bzw. eine der beiden Arretiereinrichtungen 170 kann alternativ auch entsprechend der Arretiereinrichtung 70 von Fig. 1 oder einer der anderen Arretiereinrichtungen ausgebildet sein.

Die in den Figuren 25 bis 26 gezeigte Ausführung weist eine Ventileinrichtung 60 mit einem kugelförmigen Schließglied 61 entsprechend Fig. 9 auf, wobei Überströmkanale an dem Druckraumgehäuse 140 bzw. wie bei Fig. 9 Stege 27 an dem Leitungsstutzen 20 vorgesehen sein können.

Die in den Figuren 27 bis 28 gezeigte Ausführung weist eine Ventileinrichtung 60 mit einem Schließglied 61 auf, das entsprechend der Ausführung der Fig. 1 ausgebildet ist, wobei in dem Schließglied 61 die Überströmkanäle ausgebildet sind.

Bei den in den Figuren 27 bis 28 gezeigten Ausführung ist eine Verschlusseinrichtung 190 an dem rechten Leitungsstutzen 20 vorgesehen, die beispielsweise als eine Schutzkappe ausgebildet sein kann, die vor dem Einsetzen des Leitungsstutzens 20 in das Gehäuse abgezogen werden kann. Die Verschlusseinrichtung 190 verhindert den Austritt von Hydraulikfluid, beispielsweise beim Transport oder der Lagerung. An der Verschlusseinrichtung 190 ist eine Sperreinrichtung 191 vorgesehen, um ein fehlerhaftes Einsetzen des Leitungsstutzens 20 mit aufgesetzter Verschlusseinrichtung 190 zu verhindern. Die Sperreinrichtung 191 kann beispielsweise als Wulst ausgebildet sein, dessen Abmessung bzw. Querschnitt so groß ist, dass er nicht in das Gehäuse 30 eingesetzt werden kann.

Im Bereich der Sperreinrichtung 191 ist eine Aufnahme 192 vorgesehen, in die beispielsweise ein Draht oder ein anderes Werkzeug eingeführt werden kann, mit dem die Hydraulikleitung beispielsweise durch ein Rahmenteil zur Verlegung bzw. Montage geführt werden kann.

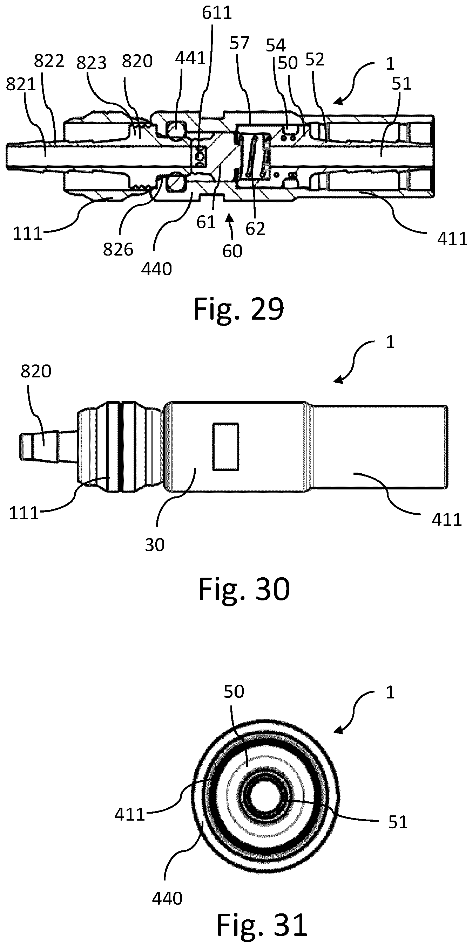

Die Figuren 29 bis 31 zeigen eine weitere Ausführungsform der Erfindung, die im Wesentlichen den anderen Ausführungsformen der Erfindung entspricht. Gleiche Bezugszeichen bezeichnen gleiche oder sich entsprechende Bauteile bzw. Merkmale. Auf die Beschreibung der anderen Ausführungsbeispiele der Erfindung wird verwiesen. Im Folgenden wird der Schwerpunkt auf die Unterschiede zu den anderen Ausführungsbeispielen der Erfindung gelegt.

Bei der Ausführung der Figuren 29 bis 31 ist ein Druckraumgehäuse 440 vorgesehen, das entsprechend der Ausführung der Figuren 23 und 24 ausgebildet sein kann. In der Ausnehmung 54 des rechten Leitungsstutzens 50 kann eine Verriegelungseinrichtung entsprechend der Verriegelungseinrichtung 80 von Fig. 1 angeordnet und/oder eine Dichtung 442 entsprechend der Ausführung von Fig. 23 angeordnet sein.

Die linke nicht dargestellte Hydraulikleitung kann mit einer Presshülse 111 an dem linken Leitungsstutzen 820 an dem Befestigungsabschnitt 823 befestigt werden, der zwischen dem Dichtungsabschnitt 826 und dem Fortsatz 822 angeordnet ist.

Das Ventilschließglied 61 kann wie gezeigt Durchgänge 611 aufweisen, um eine Hydraulikverbindung zwischen den beiden Leitungsstutzen 50 und 820 bei geöffneter Ventileinrichtung 60 zu gewährleisten.

Wie bei allen Ausführungen kann um das Druckraumgehäuse 440 ein Gehäuse 30 angeordnet sein, das beispielsweise in die Ausnehmungen eingreifen kann, die im Bereich der Ventileinrichtung 60 an dem Druckgehäuse 440 vorgesehen sind.

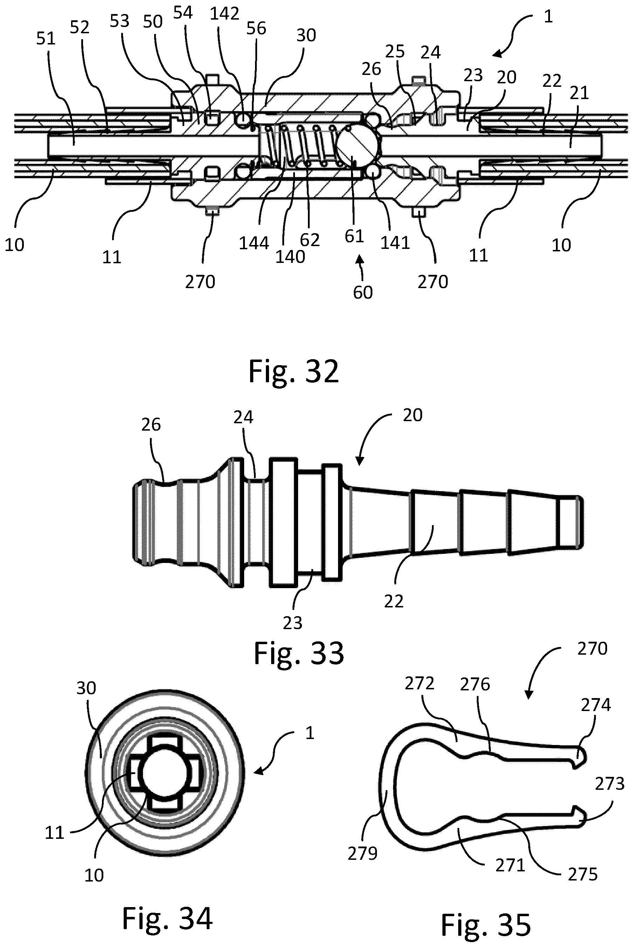

Die Figuren 32 bis 35 zeigen eine weitere Ausführungsform der Erfindung, die im Wesentlichen den anderen Ausführungsformen der Erfindung entspricht. Gleiche Bezugszeichen bezeichnen gleiche oder sich entsprechende Bauteile bzw. Merkmale. Auf die Beschreibung der anderen Ausführungsbeispiele der Erfindung wird verwiesen. Im Folgenden wird der Schwerpunkt auf die Unterschiede zu den anderen Ausführungsbeispielen der Erfindung gelegt.

Die in den Figuren 32 bis 35 gezeigte Ausführung entspricht im Wesentlichen der Ausführung der Fig. 1, wobei eine alternative Arretierungseinrichtung 270 vorgesehen ist. Wie in Fig. 35 gezeigt umfasst die Arretierungseinrichtung 270 zwei Beine 271 und 272, die mit einem Verbindungsabschnitt 279 verbunden sind. An den Enden der Beine 271, 272 sind jeweils Sicherungsabschnitte 275, 276 vorgesehen, die den entsprechenden Leitungsstutzen 20, 50 nach dem Einsetzen hintergreifen, damit die Arretierungseinrichtung gegen ein Herausnehmen gesichert ist. Die Beine 271, 272 weisen in der Mitte Aufnahmeabschnitte 273, 274 zur Aufnahme der Leitungsstutzen 20, 50 im Bereich der Aufnahmen 24, 54 auf, in die die Beine 271, 272 angeordnet werden.

Fig. 32 zeigt die Hydraulikleitungskupplung in einem Zustand, bei dem der Leitungsstutzen nur teilweise in das Gehäuse 140 eingebracht ist, derart, dass die Ventileinrichtung 60 noch nicht betätigt ist, so dass das Ventilschließglied an der Dichtung 141 anliegt.

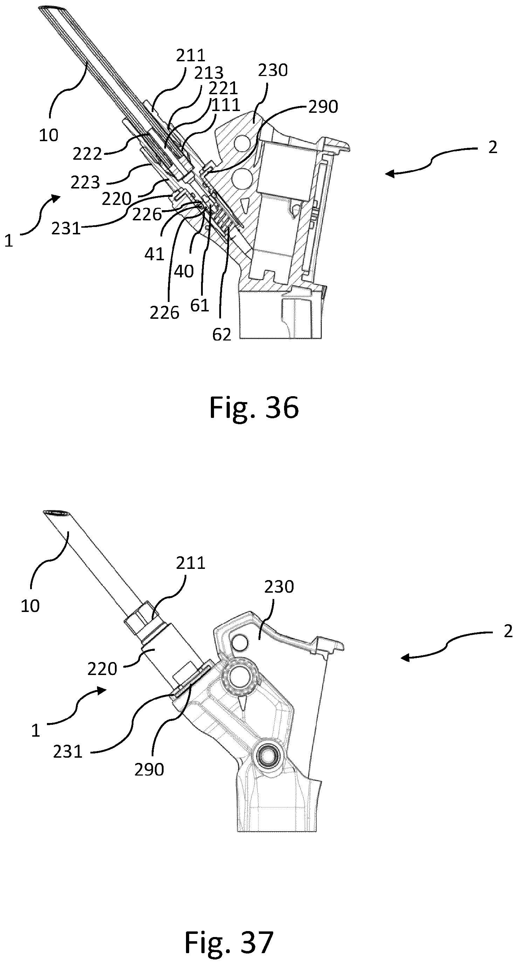

Die Figuren 36 bis 37 zeigen eine weitere Ausführungsform der Erfindung, die im Wesentlichen den anderen Ausführungsformen der Erfindung entspricht. Gleiche Bezugszeichen bezeichnen gleiche oder sich entsprechende Bauteile bzw. Merkmale. Auf die Beschreibung der anderen Ausführungsbeispiele der Erfindung wird verwiesen. Im Folgenden wird der Schwerpunkt auf die Unterschiede zu den anderen Ausführungsbeispielen der Erfindung gelegt.

Bei der Ausführung von Fig. 36 ist die Hydraulikleitungskupplung 1 in einer Gebervorrichtung 2 angeordnet, die beispielsweise die Gebervorrichtung einer hydraulischen Fahrradbremse sein kann. Die dem Fachmann bekannten Komponenten der Gebervorrichtung, wie beispielsweise die Komponenten des Druckzylinders sind nicht dargestellt. Die Gebervorrichtung 2 umfasst ein Gehäuse 230, in dem ein Druckraumgehäuse 40 angeordnet ist, dass mit einer Dichtung 41 zu dem Leitungsstutzen 220 abgedichtet ist.

Der Leitungsstutzen 220 ist mit einer Arretiereinrichtung 70 entsprechend der Ausführung von Fig. 1 an dem Gehäuse 230 formschlüssig gesichert. Der Leitungsstutzen 220 ist zweiteilig aufgebaut und umfasst ein Teil mit dem Fortsatz 222, das mit einer Presshülse 111 an dem Leitungsstutzen 220 befestigt ist. Der Leitungsstutzen umfasst einen Befestigungsabschnitt 223 mit einem Innengewinde, in das eine Presshülse 211 eingeschraubt ist, die ein entsprechendes Außengewinde an einem Befestigungsabschnitt 213 aufweist.

Die Hydraulikleitungskupplung umfasst weiter eine Verschlusseinrichtung 290, mit der der Leitungsstutzen 220 in dem Gehäuse gesichert werden kann. Beispielsweise kann die Verschlusseinrichtung 290 als Drehverschluss ähnlich einen Bajonettverschluss ausgebildet sein, der beispielweise zwei Fortsätze aufweist, die unter eine entsprechende Klemmeinrichtung 231 gedreht werden können, um die Verschlusseinrichtung 240 an dem Gehäuse 230 zu sichern bzw. zu verriegeln, um ein unbeabsichtigtes Lösen zu verhindern.

Die Verschlusseinrichtung 290 ist derart angeordnet und ausgebildet, dass sie gleichzeitig als Abstützung bzw. Sicherung für die Dichtung 41 dient, beispielsweise indem das Ende die Verschlusseinrichtung 290 eine Seite einer Nut definiert, in der die Dichtung 41 aufgenommen ist.

Die Verschlusseinrichtung 290 ist derart drehbar in dem Gehäuse angeordnet, dass sie um etwa 90 Grad in eine Lösestellung gedreht werden kann, in der die Arretiereinrichtung 70 aus dem Leitungsstutzen bzw. der Leitungsstutzen 220 aus dem Gehäuse 230 entfernt werden kann, damit die Hydraulikleitung 10 von dem Gehäuse 230 getrennt bzw. daran angeschlossen werden kann.

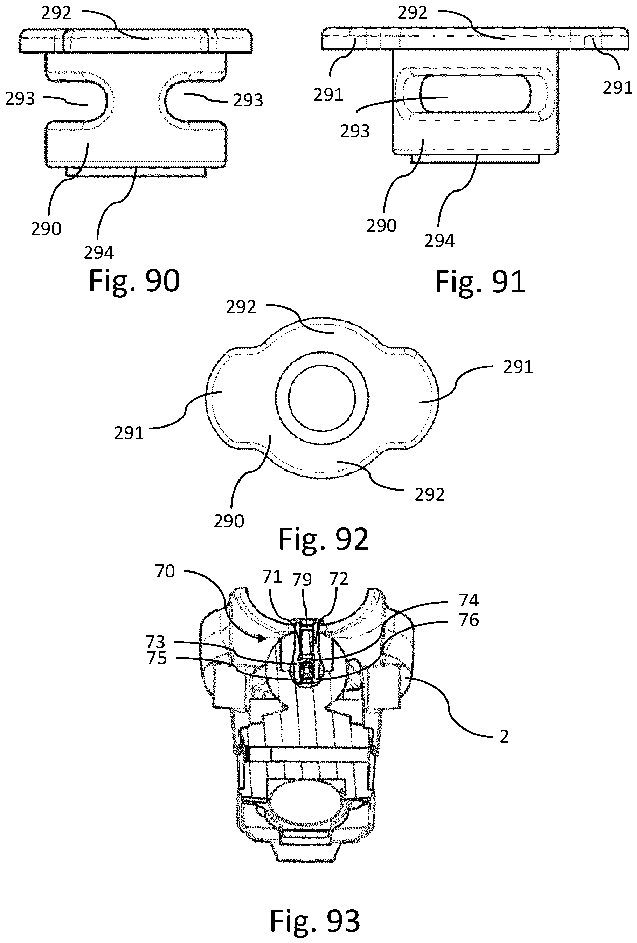

Die Verschlusseinrichtung 290 kann entsprechend der in den Figuren 90 bis 92 gezeigten Verschlusseinrichtung 290 ausgebildet sein.

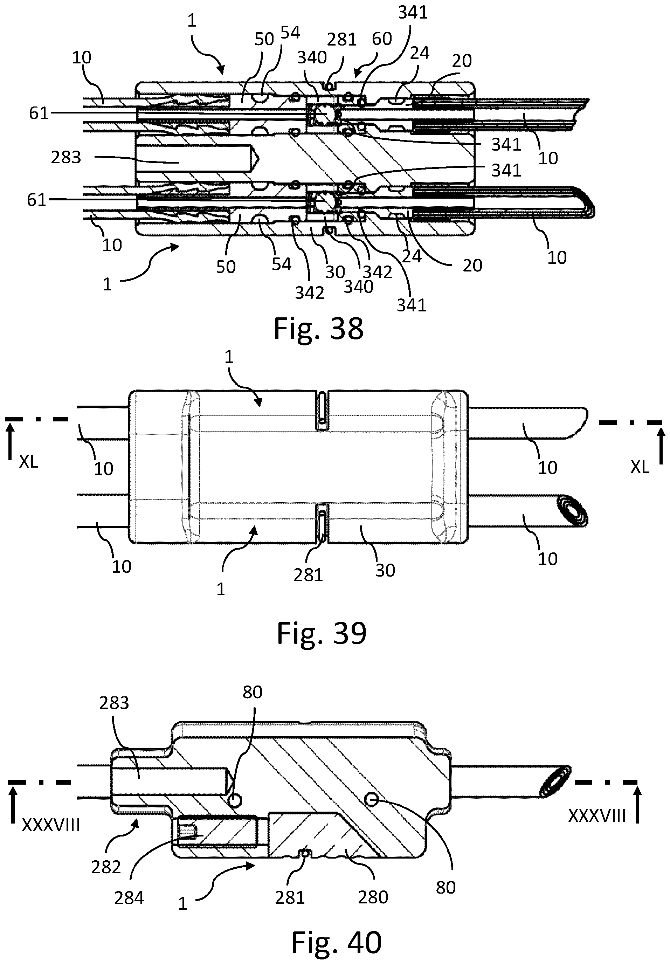

Die Figuren 38 bis 41 zeigen eine weitere Ausführungsform der Erfindung, die im Wesentlichen den anderen Ausführungsformen der Erfindung entspricht. Gleiche Bezugszeichen bezeichnen gleiche oder sich entsprechende Bauteile bzw. Merkmale. Auf die Beschreibung der anderen Ausführungsbeispiele der Erfindung wird verwiesen. Im Folgenden wird der Schwerpunkt auf die Unterschiede zu den anderen Ausführungsbeispielen der Erfindung gelegt.

Die in den Figuren 38 bis 41 gezeigte Ausführung weist zwei Hydraulikleitungskupplungen 1 auf, die entsprechend der Ausführung von Fig. 1 ausgebildet sind. Die jeweiligen Leitungsstutzen 20 können durch Anordnung von Arretiereinrichtungen 70 in die Aufnahmen 24 gegenüber dem dem Gehäuse 30 gesichert werden, d.h. über einen mittelbaren Formschluss, der wie oben beschrieben ausgebildet wird. Ebenso können die jeweiligen Leitungsstutzen 50 über Verrigelungseinrichtungen 80 gesichert werden, die in die Aufnahmen 54 eingreifen.

Im Unterschied zu der Ausführung von Fig. 1 sind die beiden Hydraulikleitungskupplungen in einem gemeinsamen Gehäuse 30 angeordnet. Das Gehäuse 230 weist eine Klemmeinrichtung 280 auf, die mit einer Sicherungseinrichtung 281 an dem Gehäuse gesichert ist, die beispielweise einen Sicherungsbügel umfassen kann. Die Klemmeinrichtung 280 weist einen Keil auf, der mit einer Spanneinrichtung 282 derart verspannt werden kann, das sich das Gehäuse mit der Klemmeinrichtung in einem Rohr verklemmen kann.

Die Klemmeinrichtung 280 bzw. das Gehäuse 30 mit der Klemmeinrichtung 280 kann dabei eine Doppelfunktion aufweisen, wenn das Gehäuse 30 in einem Lenkerschaftrohr 4 angeordnet ist, das gegenüber einen Rahmenrohr des Fahrzeugs verklemmt werden soll. Durch die Klemmeinrichtung 280 kann das Lenkerschaftrohr 4 gegenüber dem Rahmenrohr verklemmt und gleichzeitig das Gehäuse 30 bzw. die Hydraulikleitungskupplungen 1 gegenüber dem Lenkerschaftrohr 4 verklemmt werden. Die Spanneinrichtung 282 kann eine Gewindebohrung 283 in dem Gehäuse 30 umfassen, in die eine Gewindeschraube 285 zur Befestigung in einem Lenkerschaftrohr 4 eingeschraubt werden kann. Beim Einschrauben in die Gewindebohrung rutscht die Klemmeinrichtung 280 infolge der keilartigen Rampe radial nach außen und verklemmt das Gehäuse 30 in dem Lenkerschaftrohr 4.

In dem Gehäuse 30 ist eine Einstelleinrichtung 284 vorgesehen, mit der die Klemmeinrichtung 280 in dem Rohr fixiert werden kann, um die Krallenfunktion der Klemmeinrichtung 280 an verschiedene Durchmesser des Lenkerschaftrohrs anpassen zu können. Durch Verdrehen der Einstelleinrichtung 284 kann die bei der gezeigten Ausführung als Keil ausgebildete Klemmeinrichtung radial nach außen bzw. nach innen verstellt werden, so dass eine Anpassung an den Durchmesser des Rohrs erfolgen kann, in dem das Gehäuse 30 eingeklemmt werden. Nach der Anpassung kann die Spanneinrichtung 282 angezogen werden, beispielsweise durch eine Spannschraube 285, die in die Gewindebohrung 283 eingesetzt wird.

Die in Fig. 38 rechten Leitungsstuzen 20 entsprechen im Wesentlichen dem Leitungsstuzen 20 von Fig. 1 während die linken Leitungsstutzen 50 im Wesentlichen den Leitungsstutzen 50 von Fig. 1 entsprechen. Das Ventilraumgehäuse 340 entspricht im Wesentlichen dem Ventilraumgehäuse von Fig. 18, wobeio dieses durch eine der Dichtung 342 entsprechende weitere Dichtung 341 gegen das Gehäuse 30 abgedichtet sein kann.

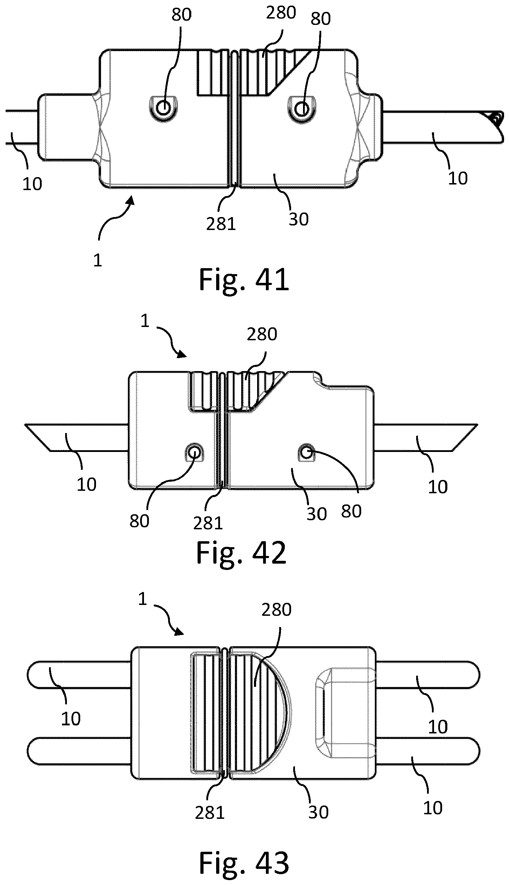

Die Figuren 42 bis 45 zeigen eine weitere Ausführungsform der Erfindung, die im Wesentlichen den anderen Ausführungsformen der Erfindung entspricht. Gleiche Bezugszeichen bezeichnen gleiche oder sich entsprechende Bauteile bzw. Merkmale. Auf die Beschreibung der anderen Ausführungsbeispiele der Erfindung wird verwiesen. Im Folgenden wird der Schwerpunkt auf die Unterschiede zu den anderen Ausführungsbeispielen der Erfindung gelegt.

Die Ausführung der Figuren 42 bis 45 entspricht der Ausführung der Figuren 38 bis 41 bis auf ein kürzer ausgebildetes Gehäuse 30, in dem andere bzw. kürzere Arretierungseinrichtungen 170 statt der längeren Arretierungseinrichtungen 70 aufgenommen werden können.

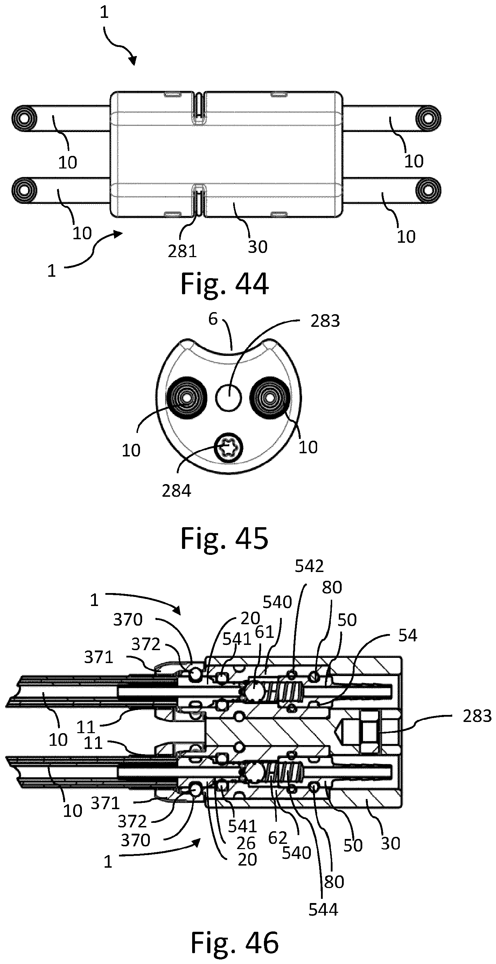

Die Figuren 46 bis 50 zeigen eine weitere Ausführungsform der Erfindung, die im Wesentlichen den anderen Ausführungsformen der Erfindung entspricht. Gleiche Bezugszeichen bezeichnen gleiche oder sich entsprechende Bauteile bzw. Merkmale. Auf die Beschreibung der anderen Ausführungsbeispiele der Erfindung wird verwiesen. Im Folgenden wird der Schwerpunkt auf die Unterschiede zu den anderen Ausführungsbeispielen der Erfindung gelegt.

Die Ausführung der Figuren 46 bis 50 entspricht im Wesentlichen den Ausführungen der Figuren 38 bis 41 bzw. 42 bis 45, weist aber andere Arretierungseinrichtungen 370 auf. Die Arretierungseinrichtungen 370 umfassen Verrieglungsglieder 372, die beispielsweise als Kugeln ausgebildet sein können, die in einer Drehkappe 371 angeordnet sind, derart, dass die Kugeln beim Verdrehen der Drehkappe 371 sich zwischen radial weiter innen liegenden und radial weiter außen liegenden Stellungen bewegen. Dadurch können beim Verdrehen der Drehkappe 371 die Kugeln in eine Stellung gebracht werden, in der sie die Leitungsstutzen 20 klemmen, in dem sie in entsprechende Aufnahmen eingebracht werden. Zum Lösen können die Drehkappen 371 in die andere Richtung gedreht werden, so dass die Kugeln radial weiter außen angeordnet werden, so dass der entsprechende Leitungsstutzen 20 aus dem Gehäuse 30 entfernt werden kann.

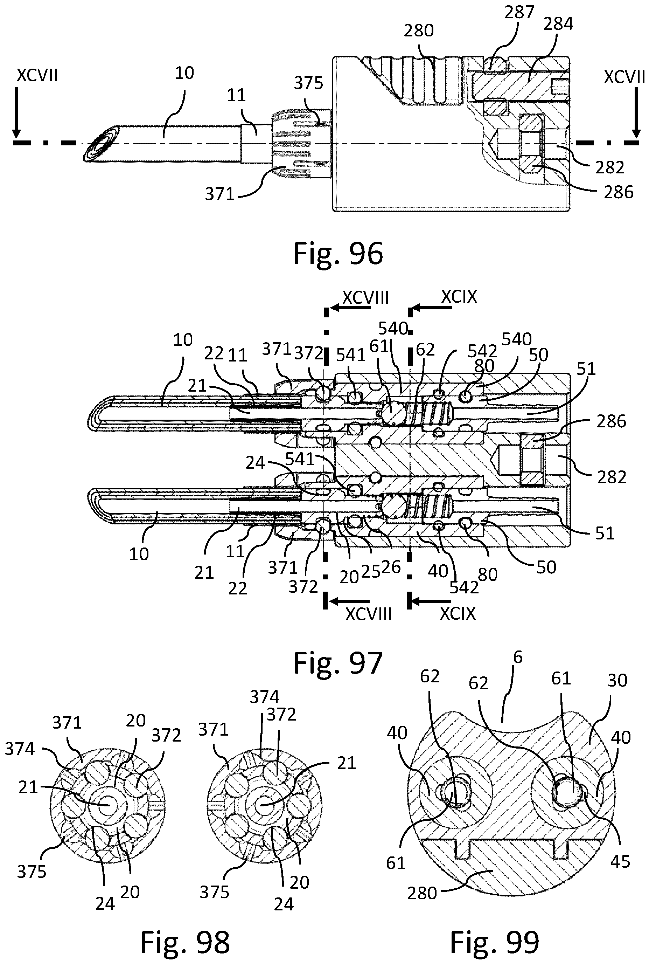

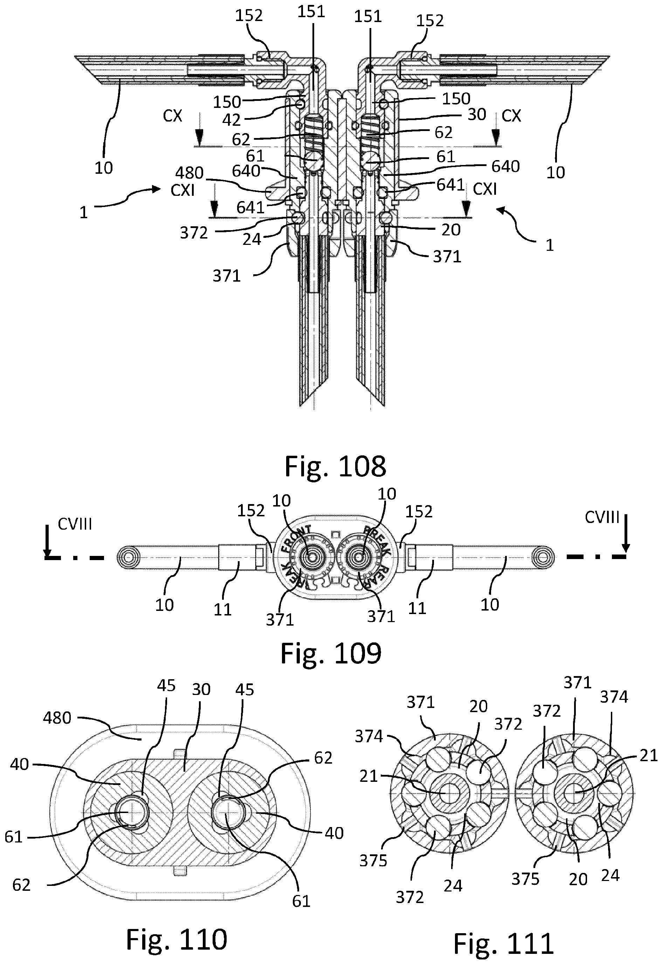

Die Arretierungseinrichtungen 370 können beispielsweise gemäß den in Fig. 98 bzw. in Fig. 111 gezeigten Arretierungseinrichtungen 370 ausgebildet sein.

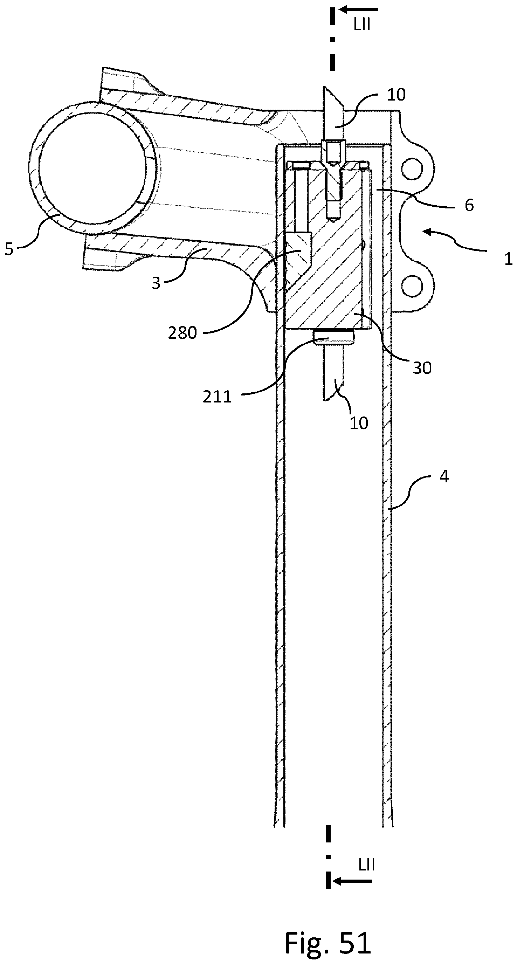

Die Figuren 51 bis 52 zeigen eine weitere Ausführungsform der Erfindung, die im Wesentlichen den anderen Ausführungsformen der Erfindung entspricht. Gleiche Bezugszeichen bezeichnen gleiche oder sich entsprechende Bauteile bzw. Merkmale. Auf die Beschreibung der anderen Ausführungsbeispiele der Erfindung wird verwiesen. Im Folgenden wird der Schwerpunkt auf die Unterschiede zu den anderen Ausführungsbeispielen der Erfindung gelegt.

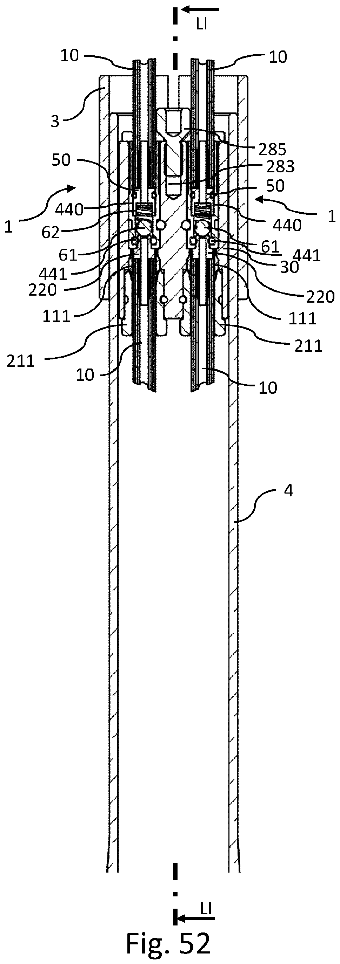

Der Leitungsstutzen 220 der Ausführung der Figuren 51 bis 52 entspricht im Wesentlichen dem Leitungsstutzen 220 der Ausführung der Figuren 365 bis 37. Das Gehäuse 30 mit zwei Hydraulikleitungskupplungen 1 ist in dem Lenkerschaftrohr 4 angeordnet. Mit der in Fig. 52 dargestellten Spannschraube 285 kann die Klemmeinrichtung 280 betätigt werden, um das Gehäuse 30 gegen die Innenwandung des Lenkerschaftrohrs 4 zu klemmen. An dem Gehäuse 30 ist wie bei den obigen Ausführungen ein Durchgang 6 vorgesehen, durch den beispielsweise Kabel zur Signalübertragung bzw. für Leuchtmittel geführt werden können.

Die beiden Druckraumgehäuse 440 der beiden Hydraulikleitungskupplungen 1 können beispielsweise entsprechend der Ausführung der Fig. 29 ausgebildet sein.

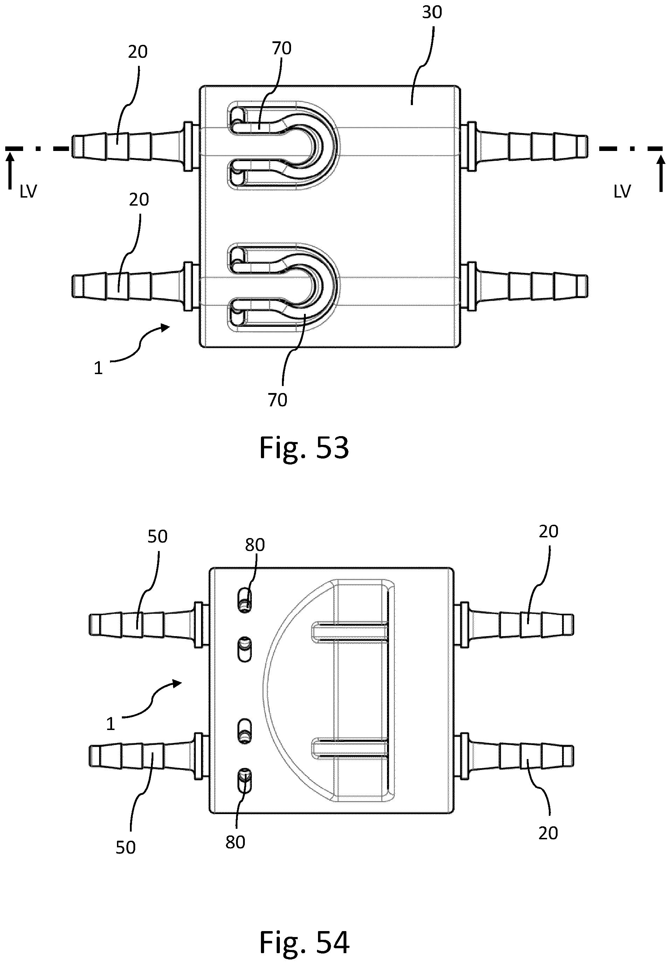

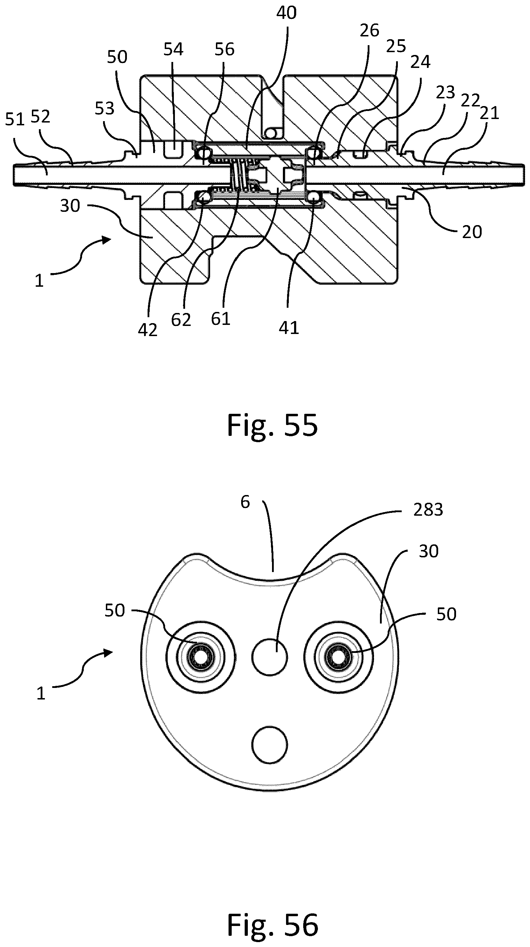

Die Figuren 53 bis 56 zeigen eine weitere Ausführungsform der Erfindung, die im Wesentlichen den anderen Ausführungsformen der Erfindung entspricht. Gleiche Bezugszeichen bezeichnen gleiche oder sich entsprechende Bauteile bzw. Merkmale. Auf die Beschreibung der anderen Ausführungsbeispiele der Erfindung wird verwiesen. Im Folgenden wird der Schwerpunkt auf die Unterschiede zu den anderen Ausführungsbeispielen der Erfindung gelegt.

Die Ausführung der Figuren 53 bis 56 weist ein gemeinsames Gehäuse 30 auf, in dem zwei Hydraulikleitungskupplungen 1 vorgesehen sind. Diese weisen jeweils einen Leitungsstutzen 20, der mit einer Arretierungseinrichtung 70 entsprechend der Figuren 4 bis 8 in dem Gehäuse gesichert ist, und einen Leitungsstutzen 50 auf, der mit Verriegelungseinrichtungen 80 in dem Gehäuse gesichert ist. Das Gehäuse kann in einem Lenkerschaftrohr 4 verkeilt werden und weist einen Durchgang 6 für die Verlegung von elektrischen Kabeln auf. Zwischen den Leitungsstutzen 20 und 50 ist ein Druckraum 44 vorgesehen, der von einem Druckraumgehäuse 40 eingeschlossen ist.

Die beiden Druckraumgehäuse 40 der beiden Hydraulikleitungskupplungen 1 können beispielsweise entsprechend der Ausführung der Fig. 1 ausgebildet sein.

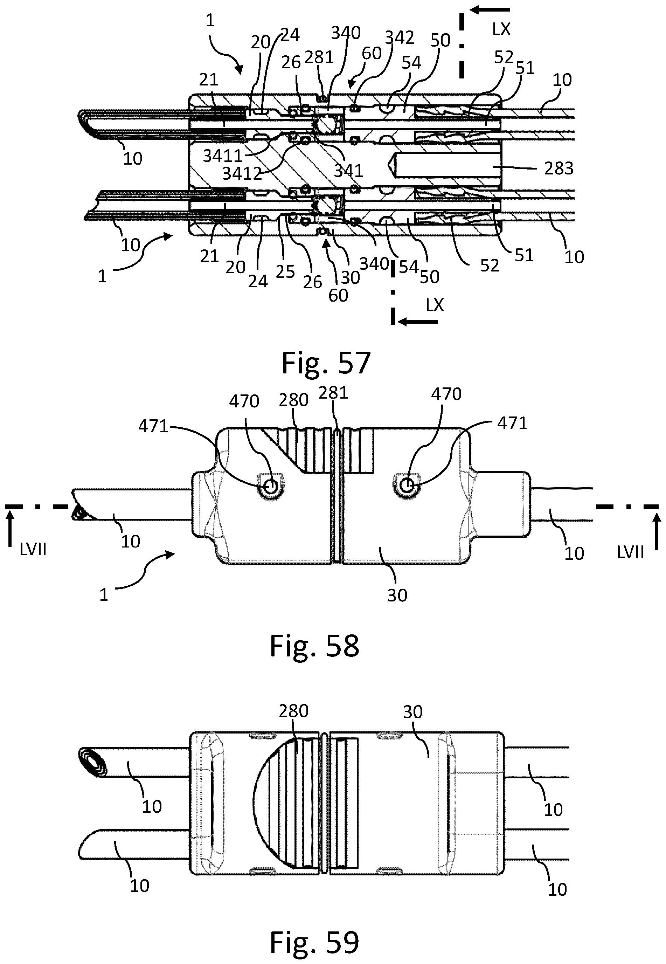

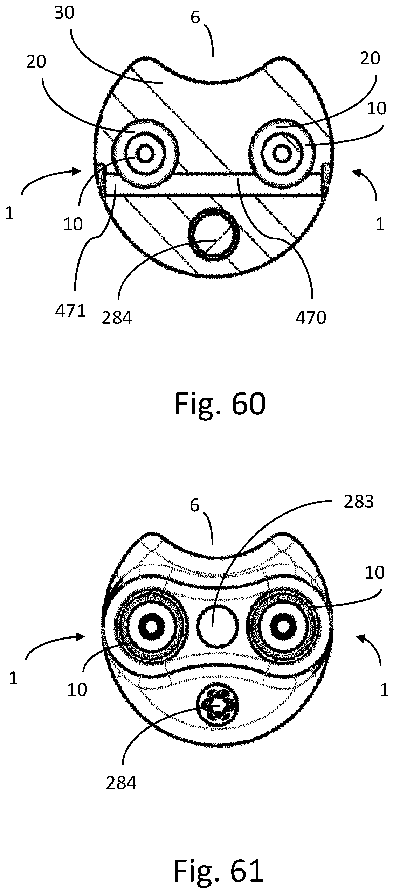

Die Figuren 57 bis 61 zeigen eine weitere Ausführungsform der Erfindung, die im Wesentlichen den anderen Ausführungsformen der Erfindung entspricht. Gleiche Bezugszeichen bezeichnen gleiche oder sich entsprechende Bauteile bzw. Merkmale. Auf die Beschreibung der anderen Ausführungsbeispiele der Erfindung wird verwiesen. Im Folgenden wird der Schwerpunkt auf die Unterschiede zu den anderen Ausführungsbeispielen der Erfindung gelegt.

Die Ausführung der Figuren 57 bis 61 entspricht im Wesentlichen den Ausführungen der Figuren 38 bis 41 bzw. 42 bis 45, weist aber andere Arretierungseinrichtungen 470 auf. Die Arretierungseinrichtung 470 umfasst einen Stift 471, der gleichzeitig beide Leitungsstutzen 20 der beiden Hydraulikleitungskupplungen 1 sichert, die in einem gemeinsamen Gehäuse 30 angeordnet sind. Der Stift 471 ist in entsprechenden Aufnahmen 24 an den Leitungsstutzen 20 angeordnet und ist ebenfalls in einem Durchgang 37 in dem Gehäuse 30 angeordnet.

Die beiden Leitungsstutzen 50 der beiden Hydraulikleitungskupplungen 1 sind ebenfalls mit einer entsprechenden gemeinsamen Arretierungseinrichtung 470 gesichert, die einen Stift 471 umfasst. Der Stift 471 ist in entsprechenden Aufnahmen 54 an den Leitungsstutzen 50 angeordnet und ist ebenfalls in einem Durchgang 37 in dem Gehäuse 30 angeordnet.

Die beiden Druckraumgehäuse 340 der beiden Hydraulikleitungskupplungen 1 können beispielsweise entsprechend der Ausführung der Fig. 18 ausgebildet sein.

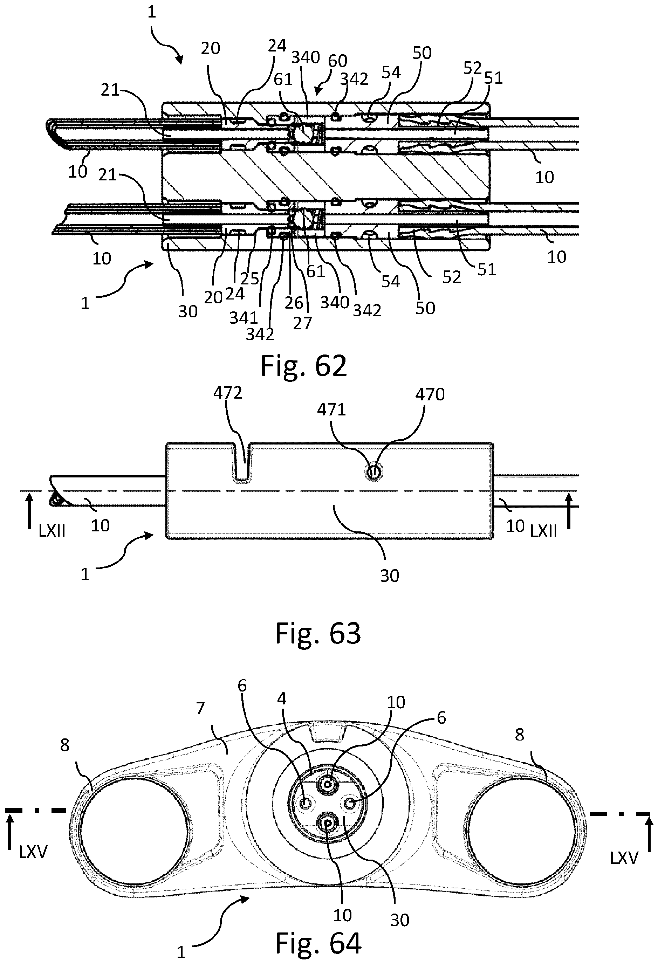

Die Figuren 62 bis 65 zeigen eine weitere Ausführungsform der Erfindung, die im Wesentlichen den anderen Ausführungsformen der Erfindung entspricht. Gleiche Bezugszeichen bezeichnen gleiche oder sich entsprechende Bauteile bzw. Merkmale. Auf die Beschreibung der anderen Ausführungsbeispiele der Erfindung wird verwiesen. Im Folgenden wird der Schwerpunkt auf die Unterschiede zu den anderen Ausführungsbeispielen der Erfindung gelegt.

Bei der Ausführung der Figuren 62 bis 65 ist keine Klemmvorrichtung 280 vorgesehen. Die beiden Leitungsstutzen 50 der beiden Hydraulikleitungskupplungen 1, die in einem gemeinsamen Gehäuse 30 vorgesehen sind, sind mit einer gemeinsamen Arretierungseinrichtung 470, die einen Stift 471 umfasst, in dem Gehäuse 30 gesichert. Die beiden Leitungsstutzen 20 können durch eine Arretierungseinrichtung gesichert werden, die in einer Aufnahme 472 angeordnet werden kann, die in dem Gehäuse 30 vorgesehen ist.

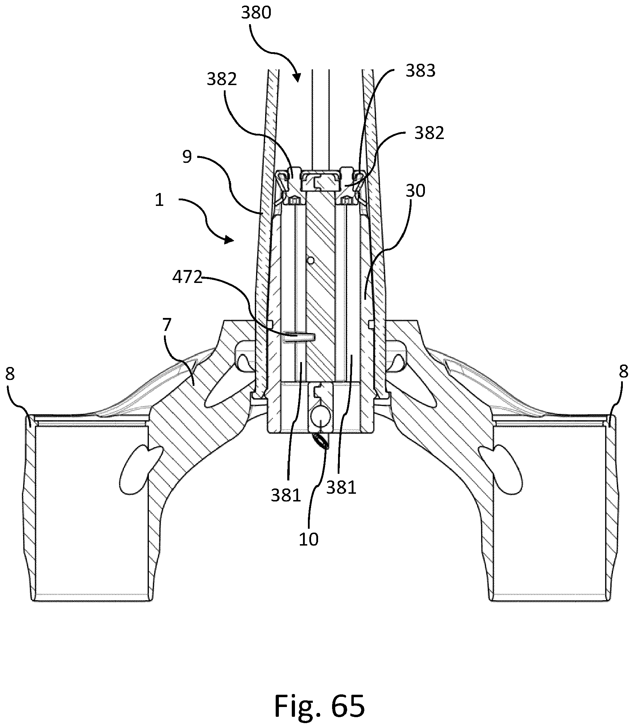

Fig. 65 zeigt, wie die Hydraulikleitungskupplung von Fig. 62 in einer Gabelbrücke 7, die zwei Gabelbeine 8 verbindet, bzw. in dem Schaft 9 angeordnet werden kann, der sich von der Gabelbrücke 7 in Richtung Lenker erstreckt und mit dem Lenkerschaftrohr 6 verbindbar ist. Eine Klemmvorrichtung 380 ist vorgesehen, die zwei Klemmschrauben 382 umfasst, die eine Federvorrichtung 383 gegen die Innenwandung des Schafts 9 spannen können. Zur Betätigung der Klemmschrauben 382 sind in dem Gehäuse Durchgänge 381 vorsehen, in die ein geeignetes Werkzeug eingreifen kann.

Die beiden Druckraumgehäuse 340 der beiden Hydraulikleitungskupplungen 1 können beispielsweise entsprechend der Ausführung der Fig. 18 ausgebildet sein.

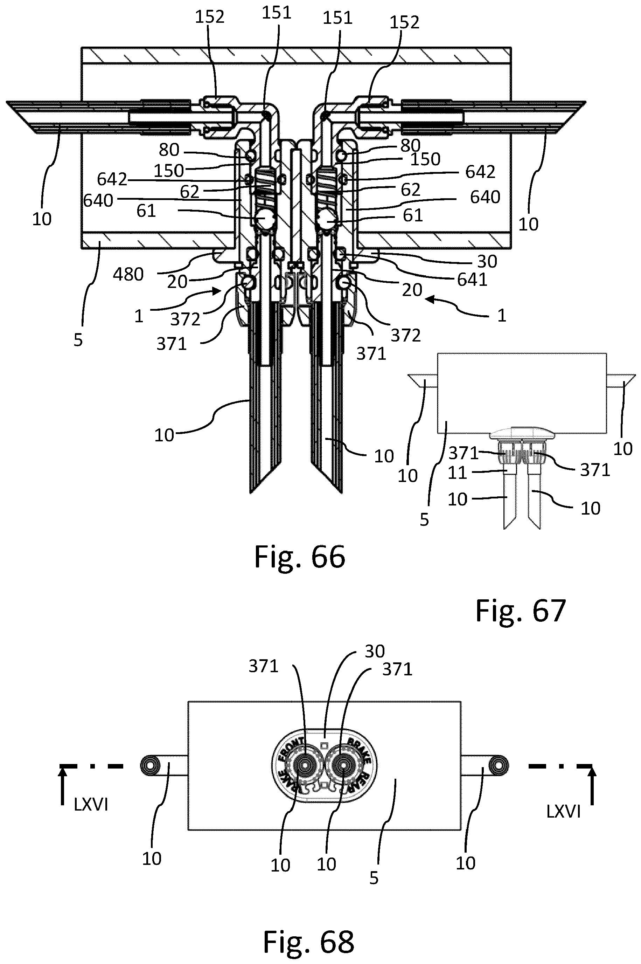

Die Figuren 66 bis 68 zeigen eine weitere Ausführungsform der Erfindung, die im Wesentlichen den anderen Ausführungsformen der Erfindung entspricht. Gleiche Bezugszeichen bezeichnen gleiche oder sich entsprechende Bauteile bzw. Merkmale. Auf die Beschreibung der anderen Ausführungsbeispiele der Erfindung wird verwiesen. Im Folgenden wird der Schwerpunkt auf die Unterschiede zu den anderen Ausführungsbeispielen der Erfindung gelegt.

Die Ausführung der Figuren 66 bis 68 entspricht im Wesentlichen der Ausführung der Figuren 46 bis 50, die in einem Lenkerrohr 5 angeordnet ist. Das Gehäuse 30 ist an dem Lenkerrohr 5 befestigt. In dem Gehäuse 30 sind zwei Hydraulikleitungskupplungen 1 vorgesehen. Diese weisen jeweils einen Winkelleitungsverbinder 150 mit einem Winkelabschnitt 151 auf, der die Richtung der Hydraulikleitung um etwa 90 Grad ändert, derart, dass die Hydraulikleitung in dem Lenkerrohr 5 verlaufen kann. Der Winkelleitungsverbinder 150 weist an seinem Ende eine Leitungsstutzenaufnahme 152 auf, an dem ein Leitungsstutzen zur Verbindung mit einer Hydraulikleitung 10 befestigt werden kann.

Die beiden Druckraumgehäuse 640 der beiden Hydraulikleitungskupplungen 1 können beispielsweise entsprechend der Druckraumgehäuse 540 der Fig. 46 ausgebildet sein.

Das Gehäuse 30 weist einen Flansch 480 auf, mit dem es an dem Lenkerrohr 5 auf dem Fachmann bekannten Weise angeflanscht werden kann.

Die Arretierungseinrichtungen 370 können beispielsweise gemäß den in Fig. 98 bzw. in Fig. 111 gezeigten Arretierungseinrichtungen 370 ausgebildet sein.

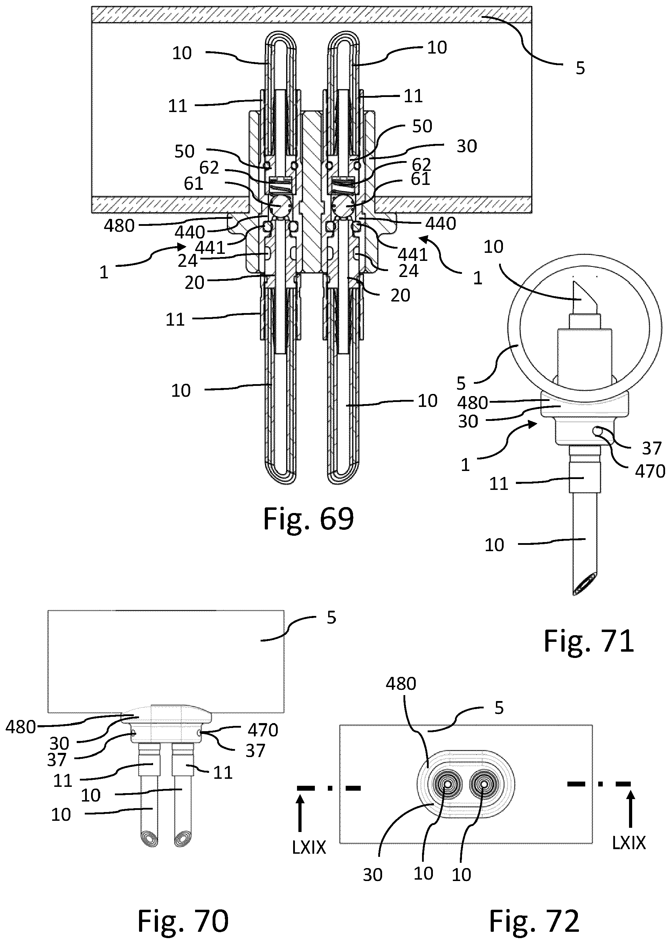

Die Figuren 69 bis 72 zeigen eine weitere Ausführungsform der Erfindung, die im Wesentlichen den anderen Ausführungsformen der Erfindung entspricht. Gleiche Bezugszeichen bezeichnen gleiche oder sich entsprechende Bauteile bzw. Merkmale. Auf die Beschreibung der anderen Ausführungsbeispiele der Erfindung wird verwiesen. Im Folgenden wird der Schwerpunkt auf die Unterschiede zu den anderen Ausführungsbeispielen der Erfindung gelegt.

Die Ausführung der Figuren 69 bis 72 entspricht im Wesentlichen der Ausführung der Figuren 1 bis 8, wobei 2 Hydraulikleitungskupplungen 1 in einem gemeinsamen Gehäuse 30 vorgesehen sind, das an einem Lenkerrohr 5 angeordnet ist. Die Hydraulikleitungen 10 werden dabei in das Lenkerrohr 5 hereingeführt und können auf der anderen Seite aus dem Lenkerrohr 5 wieder herausgeführt werden oder durch Biegen der Hydraulikleitung in dem Lenkerrohr 5 verlegt werden. Das Gehäuse 30 weist einen Flansch 480 auf, mit dem es sich an dem Lenkerohr 5 abstützen kann. Die beiden Leitungsstutzen 20 sind mit einer gemeinsamen Arretierungseinrichtung 470 an dem Gehäuse 30 gesichert, die einen Stift 471 umfasst, der durch Durchgänge 37 in dem Gehäuse 30 geführt ist. Die beiden Leitungsstutzen 50 sind in den jeweiligen Druckraumgehäusen 40 mit einer Presspassung angeordnet. Alternativ können sie auch wie in der Ausführung von Fig. 1 jeweils mit einer Verriegelungseinrichtung 80 und/oder einer gemeinsamen Verriegelungseinrichtung in dem Gehäuse gesichert werden.

Die beiden Druckraumgehäuse 440 der beiden Hydraulikleitungskupplungen 1 können beispielsweise entsprechend der Druckraumgehäuse 440 der Fig. 23 ausgebildet sein.

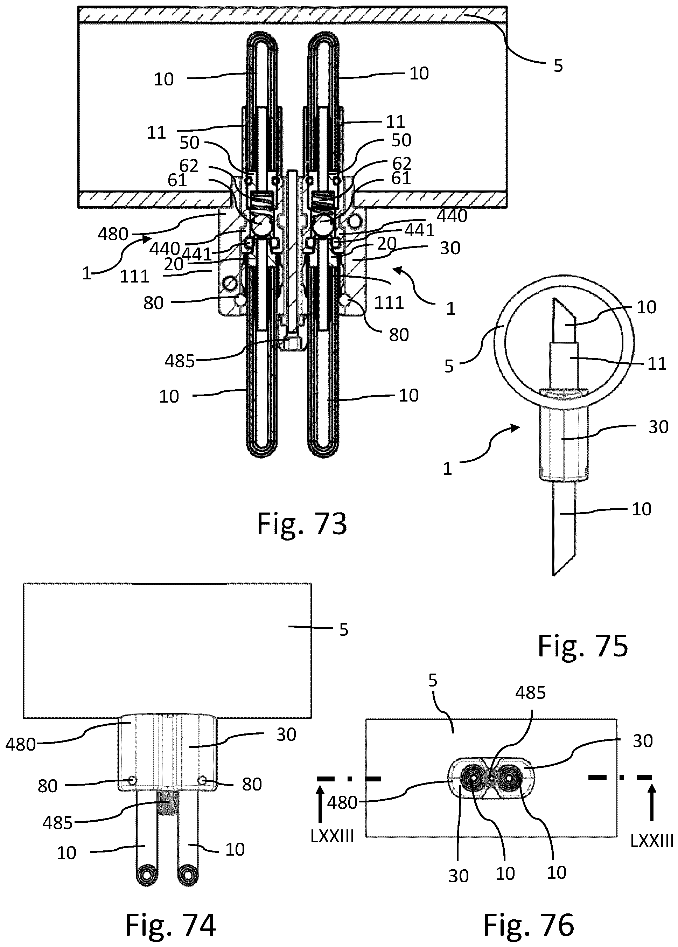

Die Figuren 73 bis 76 zeigen eine weitere Ausführungsform der Erfindung, die im Wesentlichen den anderen Ausführungsformen der Erfindung entspricht. Gleiche Bezugszeichen bezeichnen gleiche oder sich entsprechende Bauteile bzw. Merkmale. Auf die Beschreibung der anderen Ausführungsbeispiele der Erfindung wird verwiesen. Im Folgenden wird der Schwerpunkt auf die Unterschiede zu den anderen Ausführungsbeispielen der Erfindung gelegt.

Die Ausführung der Figuren 73 bis 76 entspricht im Wesentlichen der Ausführung der Figuren 69 bis 72. Im Unterschied dazu ist das Gehäuse 30 im Wesentlichen außerhalb des Lenkerrohrs 5 angeordnet. Außerdem ist eine Spannschraube 485 vorgesehen, mit der das Gehäuse 30 an dem Lenkerrohr angebracht werden kann. Bei dieser Ausführung sind die unteren Leitungen 10 mit Presshülsen an den Leitungsstutzen 20 angebracht. Alternativ können die Hydraulikleitungen auch wie beispielsweise bei der Ausführung der Figuren 69 bis 72 mit einer Hülse angebracht werden, die an einen Befestigungsabschnitt 23 der Leitungsstutzen 20 angreift. Bei dieser Ausführung sind die Leitungsstutzen 20 mit Verriegelungseinrichtungen 80 entsprechend der Ausführung von Fig. 1 einzeln im Gehäuse 30 gesichert. Die anderen beschriebenen Varianten mit den Arretierungseinrichtungen 70, 170 etc. sind ebenfalls zur Sicherung der Leitungsstutzen 20 in dem Gehäuse 30 denkbar.

Die beiden Druckraumgehäuse 440 der beiden Hydraulikleitungskupplungen 1 können beispielsweise entsprechend der Druckraumgehäuse 440 der Fig. 23 bzw. der Druckraumgehäuse 640 der Fig. 66 ausgebildet sein.

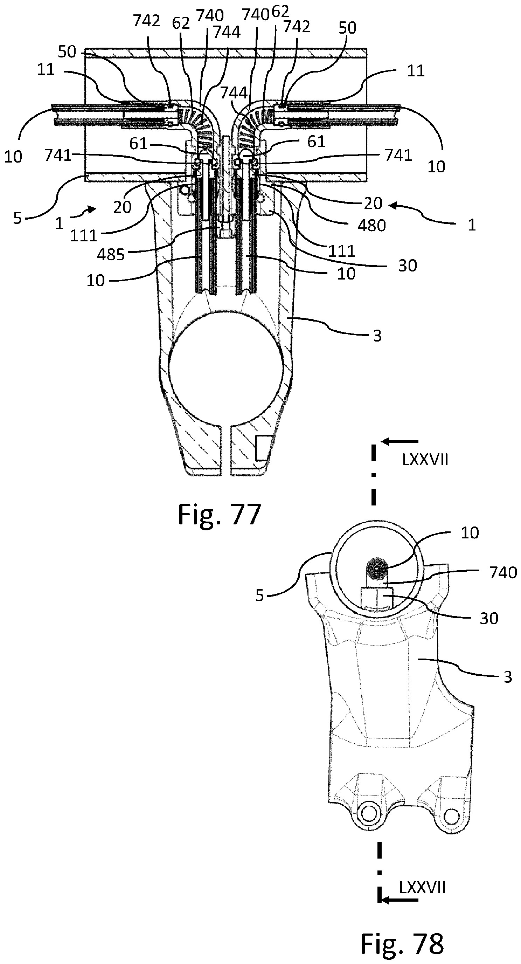

Die Figuren 77 bis 78 zeigen eine weitere Ausführungsform der Erfindung, die im Wesentlichen den anderen Ausführungsformen der Erfindung entspricht. Gleiche Bezugszeichen bezeichnen gleiche oder sich entsprechende Bauteile bzw. Merkmale. Auf die Beschreibung der anderen Ausführungsbeispiele der Erfindung wird verwiesen. Im Folgenden wird der Schwerpunkt auf die Unterschiede zu den anderen Ausführungsbeispielen der Erfindung gelegt.

Bei der Ausführung der Figuren 77 bis 78 sind die beiden Druckraumgehäuse 740 im Wesentlichen wie das Druckraumgehäuse 440 der Fig. 23 aufgebaut, ist aber im Gegensatz dazu um 90 Grad gebogen. In dem gebogenen Abschnitt ist jeweils eine Ventilschließfeder 62 der Ventileinrichtung 60 angeordnet. Diese Ausführung hat den Vorteil, dass sie extrem kurzbauend ist.

Das Gehäuse 30 weist einen Flansch 480 auf und ist mit einer Spannschraube 485 an dem Lenkerrohr 5 derart angebracht, dass die Hydraulikleitungen 10 in den Lenkervorbau 3 geführt werden.

Die Hydraulikleitungen 10, die in der Lenkervorbau 3 abgehen, sind mit Presshülsen 111 befestigt. Alternativ können Leitungsstutzen 20 können für diese Hydraulikleitungen 10 entsprechend den anderen Ausführungen vorgesehen bzw. ausgebildet werden.

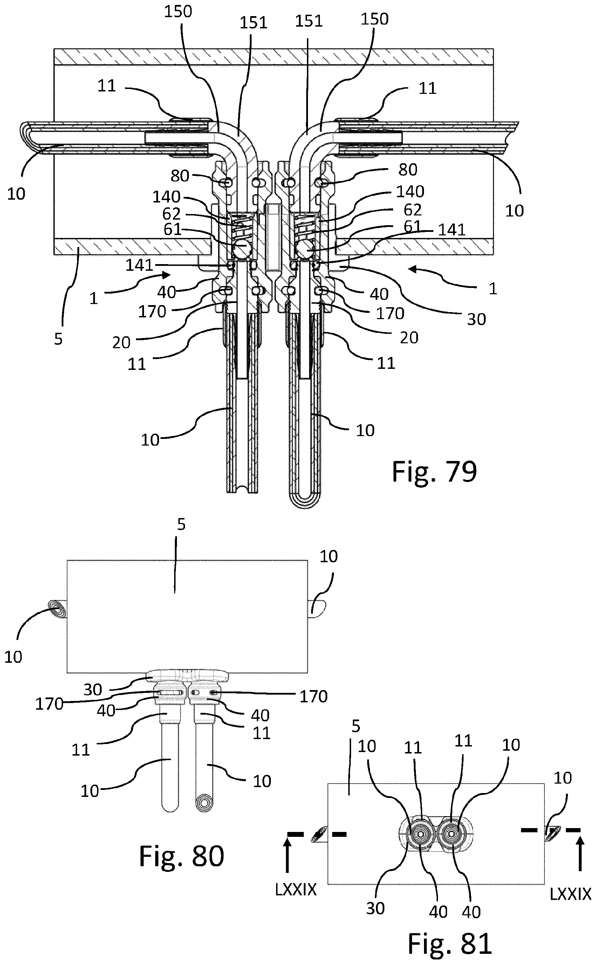

Die Figuren 79 bis 81 zeigen eine weitere Ausführungsform der Erfindung, die im Wesentlichen den anderen Ausführungsformen der Erfindung entspricht. Gleiche Bezugszeichen bezeichnen gleiche oder sich entsprechende Bauteile bzw. Merkmale. Auf die Beschreibung der anderen Ausführungsbeispiele der Erfindung wird verwiesen. Im Folgenden wird der Schwerpunkt auf die Unterschiede zu den anderen Ausführungsbeispielen der Erfindung gelegt.

Die Ausführung der Figuren 79 bis 81 entspricht im Wesentlichen der Ausführung der Figuren 66 bis 68. Im Unterschied dazu ist das Gehäuse 30 kleiner ausgeführt, so dass die Druckraumgehäuse 40 sich bis außerhalb des Gehäuses 30 erstrecken, d.h. sowohl außerhalb auch innerhalb des Lenkerohrs 5. Die Leitungsstutzen 20 sind jeweils außerhalb des Lenkerrohrs 5 mit Arretierungseinrichtungen 170 in dem Druckraumgehäuse 40 gesichert. Denkbar wäre auch die Verwendung der Arretierungseinrichtungen 70 entsprechend der Figuren 4 bis 8, wobei dann vorzugsweise Ausnehmen an dem Druckraumgehäuse 40 zur Aufnahme der Fortsätze 77, 78 und des Verbindungsabschnitts 79 vorgesehen sein sollten.

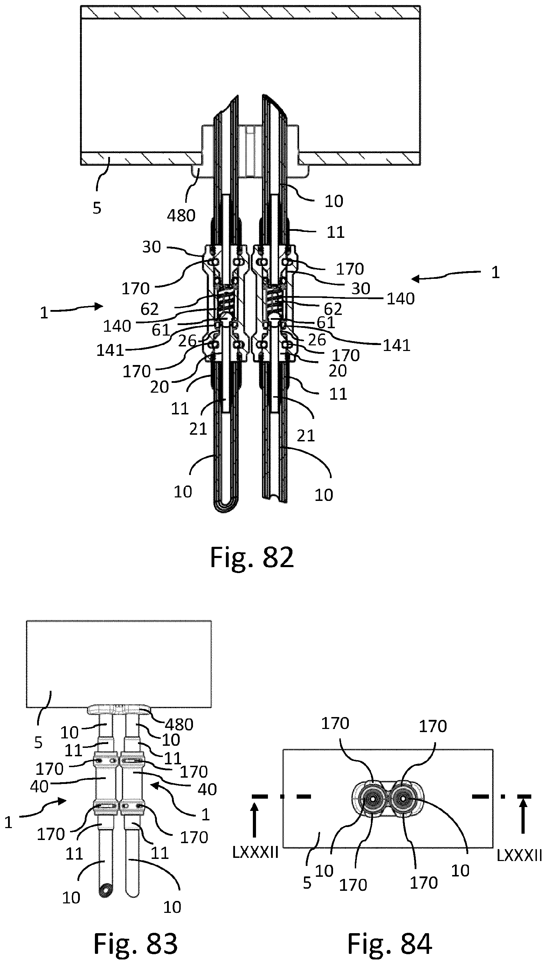

Die Figuren 82 bis 84 zeigen eine weitere Ausführungsform der Erfindung, die im Wesentlichen den anderen Ausführungsformen der Erfindung entspricht. Gleiche Bezugszeichen bezeichnen gleiche oder sich entsprechende Bauteile bzw. Merkmale. Auf die Beschreibung der anderen Ausführungsbeispiele der Erfindung wird verwiesen. Im Folgenden wird der Schwerpunkt auf die Unterschiede zu den anderen Ausführungsbeispielen der Erfindung gelegt.

Die Ausführung der Figuren 82 bis 84 umfasst zwei Hydraulikleitungskupplungen 1, die entsprechend der Ausführung von Fig. 25 ausgebildet sind. Die Leitungen 10 werden über einen gemeinsamen Flansch 485 in ein Lenkerrohr 5 eingeführt. Die beiden Hydraulikleitungskupplungen 1 der beiden Ventilraumgehäuse 140 können beispielsweise wie in den Figuren 127 bis 130 gezeigt ausgebildet sein.

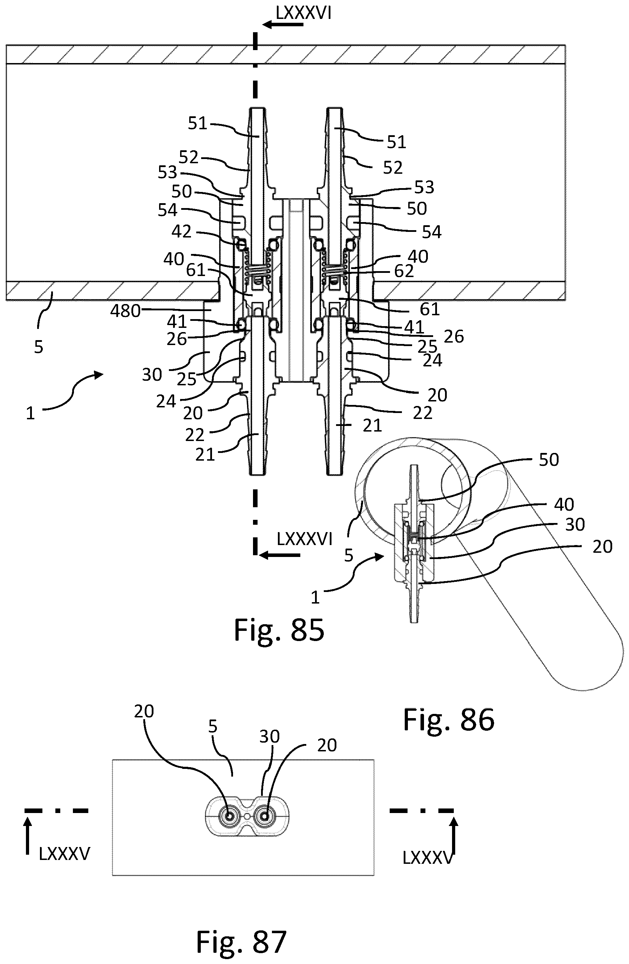

Die Figuren 85 bis 87 zeigen eine weitere Ausführungsform der Erfindung, die im Wesentlichen den anderen Ausführungsformen der Erfindung entspricht. Gleiche Bezugszeichen bezeichnen gleiche oder sich entsprechende Bauteile bzw. Merkmale. Auf die Beschreibung der anderen Ausführungsbeispiele der Erfindung wird verwiesen. Im Folgenden wird der Schwerpunkt auf die Unterschiede zu den anderen Ausführungsbeispielen der Erfindung gelegt.

Die Ausführung der Figuren 85 bis 87 umfasst zwei Hydraulikleitungskupplungen 1, die entsprechend der Ausführung von Fig. 1 ausgebildet sind, aber in einem gemeinsamen Gehäuse 30 angeordnet sind. Das Gehäuse 30 umfasst einen Flansch 480, mit dem es sich am Lenkerrohr abstützt. Die Hydraulikleitungen 10 sind in den Figuren 85 bis 87 nicht dargestellt und können entsprechend der Ausführung von Fig. 1 an den Leitungsstutzen 20 bzw. 50 angebracht werden.

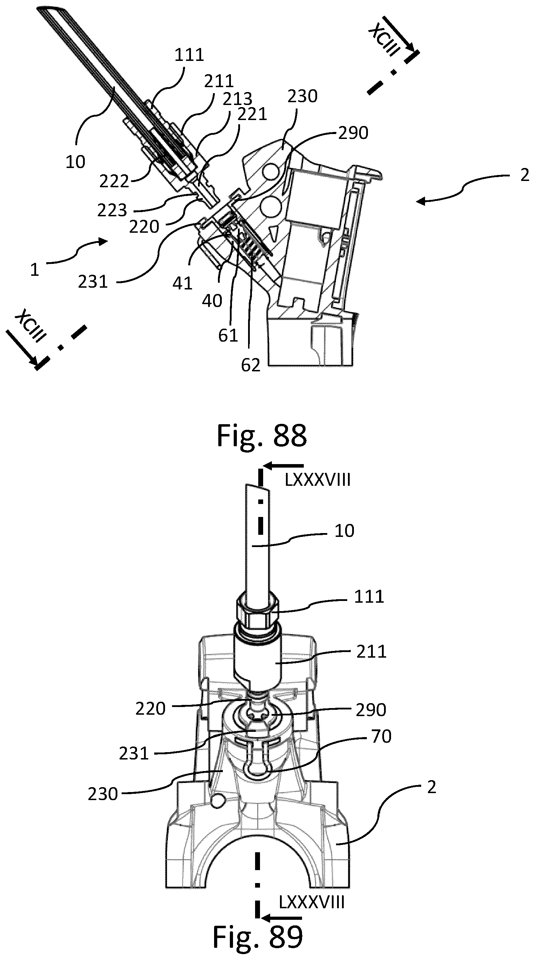

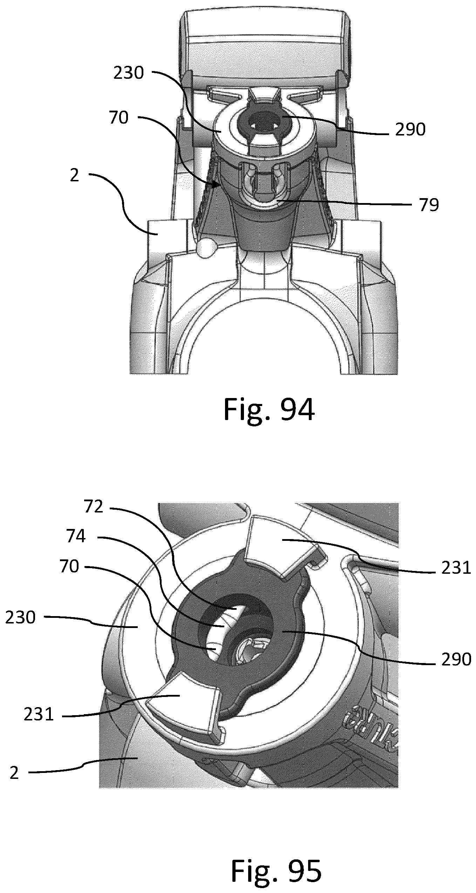

Die Figuren 88 bis 95 zeigen eine weitere Ausführungsform der Erfindung, die im Wesentlichen den anderen Ausführungsformen der Erfindung entspricht. Gleiche Bezugszeichen bezeichnen gleiche oder sich entsprechende Bauteile bzw. Merkmale. Auf die Beschreibung der anderen Ausführungsbeispiele der Erfindung wird verwiesen. Im Folgenden wird der Schwerpunkt auf die Unterschiede zu den anderen Ausführungsbeispielen der Erfindung gelegt.

Die Ausführung der Figuren 88 bis 95 entspricht im Wesentlichen der Ausführung der Figuren 36 bis 37.

Die Figuren 90 bis 92 zeigen eine mögliche Gestaltung der Verschlusseinrichtung 290. Die Verschlusseinrichtung 290 umfasst einen zylindrischen Bereich, um den die Verschlusseinrichtung drehbar in der Gebervorrichtung 2 angeordnet ist. In dem zylindrischen Bereich sind zwei Durchgänge 293 vorgesehen, wobei die Arretiereinrichtung 70 beim Einsetzen in die verriegelte Verschlusseinrichtung 290 mit jeweils einem Bein 71, 72 in jeweils einen Durchgang eingesetzt wird, derart, dass der dazwischen liegende Steg zwischen den beiden Beinen 71, 72 der Arretiereinrichtung 70 angeordnet ist. Der Ventileinrichtung 60 zugewandt ist ein Anschlag 294 vorgesehen, mit der die Ventileinrichtung 60 bzw. das Druckraumgehäuse 40 in der Gebereinrichtung 2 gesichert werden kann. Gegenüberliegend zu dem Anschlag 294 weist die Verschlusseinrichtung 290 einen Flansch 292 auf, der zwei gegenüberliegende Fortsatze 291 aufweist. Indem der Fortsatz bzw. die beiden Fortsätze 291 unter entsprechende Klemmeinrichtung 231 gedreht wird, wird die Ventileinrichtung 60 und ggf. das Druckraumgehäuse 40 in der Gebervorrichtung 2 gesichert.

Der Leitungsstutzen 320 kann entsprechend den Figuren 120 bis 122 ausgebildet sein, wobei der Leitungsstutzen 320 an seiner Spitze Aussparungen 328 zwischen Stegen 327 aufweisen kann, um eine sichere Hydraulikverbindung zwischen den beiden Leitungsstutzen der Hydraulikleitungskupplung zu gewährleisten.

Die Figuren 96 bis 99 zeigen eine weitere Ausführungsform der Erfindung, die im Wesentlichen den anderen Ausführungsformen der Erfindung entspricht. Gleiche Bezugszeichen bezeichnen gleiche oder sich entsprechende Bauteile bzw. Merkmale. Auf die Beschreibung der anderen Ausführungsbeispiele der Erfindung wird verwiesen. Im Folgenden wird der Schwerpunkt auf die Unterschiede zu den anderen Ausführungsbeispielen der Erfindung gelegt.

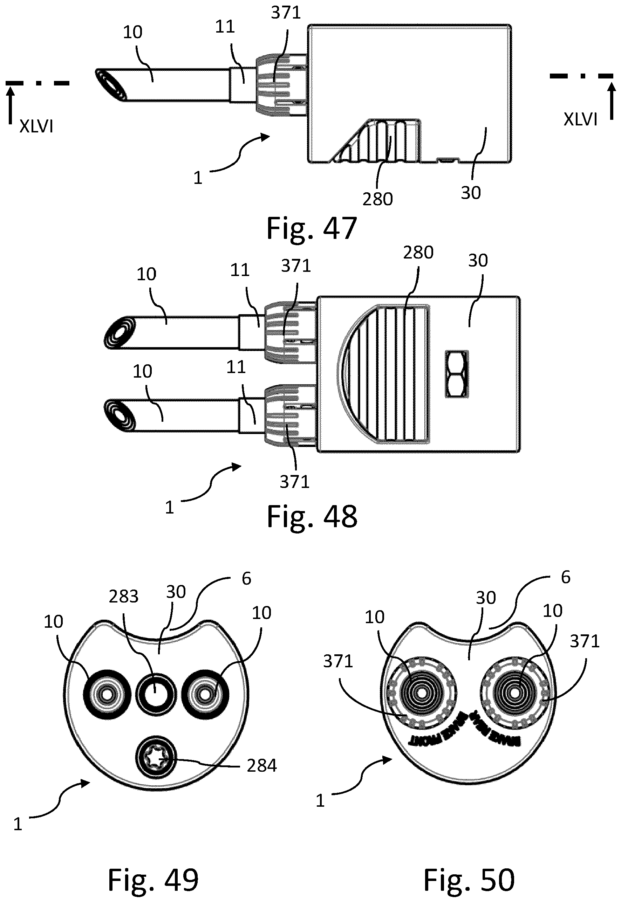

Die Ausführung der Figuren 96 bis 99 entspricht im Wesentlichen der Ausführung der Figuren 47 bis 50.

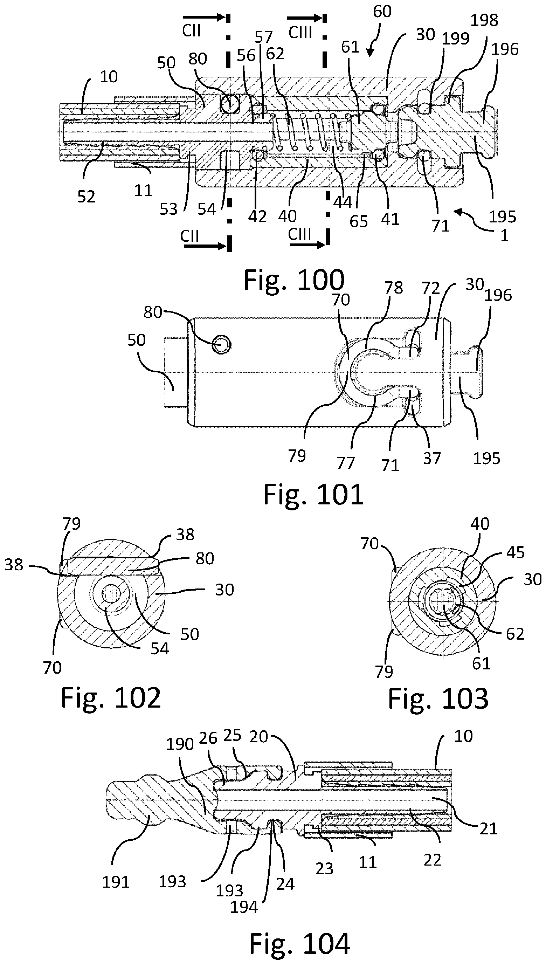

Die Figuren 100 bis 104 zeigen eine weitere Ausführungsform der Erfindung, die im Wesentlichen den anderen Ausführungsformen der Erfindung entspricht. Gleiche Bezugszeichen bezeichnen gleiche oder sich entsprechende Bauteile bzw. Merkmale. Auf die Beschreibung der anderen Ausführungsbeispiele der Erfindung wird verwiesen. Im Folgenden wird der Schwerpunkt auf die Unterschiede zu den anderen Ausführungsbeispielen der Erfindung gelegt.

Die Ausführung der Figuren 100 bis 104 entspricht im Wesentlichen der Ausführung der Figuren 1 bis 8, wobei nur eine Verriegelungseinrichtung 80 vorgesehen ist.

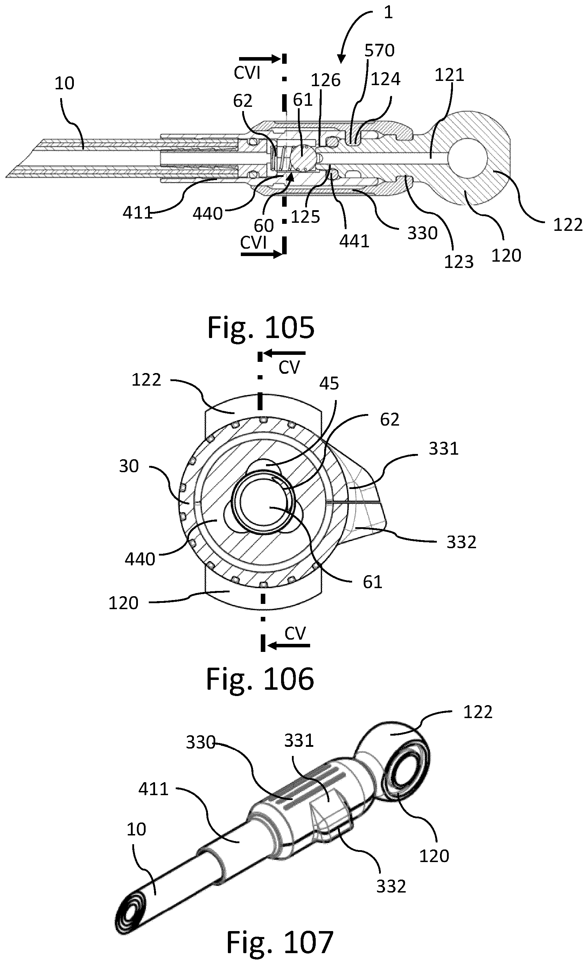

Die Figuren 105 bis 107 zeigen eine weitere Ausführungsform der Erfindung, die im Wesentlichen den anderen Ausführungsformen der Erfindung entspricht. Gleiche Bezugszeichen bezeichnen gleiche oder sich entsprechende Bauteile bzw. Merkmale. Auf die Beschreibung der anderen Ausführungsbeispiele der Erfindung wird verwiesen. Im Folgenden wird der Schwerpunkt auf die Unterschiede zu den anderen Ausführungsbeispielen der Erfindung gelegt.

Die Ausführung der Figuren 105 bis 107 entspricht im Wesentlichen der Ausführung der Figuren 23 bis 24, wobei auch ein Gehäuse 330 dargestellt wird. Das Gehäuse 330 weist zwei Verschlussabschnitte 331, 332 auf, an denen es miteinander verbunden werden kann, beispielsweise über eine Schnappverbindung und/oder eine selbstrastende unlösbare Verbindung.

Die beiden Hydraulikleitungskupplungen 1 der beiden Ventilraumgehäuse 440 können beispielsweise wie in den Fig. 23 gezeigt ausgebildet sein. Das Gehäuse 330 kann auf seiner Innenseite einen Vorsprung 570 aufweisen, mit dem das Gehäuse 330 in eine entsprechenden Ausnehmung 124 eingreift, die an der Anschlusseinrichtung 120 vorgesehen ist.

Die Figuren 108 bis 111 zeigen eine weitere Ausführungsform der Erfindung, die im Wesentlichen den anderen Ausführungsformen der Erfindung entspricht. Gleiche Bezugszeichen bezeichnen gleiche oder sich entsprechende Bauteile bzw. Merkmale. Auf die Beschreibung der anderen Ausführungsbeispiele der Erfindung wird verwiesen. Im Folgenden wird der Schwerpunkt auf die Unterschiede zu den anderen Ausführungsbeispielen der Erfindung gelegt.

Die Ausführung der Figuren 108 bis 111 entspricht im Wesentlichen der Ausführung der Figuren 66 bis 68.

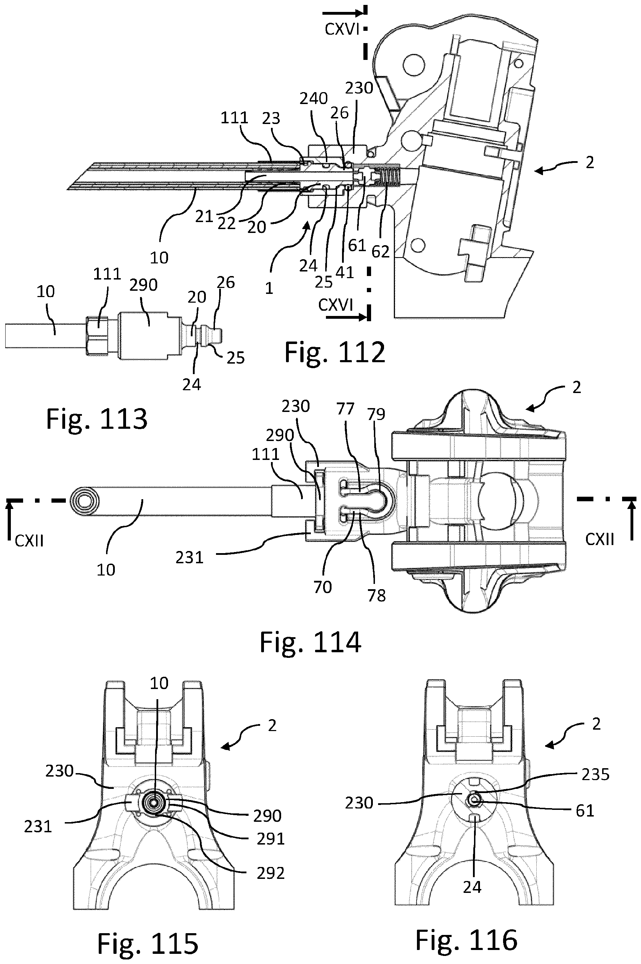

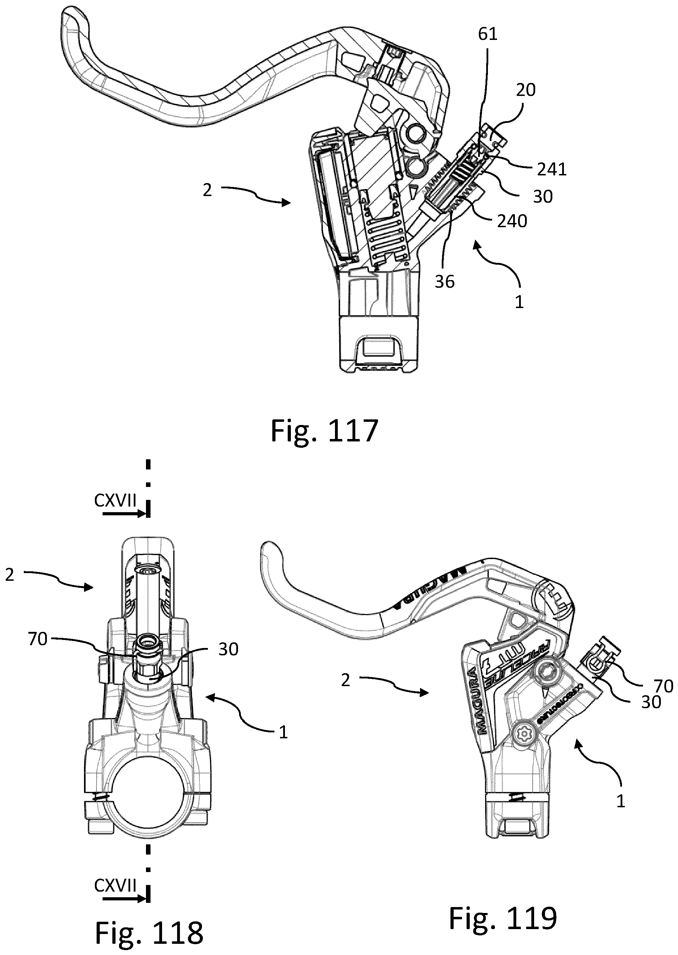

Die Figuren 112 bis 119 zeigen eine weitere Ausführungsform der Erfindung, die im Wesentlichen den anderen Ausführungsformen der Erfindung entspricht. Gleiche Bezugszeichen bezeichnen gleiche oder sich entsprechende Bauteile bzw. Merkmale. Auf die Beschreibung der anderen Ausführungsbeispiele der Erfindung wird verwiesen. Im Folgenden wird der Schwerpunkt auf die Unterschiede zu den anderen Ausführungsbeispielen der Erfindung gelegt.

Die Ausführung der Figuren 112 bis 119 entspricht im Wesentlichen der Ausführung der Figuren 36 bis 37. Im Gegensatz zu der dort gezeigten Ausführung, ist das Druckraumgehäuse nicht als separates Bauteil vorgesehen, sondern ist direkt in die Gebervorrichtung 2 integriert. Somit kann die Verschlusseinrichtung 290 die Ventileinrichtung 60 in der Gebereinrichtung 2 sichern.

Die Figuren 120 bis 122 zeigen eine mögliche Gestaltung eines Leitungsstutzens 320, der an seiner Spitze Aussparungen 328 zwischen Stegen 327 aufweist, um eine sichere Hydraulikverbindung zu gewährleisten.

Die Figuren 123 bis 126 zeigen eine mögliche Gestaltung des Druckraumgehäuses 40. Das Druckraumgehäuse 40 weist auf seiner Innenseite Überströmkanäle auf, um eine sichere Hydraulikverbindung zu gewährleisten. Auf seiner Außenseite sind Kanäle 46, 47 vorgesehen. Diese dienen dazu, mit einer Druckprüfung die Dichtigkeit bzw. korrekte Positionierung der Dichtungen 41 bzw. 42 überprüfen zu können.

Die Figuren 127 bis 130 zeigen eine mögliche Gestaltung des Ventilraumgehäuses 140. Das Ventilraumgehäuse 140 weist an seiner Außenseite Stege 147 und Durchgänge 148, 149 auf, um eine sichere Hydraulikverbindung zu gewährleisten.

Die Figuren 131 bis 133 zeigen eine mögliche Gestaltung des Ventilraumgehäuses 240. Das Ventilraumgehäuse 240 weist an seiner Innenseite Kanäle 245 auf, um eine sichere Hydraulikverbindung zu gewährleisten. Alternativ oder zusätzlich weist das Ventilraumgehäuse 240 an seiner Außenseite Stege 247 und Durchgänge 248 auf, um eine sichere Hydraulikverbindung zu gewährleisten.

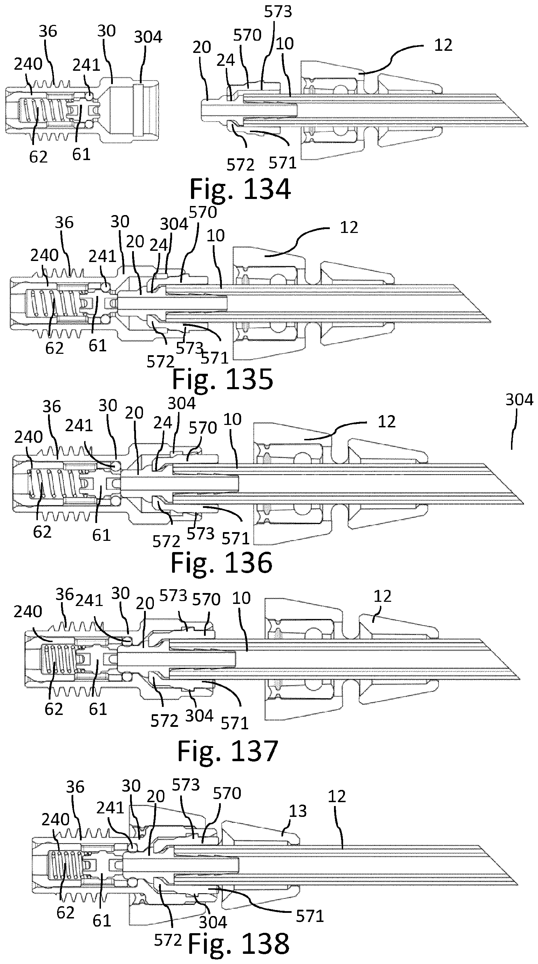

Die Figuren 134 bis 138 zeigen die Verfahrensschritte bei dem Kuppeln der Hydraulikleitung 10 an ein Gehäuse 30 an Beispiel einer Ausführung, die im Wesentlichen der Ausführung der Figuren 15 bis 17 entspricht, wobei zusätzlich eine Presshülse 12 vorgesehen ist und eine Schutzkappe 13 gezeigt wird.

Bei der in den Figuren 134 bis 138 gezeigten Ausführung wird die Arretiereinrichtung 570 derart in das Gehäuse 30 gepresst, dass der Leitungsstutzen 20 in dem Gehäuse 30 gesichert ist. Dazu weist die Arretiereinrichtung 570 eine Presshülse 571 auf, die mit einer Eingreifeinrichtung 572 in eine an dem Leitungsstutzen 20 vorgesehene Aufnahme 24 eingreift. Die Presshülse 571 weist ferner eine Einrasteinrichtung 573 auf, die nach dem Einpressen in eine entsprechende in dem Gehäuse 30 vorgesehene Aufnahme 304 einrastet und die Presshülse 570 über einen Formschluss in dem Gehäuse 30 sichert. Der Leitungsstutzen 20 ist widerrum durch den Formschluss zwischen der Eingreifeinrichtung 572 und der Aufnahme 24 in dem Leitungsstutzen 20 fixiert.

Der Ablauf der Anordnung der Hydraulikleitung 10 mit dem Leitungsstutzen 20 und der Presshülse 571 in dem Gehäuse 30 verdeutlicht, dass die Ventileinrichtung 60 sehr lange geschlossen ist, wie in Fig. 135 gezeigt, und nur vor dem endgültigen Verpressen geöffnet wird, wie in Fig. 136 gezeigt. Unmittelbar danach wird die Verbindung nach außen durch das Eingreifen des Leitungsstutzens 20 mit dem Dichtungsbereich 26 in die Dichtung 241 wieder verschlossen, so dass nur sehr wenig Luft eindringen bzw. sehr wenig Hydraulikfluid entweichen kann.

Selbstverständlich ist die Erfindung nicht auf die dargestellten Ausführungsformen beschränkt. Die vorstehende Beschreibung ist daher nicht als beschränkend, sondern als erläuternd anzusehen. Die nachfolgenden Ansprüche sind so zu verstehen, dass ein genanntes Merkmal in zumindest einer Ausführungsform der Erfindung vorhanden ist. Dies schließt die Anwesenheit weiterer Merkmale nicht aus. Sofern die Ansprüche und die vorstehende Beschreibung "erste" und "zweite" Ausführungsformen definieren, so dient diese Bezeichnung der Unterscheidung zweier gleichartiger Ausführungsformen, ohne eine Rangfolge festzulegen.

## Patentansprüche

1. Hydraulikleitungskupplung (1), insbesondere für eine hydraulische Bremse oder Kupplung lenkergeführter Fahrzeuge, die einen Leitungsstutzen (20) mit einem Fortsatz (22) zum Anschluss einer Hydraulikleitung (10) und ein Gehäuse (30) aufweist, in dem der Leitungsstutzen (20) anordbar ist, der einen mit der Hydraulikleitung verbundenen Durchgang (21) umfasst,
**dadurch gekennzeichnet, dass** in dem Gehäuse (30) ein Druckraumgehäuse (40) derart angeordnet ist, dass ein in dem Druckraumgehäuse (40) herrschender Druck durch das Gehäuse (30) aufgenommen wird, wobei der Druckraum (44) des Druckraumgehäuses (40) mit dem Durchgang (21) des Leitungsstutzens (20) verbunden ist.

2. Hydraulikleitungskupplung (1) nach Anspruch 1, wobei das Gehäuse (30) eine Kupplungsöffnung (31) aufweist, in die der Leitungsstutzen (20) zum Kuppeln der Hydaulikleitung (10) an das Gehäuse (30) anordbar ist,
wobei in dem Gehäuse (30) eine Ventileinrichtung (60) angeordnet ist, die derart ausgebildet und
angeordnet ist, dass die Ventileinrichtung (60) die Kupplungsöffnung (31) für den Leitungsstutzen (20) verschließt, wenn der Leitungsstutzen (20) nicht in der Kupplungsöffnung (31) angeordnet ist.

3. Hydraulikleitungskupplung (1) nach Anspruch 2, wobei die Hydraulikleitungskupplung (1) eine Dichtung (41) aufweist, mit welcher Dichtung (41) die Ventileinrichtung (60) die Kupplungsöffnung (31) für den Leitungsstutzen (20) verschließt, wenn der Leitungsstutzen (20) nicht in der Kupplungsöffnung (31) angeordnet ist, und mit welcher Dichtung (41) der Leitungsstutzen (20) den Durchgang (21) gegenüber der Umgebung abdichtet, wenn der Leitungsstutzen (20) in der Kupplungsöffnung (31) angeordnet ist.

4. Hydraulikleitungskupplung (1) nach Anspruch 2 oder 3, wobei die Ventileinrichtung (60) ein ein Ventilschließglied (61) umfasst, wobei das Ventilschließglied (61) derart angeordnet und ausgebildet ist, dass das Ventilschließglied (61) das Gehäuse (30) mit dem Durchgang (21) des Leitungsstutzens (20) verbindet.

5. Hydraulikleitungskupplung (1) nach einem der vorhergehenden Ansprüche, wobei die Hydraulikleitungskupplung (1) eine Arretiereinrichtung (79, 170) aufweist, die den Leitungsstutzen (20) in dem Gehäuse (30) sichert.

6. Hydraulikleitungskupplung (1), nach Anspruch 5, wobei die Arretiereinrichtung (570) eine Presshülse (571) aufweist.

7. Hydraulikleitungskupplung (1), nach Anspruch 5 oder 6, wobei die Arretiereinrichtung (370) eine Drehkappe (371) aufweist.

8. Hydraulikleitungskupplung (1) nach einem der Ansprüche 5 bis 7, wobei die Arretiereinrichtung (70, 170) mit
einem Formschluss gegenüber der Leitungsstutzen (20) und mit einem Formschluss gegenüber dem Gehäuse (30) gesichert ist, derart, dass über die Arretiereinrichtung (70, 170) ein mittelbarer Formschluss zwischen dem Leitungsstutzen (20) und dem Gehäuse (30) geschaffen wird.

9. Hydraulikleitungskupplung (1) nach einem der Ansprüche 2 bis 8, wobei die Ventileinrichtung (60) in dem Druckraumgehäuse (40) angeordnet ist.

10. Hydraulikleitungskupplung (1), nach einem der Ansprüche 2 bis 9, wobei in dem Gehäuse (30) ein Ventilraumgehäuse (140) angeordnet ist, wobei die Ventileinrichtung (60) in dem Ventilraumgehäuse (140) angeordnet ist.

11. Hydraulikleitungskupplung (1) nach Anspruch 10, wobei das Druckraumgehäuse (40) als das Ventilraumgehäuse (140) ausgebildet ist.

12. Hydraulikleitungskupplung (1) nach einem der Ansprüche 3 bis 11, wobei die Dichtung (41) derart angeordnet und ausgebildet ist, dass die Dichtung (41) in radialer Richtung zwischen dem Druckraumgehäuse (40) und den in die Kupplungsöffnung eingesetzten Leitungsstutzen (20) abdichtet.

13. Hydraulikleitungskupplung (1) nach einem der Ansprüche 3 bis 12, wobei die Dichtung (141) derart angeordnet und ausgebildet ist, dass die Dichtung (141) in axialer Richtung durch eine Stirnseite (43, 143) des Druckraumgehäuses (40) mit Kraft beaufschlagt wird.

14. Hydraulikleitungskupplung (1), nach einem der vorhergehenden Ansprüche, wobei die Hydraulikleitungskupplung (1) einen weiteren Leitungsstutzen (50) für den Anschluss einer weiteren Hydraulikleitung (10) aufweist.

15. Hydraulikleitungskupplung (1), nach einem der vorhergehenden Ansprüche, wobei das Gehäuse (30) einen Anschlussbereich zum Anschluss an eine Hydraulikkomponente aufweist.

## Claims

1. Hydraulic line coupling (1), in particular for a hydraulic brake or coupling of handlebar-operated vehicles, which has a line connection piece (20) with an extension (22) for connecting a hydraulic line (10) and a housing (30), in which the line connection piece (20) can be arranged which comprises a passage (21) connected to the hydraulic line,
**characterized in that** a pressure chamber housing (40) is arranged in the housing (30) in such a way that the housing (30) receives a pressure prevailing in the pressure chamber housing (40), the pressure chamber (44) of the pressure chamber housing (40) being connected to the passage (21) of the line connection piece (20).

2. Hydraulic line coupling (1) according to claim 1, wherein the housing (30) has a coupling opening (31) into which the line connection piece (20) can be arranged for coupling the hydraulic line (10) to the housing (30),
wherein the housing (30) accommodates a valve device (60), which is designed and arranged in such a way that the valve device (60) closes the coupling opening (31) for the line connection piece (20) when the line connection piece (20) is not arranged in the coupling opening (1).

3. Hydraulic line coupling (1) according to claim 2, wherein the hydraulic line coupling (1) has a seal (41), with which seal (41) the valve device (60) closes the coupling opening (31) for the line connection piece (20) when the line connection piece (20) is not arranged in the coupling opening (31), and with which seal (41) the line connection piece (20) seals the passage (21) from the environment when the line connection piece (20) is arranged in the coupling opening (31).

4. Hydraulic line coupling (1) according to claim 2 or 3, wherein the valve device (60) has a valve closing member (61), the valve closing member (61) being arranged and designed in such a way that the valve closing member (61) connects the housing (30) to the passage (21) of the line connection piece (20).

5. Hydraulic line coupling (1) according to any of the preceding claims, wherein the hydraulic line coupling (1) includes a locking device (79, 170), which secures the line connection piece (20) in the housing (30).

6. Hydraulic line coupling (1) according to claim 5, wherein the locking device (570) includes a press sleeve (571).

7. Hydraulic line coupling (1) according to claim 5 or 6, wherein the locking device (370) includes a twist cap (371).

8. Hydraulic line coupling (1) according to any of claims 5 to 7,
wherein the locking device (70, 170) is secured by means of an interlocking connection with respect to the line connection piece (20) and by means of an interlocking connection with respect to the housing (30) in such a way that an indirect interlocking connection is created between the line connection piece (20) and the housing (30) via the locking device (70, 170).

9. Hydraulic line coupling (1) according to any of claims 2 to 8, wherein the valve device (60) is arranged in the pressure chamber housing (40).

10. Hydraulic line coupling (1) according to any of claims 2 to 9, wherein a valve chamber housing (140) is arranged in the housing (30), wherein the valve device (60) is arranged in the valve chamber housing (140).

11. Hydraulic line coupling (1) according to claim 10, wherein the pressure chamber housing (40) is designed as the valve chamber housing (140).

12. Hydraulic line coupling (1) according to any of claims 3 to 11, wherein the seal (41) is arranged and designed in such a way that the seal (41) seals in the radial direction between the pressure chamber housing (40) and the line connection pieces (20) inserted into the coupling opening.

13. Hydraulic line coupling (1) according to any of claims 3 to 12, wherein the seal (141) is arranged and designed in such a way that a force is applied to the seal (141) in the axial direction by a front side (43, 143) of the pressure chamber housing (40).

14. Hydraulic line coupling (1) according to any of the preceding claims, wherein the hydraulic line coupling (1) has a further line connection piece (50) for connecting a further hydraulic line (10).

15. Hydraulic line coupling (1) according to any of the preceding claims, wherein the housing (30) has a connecting area for connection to a hydraulic component.

## Revendications

1. Raccord d'accouplement de conduite hydraulique (1), en particulier pour un frein ou un embrayage hydraulique de véhicules guidés par le guidon, comprenant une tubulure de conduite (20), munie d'un prolongement (22) pour le raccordement d'une conduite hydraulique (10), et un boîtier (30) dans lequel peut être agencée la tubulure de conduite (20) qui présente un passage (21) relié à la conduite hydraulique (10),
**caractérisé en ce qu'**un boîtier de chambre de pression (40) est disposé dans ledit boîtier (30) de telle sorte qu'une pression régnant dans le boîtier de chambre de pression (40) est absorbée par le boîtier (30), la chambre de pression (44) du boîtier de chambre de pression (40) étant reliée au passage (21) de la tubulure de conduite (20).

2. Raccord d'accouplement de conduite hydraulique (1) selon la revendication 1,
dans lequel le boîtier (30) présente une ouverture d'accouplement (31) dans laquelle peut être agencée la tubulure de conduite (20) pour accoupler la conduite hydraulique (10) au boîtier (30),
un dispositif de vanne (60) est disposé dans le boîtier (30), lequel est conçu et disposé de telle sorte que le dispositif de vanne (60) obture l'ouverture d'accouplement (31) pour la tubulure de conduite (20) lorsque la tubulure de conduite (20) n'est pas disposée dans l'ouverture d'accouplement (31).

3. Raccord d'accouplement de conduite hydraulique (1) selon la revendication 2,
dans lequel le raccord d'accouplement de conduite hydraulique (1) présente un joint d'étanchéité (41), joint d'étanchéité (41) par lequel le dispositif de vanne (60) obture l'ouverture d'accouplement (31) pour la tubulure de conduite (20) lorsque la tubulure de conduite (20) n'est pas disposée dans l'ouverture d'accouplement (31), et joint d'étanchéité (41) par lequel la tubulure de conduite (20) rend étanche le passage (21) par rapport à l'environnement lorsque la tubulure de conduite (20) est disposée dans l'ouverture d'accouplement (31).

4. Raccord d'accouplement de conduite hydraulique (1) selon la revendication 2 ou 3,
dans lequel le dispositif de vanne (60) comprend un organe d'obturation de vanne (61), l'organe d'obturation de vanne (61) étant disposé et conçu de telle sorte que l'organe d'obturation de vanne (61) relie le boîtier (30) au passage (21) de la tubulure de conduite (20).

5. Raccord d'accouplement de conduite hydraulique (1) selon l'une des revendications précédentes,
dans lequel le raccord d'accouplement de conduite hydraulique (1) comprend un dispositif d'arrêt (79, 170) qui bloque la tubulure de conduite (20) dans le boîtier (30).

6. Raccord d'accouplement de conduite hydraulique (1) selon la revendication 5,
dans lequel le dispositif d'arrêt (570) comprend un manchon de pressage (571).

7. Raccord d'accouplement de conduite hydraulique (1) selon la revendication 5 ou 6,
dans lequel le dispositif d'arrêt (370) comprend un capuchon rotatif (371).

8. Raccord d'accouplement de conduite hydraulique (1) selon l'une des revendications 5 à 7,
dans lequel le dispositif d'arrêt (70, 170) est bloqué par rapport à la tubulure de conduite (20) au moyen d'une liaison par complémentarité de forme et est bloqué par rapport au boîtier (30) au moyen d'une liaison par complémentarité de forme, de telle sorte que le dispositif d'arrêt (70, 170) permet d'établir une liaison indirecte par complémentarité de forme entre la tubulure de conduite (20) et le boîtier (30).

9. Raccord d'accouplement de conduite hydraulique (1) selon l'une des revendications 2 à 8,
dans lequel le dispositif de vanne (60) est disposé dans le boîtier de chambre de pression (40).

10. Raccord d'accouplement de conduite hydraulique (1) selon l'une des revendications 2 à 9,
dans lequel un boîtier de chambre de vanne (140) est disposé dans le boîtier (30), le dispositif de vanne (60) étant disposé dans le boîtier de chambre de vanne (140).

11. Raccord d'accouplement de conduite hydraulique (1) selon la revendication 10,
dans lequel le boîtier de chambre de pression (40) est réalisé à titre de boîtier de chambre de vanne (140).

12. Raccord d'accouplement de conduite hydraulique (1) selon l'une des revendications 3 à 11,
dans lequel le joint d'étanchéité (41) est disposé et conçu de telle sorte que le joint d'étanchéité (41) assure l'étanchéité dans la direction radiale entre le boîtier de chambre de pression (40) et la tubulure de conduite (20) insérée dans l'ouverture d'accouplement.

13. Raccord d'accouplement de conduite hydraulique (1) selon l'une des revendications 3 à 12,
dans lequel le joint d'étanchéité (141) est disposé et conçu de telle sorte que le joint d'étanchéité (141) est soumis à une force dans la direction axiale par une face frontale (43, 143) du boîtier de chambre de pression (40).

14. Raccord d'accouplement de conduite hydraulique (1) selon l'une des revendications précédentes,
dans lequel le raccord d'accouplement de conduite hydraulique (1) comprend une autre tubulure de conduite (50) pour le raccordement d'une autre conduite hydraulique (10).

15. Raccord d'accouplement de conduite hydraulique (1) selon l'une des revendications précédentes,
dans lequel le boîtier (30) présente une zone de raccordement pour le raccordement à un composant hydraulique.
